(19) Europäisches Patentamt
European Patent Office
Office européen des brevets

(11) **EP 4 338 599 B1**

(12) **EUROPEAN PATENT SPECIFICATION**

(45) Date of publication and mention
of the grant of the patent:
**29.10.2025 Bulletin 2025/44**

(21) Application number: **22816237.6**

(22) Date of filing: **03.06.2022**

(51) International Patent Classification (IPC):
*A23L 27/00* (2016.01)   *A23L 11/00* (2025.01)
*A23L 7/109* (2016.01)   *A23L 19/00* (2016.01)
*A23L 19/10* (2016.01)   *A23L 25/00* (2016.01)
*A23L 27/10* (2016.01)   *A23L 27/40* (2016.01)
*A23L 31/00* (2016.01)   *A23L 29/212* (2016.01)

(52) Cooperative Patent Classification (CPC):
**A23L 29/212; A23L 7/109; A23L 19/01;
A23L 19/09; A23L 19/10; A23L 25/30;
A23L 27/105; A23L 27/40; A23L 31/00;** A23L 11/05

(86) International application number:
**PCT/JP2022/022679**

(87) International publication number:
**WO 2022/255492 (08.12.2022 Gazette 2022/49)**

(54) **FOOD COMPOSITION COMPRISING STARCH-CONTAINING SOLID COMPOSITION IN SEASONING LIQUID, AND METHOD FOR PRODUCING SAME**

LEBENSMITTELZUSAMMENSETZUNG MIT STÄRKEHALTIGER FESTER ZUSAMMENSETZUNG IN EINER GEWÜRZFLÜSSIGKEIT UND VERFAHREN ZUR HERSTELLUNG DAVON

COMPOSITION ALIMENTAIRE COMPRENANT UNE COMPOSITION SOLIDE CONTENANT DE L'AMIDON DANS UN LIQUIDE D'ASSAISONNEMENT ET SON PROCÉDÉ DE PRODUCTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.06.2021 JP 2021094547**

(43) Date of publication of application:
**20.03.2024 Bulletin 2024/12**

(73) Proprietor: **Mizkan Holdings Co., Ltd.
Handa-shi, Aichi 475-8585 (JP)**

(72) Inventors:
• **ODA, Ryoichi**
  **Handa-shi, Aichi 475-8585 (JP)**
• **OGASAWARA, Yasushi**
  **Handa-shi, Aichi 475-8585 (JP)**
• **YASUI, Mizuki**
  **Handa-shi, Aichi 475-8585 (JP)**

(74) Representative: **Hasegawa, Kan
Patentanwaltskanzlei Hasegawa
Untere Hauptstraße 56
85354 Freising (DE)**

(56) References cited:
**WO-A1-2019/039478      WO-A1-2019/039478
WO-A1-2021/084803      WO-A1-2021/084803
JP-A- 2005 261 216      JP-A- 2016 026 482
JP-A- 2017 093 329      JP-A- 2020 171 278
US-A1- 2018 125 108**

• **KETTLITZ BEATE: "Furan and Methylfurans in Foods: An Update on Occurrence, Mitigation, and Risk Assessment", COMPREHENSIVE REVIEWS IN FOOD SCIENCE AND FOOD SAFETY, 15 January 2019 (2019-01-15), pages 738 - 752, XP093208101, Retrieved from the Internet <URL:https://ift.onlinelibrary.wiley.com/doi/10.1111/1541-4337.12433> [retrieved on 20240925], DOI: 10.1111/1541-4337.12433**

EP 4 338 599 B1

- "The Science Behind Udon Noodles", 27 March 2023 (2023-03-27), Retrieved from the Internet <URL:https://thejapanesefoodlab.com/udon-science/> [retrieved on 20250319]

**Description**

## TECHNICAL FIELD

The present invention relates to a food composition comprising a solid composition containing a starch derived from pulse and/or cereal in a seasoning solution, as well as to a production method thereof.

## BACKGROUND ART

Conventionally, many solid compositions such as noodles have been known to be made mainly from starch. Main ingredients of such conventional solid compositions were wheat-derived starch and rice-derived starch. In recent years, solid compositions have been developed that are mainly composed of starch derived from pulse and/or cereal. As an example of such technology, WO2020/166713 A discloses a method for producing a solid paste composition for hear cooking by processing raw materials containing pulse under high-temperature and highpressure conditions, which is hard to bind even after heat cooking for a long period of time.

JP 2017-093329 A describes a seasoning for dipping/soaking starch food such as noodles.

US 2018-0125108 A1 refers to food compositions comprising liquid seasonings and udon noodles.

JP 2016-026482 A describes the preparation of a food composition comprising a pasta in a pasta sauce.

JP 2005-261216 A describes a seasoning solution per se from which viscosity is increased by the thickener.

When such a starch-containing solid composition is heated in liquid such as seasoning solution, its extract can exhibit the effect of enhancing the natural flavor of the ingredients. Therefore, conventional solid compositions based on wheat-derived starch or rice-derived starch have been developed into food compositions such as soup noodles contained in seasoning solution. However, in the case of solid compositions that are mainly composed of starch derived from pulse and/or cereal, due to the problem of undesirable degrading odors peculiar to the raw materials (pulse and/or cereal), they have not been developed into food compositions using extracts heated in liquids such as seasoning solutions.

## SUMMARY OF INVENTION

## PROBLEM TO BE SOLVED BY THE INVENTION

The present invention was made in view of these problems. Accordingly, an objective of the present invention is to provide a food composition containing a solid composition containing starch derived from pulse and/or cereal in seasoning solution wherein preferable flavor ingredients of the raw materials (pulse and/or cereal) are also added to the seasoning solution while undesirable degrading odors peculiar to the raw materials (pulse and/or cereal) are suppressed, and the flavors of the solid composition and the seasoning solution are well-balanced.

MEANS TO SOLVE THE PROBLEM

Through intensive efforts in view of various plant starches and their processing conditions, the present inventors have conceived of producing a food composition containing a solid composition containing starch derived from pulse and/or cereal in seasoning solution with adjusting a sodium chloride content in the food composition and a specific viscosity of the seasoning solution as measured with a rapid visco-analyzer to withing their respective predetermined ranges, and have found that the resulting composition is such that preferable flavor ingredients of the raw materials (pulse and/or cereal) are also added to the seasoning solution while undesirable degrading odors peculiar to the raw materials (pulse and/or cereal) are suppressed, and the flavors of the solid composition and the seasoning solution are well-balanced. The present inventors have thereby completed the present invention.

## EFFECT OF THE INVENTION

The present invention provides a food composition containing a solid composition containing starch derived from pulse and/or cereal in seasoning solution wherein preferable flavor ingredients of the raw materials (pulse and/or cereal) are also added to the seasoning solution while undesirable degrading odors peculiar to the raw materials (pulse and/or cereal) are suppressed, and the flavors of the solid composition and the seasoning solution are well-balanced.

## BRIEF EXPLANATION OF FIGURES

[Figure 1] Figure 1 is a schematic diagram to illustrate two modes of the production method, namely, (a) simultaneous heating/mixing mode and (b) individual heating/mixing mode.

[Figure 2] Figure 2 is a schematic diagram to illustrate three modes of precursor seasonings for preparing the precursor seasonings, namely, (1-1) straight-type liquid precursor seasoning (precursor seasoning solution), (1-2) concentrated-type liquid precursor seasoning, and (2) solid precursor seasoning.

## DESCRIPTION OF EMBODIMENTS

The present invention will now be described based on specific embodiments. These embodiments should not be construed to limit the scope of the present invention. All references, including patent publications, unexamined patent publications, and non-patent publications cited in this specification, can be incorporated by reference in their entirety for all purposes.

The term "wet mass basis" (also referred to as "wet mass equivalent") herein means the ratio of the content of a target component in a sample calculated with the wet mass containing water of the sample as the denominator and the content mass of the target component in the sample as the numerator. The term "dry mass basis" (also referred to as "dry mass equivalent") herein means the ratio of the content of a target component in a sample calculated with the dry mass of the sample excluding water as the denominator and the content mass of the target component in the sample as the numerator. When a "mass %" is used herein for indicating ratios, the percentages for precursor compositions or solid compositions are described in terms of "dry mass basis" and the percentages for other compositions are described in terms of "wet mass basis," unless specified otherwise.

[I. Food Composition]

*Summary:

An embodiment of the present invention relates to a food composition comprising a solid composition containing a starch derived from pulse and/or cereal in a seasoning solution. This food composition is referred to as "the food composition of the present invention," and the solid composition and the seasoning solution constituting the food composition of the present invention are referred to as "the solid composition of the present invention" and "the seasoning solution of the present invention," respectively.

*Constitution of the food composition:

The food composition of the present invention is a food composition containing a solid composition containing starch derived from pulse and/or cereal in a seasoning solution constitution. Examples of such food compositions include, although are not limited to, soup noodles containing various noodles and pastas (solid compositions) dipped in various kinds of broths and soups (seasoning solutions). Specific examples of food compositions include, although are not limited to, compositions having constitutions in which solid compositions such as Chinese noodles, udon (Japanese wheat-flour noodles), inaniwa udon, kishimen, houtou, suiton, hiyamugi, somen (variations of udon), soba (Japanese buckwheat-flour noodles), soba gaki (Japanese buckwheat-flour paste), bee-hun (rice vermicelli), pho, reimen (Korean cold noodles), pasta, vermicelli, oatmeal, couscous, kiritanpo (variation of Japanese rice cake in an elongate shape), tteok, and gyoza skins dipped in various seasoning solutions.

The solid composition as a constituent for the food composition of the present invention is a solid composition containing starch derived from starch derived from pulse and/or cereal as the main ingredient. There are no restrictions to other constituents and properties, and it may contain any one or two other ingredients in addition to the starch derived from pulse and/or cereal. Details of the starch derived from pulse and/or cereal as the main ingredient of the solid composition and the pulse and/or cereal, as well as the optionally used other ingredients will be explained later. The term "solid" herein refers to a state of hardness and strength to the extent that it maintains a certain shape and volume, and encompasses solids with little elasticity or plasticity to semi-solids with some elasticity and plasticity.

The seasoning solution as a constituent for the food composition of the present invention is a liquid composition containing aqueous solvent such as water as the main ingredient. There are no restrictions to other constituents and properties, and it may preferably contain an edible-plant processed product, which will be explained later. It may also contain any one or two other ingredients. Details of the edible-plant processed product as a preferable ingredient of the seasoning solution and the edible plant as its origin, as well as the optionally used other ingredients will be explained later.

The "solid composition" and the "seasoning solution" constituting the food composition of the present invention can be separated using a 4-mesh sieve. Specifically, when the food composition is sieved with a sieve with a 4-mesh size (e.g., a sieve with an aperture of 4.75mm and a wire diameter (Wire Dia.) of 1.60mm, such as a sieve which corresponds to "No. 4" defined in "Alternative" of Nominal Dimensions, Permissible Variation for Wire Cloth of Standard Testing Sieves (U.S.A.) according to U.S.A. Standard Testing Sieves ASTM Specifications E 11-04), the 4-mesh-on fraction corresponds to the "solid composition" and the 4-mesh-pass fraction corresponds to the "seasoning solution." The term "mesh" as used herein refers to a unit of mesh density of wire mesh, sieve, filter, etc., and represents the number of meshes per inch. The term "mesh on" as used herein refers to remaining on a sieve of a specific size, and the term "mesh pass" as used herein refers to passing through a sieve of a specific size. Specifically, Specifically, the mesh-on wire thickness and aperture spacing are the values specified in "Alternative" of the Nominal Dimensions, Permissible Variation for Wire Cloth of Standard Testing Sieves (U.S.A.) Standard Series mentioned above.

The ratio between the solid composition and the seasoning solution in the food composition of the present invention is not restricted. However, according to an embodiment, the food composition of the present invention may exhibit the effect of inhibiting the outflow of undesirable ingredients from inside the solid composition, and when the mass ratio of the solid composition to the seasoning solution is equal to or higher than a certain value, it may exhibit such effects more prominently and therefore useful. Specifically, the mass ratio of the solid composition to the seasoning solution in the food composition of the present invention (the mass ratio defined by the formula [solid composition]/[seasoning solution], which will be explained below) may be, although is not limited to, within the range of 10 mass % or more but 800 mass % or less in terms of wet mass basis. More specifically, the lower limit for the ratio in terms of wet mass basis may preferably be 10 mass % or more, or 40 mass % or more, or 70 mass % or more. On the other hand, the upper limit for the ratio may be, although is not limited to, 800 mass % or less, or 700 mass % or less, or 600 mass % or less, or 500 mass % or less, or 400 mass % or less, or 300 mass % or less, or 250 mass % or less.

The food composition of the present invention contains at least the solid composition and the seasoning solution described above, but may also contain various ingredients made from vegetables, meat, fish, dairy products, and the like. Such ingredients are variously known to the art, and a person skilled in the art can select appropriate ingredients based on the specific food type of the food composition of the present invention.

*Starch derived from pulse and/or cereal:

The food composition of the present invention contains starch derived from pulse and/or cereal in the solid composition. Specifically, the food composition of the present invention contains, in the solid composition, at least either or both of starch derived from pulse and starch derived from cereal.

When pulse-derived starch is used for the solid composition of the present invention, the type of pulse as the origin for the starch is not limited, but it may be preferable to use mature pulse rather than immature pulse seeds (e.g., green peas, which are immature pea seeds, or edamame, which are immature soybean seeds). For the same reason, it may be preferable to use pulse which is in a state where the dry mass basis moisture content is a predetermined value or less as they mature. Specifically, the dry mass basis moisture content in the pulse as the origin for the starch may preferably be within the range of 0.01 mass % or more but less than 15 mass %. More specifically, the ratio may preferably be typically less than 15 mass %, particularly less than 13 mass %, furthermore but less than 11 mass %, or less than 10 mass %. On the other hand, the lower limit of the dry mass basis moisture content of the pulse may be, although not particularly limited to, typically 0.01 mass % or more.

When pulse-derived starch is used for the solid composition of the present invention, preferable examples of pulse species as the origin of the starch include, although not limited to, one or more selected from Pisum, Phaseolus, Cajanus, Vigna, Vicia, Cicer, Glycine, and Lens species. Specific examples of pulse species include, although not limited to: peas (in particular, yellow peas, white peas, and green peas, which are immature seeds), kidney beans, red kidney beans, white kidney beans, black beans, pinto beans, toramame (a variation of kidney beans: concord paul), lima beans, scarlet runner beans, pigeon peas, mung beans, cowpeas, azuki beans, broad beans (vicia faba), soybeans (especially edamame, which are immature seeds of soybeans harvested with their pods in their immature state and characterized by the green appearance of the beans), chickpeas, lentils, blue peas, scarlet runner beans, peanuts, lupin beans, glass peas, locust beans (carob), twisted cluster beans, African locust beans, coffee beans, cacao beans, and Mexican jumping beans. Other classifications of pulse not exemplified can be naturally understood by those skilled in the art who deal with various pulse or processed products thereof. Specifically, this can be clearly understood by referring to the food group classifications (p. 249, Table 1) in the Japan Standard Tables for Food Composition 2015 (7th revised edition), which are also widely used in everyday aspects of life in the general household. These pulse species may be used either any one singly or in any combination of two or more.

When pulse-derived starch is used for the solid composition of the present invention, it may be preferable to use pulse with a starch content of a certain value or higher. Specifically, the starch content of the pulse in terms of wet mass basis may preferably be within the range of 5.0 mass % or more but 70 mass % or less. More specifically, the lower limit may preferably be 5.0 mass % or more, or 10.0 mass % or more, or 15.0 mass % or more, or 20.0 mass % or more, or 25.0 mass % or more, or 30.0 mass % or more, or 35.0 mass % or more, or 40.0 mass % or more. On the other hand, the upper limit of the starch content in the pulse is not particularly limited, but may typically be 70.0 mass % or less, or 65.0 mass % or less, or 60.0 mass % or less.

The term "cereal" used herein refers to grains species but excluding rice, wheat and barley, which are main cereal species, and the cereal is selected from awa (foxtail millet), hie (Japanese millet), kibi (common millet), sorghum, rye, oat, hatomugi (job's tear), corn, amaranthus, and quinoa. It is particularly desirable to use one or more of oats, amaranthus and quinoa, and especially preferable to use oats, which has a high soluble dietary fiber content. Cereal may preferably be substantially gluten-free (specifically, with a gluten content of less than 10 ppm by mass), more preferably gluten-free.

When cereal-derived starch is used for the solid composition of the present invention, it may be preferable to use cereal with a starch content of a certain value or higher. Specifically, the starch content of the cereal in terms of wet mass basis may preferably be within the range of 5.0 mass % or more but 70 mass % or less. More specifically, the lower limit may preferably be 5.0 mass % or more, or 10.0 mass % or more, or 15.0 mass % or more, or 20.0 mass % or more, or 25.0 mass % or more, or 30.0 mass % or more. On the other hand, the upper limit of the starch content in the cereal is not particularly limited, but may typically be 70.0 mass % or less, or 65.0 mass % or less, or 60.0 mass % or less, or 55.0 mass % or less, or 50.0 mass % or less.

When cereal-derived starch is used for the solid composition of the present invention, it may be preferable to use dried cereal. Specifically, the cereal to be used may preferably has a dry mass basis moisture content reduced to a certain value or less. More specifically, the dry mass basis moisture content of the cereal to be used in the solid composition of the present invention may preferably be within the range of 0 mass % or more but less than 15 mass %. More specifically, the upper limit may preferably be less than 15 mass %, or less than 13 mass %, or less than 11 mass %, or less than 10 mass %. On the other hand, the lower limit for the dry mass basis moisture content of the cereal lower limit is not particularly limited, but may preferably be 0 mass % or more, or 0.01 mass % or more.

*Content of pulse and/or cereal:

When pulse is used as a raw material for starch, the content of pulse in the solid composition of the present invention is not particularly restricted, but may preferably be within the range of 1 mass % or more but 100 mass % or less in terms of wet mass basis. More specifically, the lower limit may preferably be 1 mass % or more, particularly 3 mass % or more, or 5 mass % or more, or 8 mass % or more, or 10 mass % or more, or 15 mass % or more, or 20 mass % or more, or 25 mass % or more, or 30 mass % or more, or 35 mass % or more, or 40 mass % or more, or 45 mass % or more, or 50 mass % or more, or 55 mass % or more, or 60 mass % or more, or 65 mass % or more, or 70 mass % or more, or 75 mass % or more, or 80 mass % or more, or 85 mass % or more, or 90 mass % or more, or 95 mass % or more. On the other hand, the upper limit is not particularly restricted, but may typically be 100 mass %, or 100 mass % or less.

When cereal is used as a raw material for starch, the content of cereal in the solid composition of the present invention is not particularly restricted, but may preferably be within the range of 1 mass % or more but 100 mass % or less in terms of wet mass basis. More specifically, the lower limit may preferably be 1 mass % or more, particularly 3 mass % or more, or 5 mass % or more, or 8 mass % or more, or 10 mass % or more, or 15 mass % or more, or 20 mass % or more, or 25 mass % or more, or 30 mass % or more, or 35 mass % or more, or 40 mass % or more, or 45 mass % or more, or 50 mass % or more, or 55 mass % or more, or 60 mass % or more, or 65 mass % or more, or 70 mass % or more, or 75 mass % or more, or 80 mass % or more, or 85 mass % or more, or 90 mass % or more, or 95 mass % or more. On the other hand, the upper limit is not particularly restricted, but may typically be 100 mass %, or 100 mass % or less.

The total content of pulse and cereal as the raw material for starch in the solid composition of the present invention is not particularly restricted, but may preferably be within the range of 1 mass % or more but 100 mass % or less in terms of wet mass basis. More specifically, the lower limit may preferably be 1 mass % or more, particularly 3 mass % or more, or 5 mass % or more, or 8 mass % or more, or 10 mass % or more, or 15 mass % or more, or 20 mass % or more, or 25 mass % or more, or 30 mass % or more, or 35 mass % or more, or 40 mass % or more, or 45 mass % or more, or 50 mass % or more, or 55 mass % or more, or 60 mass % or more, or 65 mass % or more, or 70 mass % or more, or 75 mass % or more, or 80 mass % or more, or 85 mass % or more, or 90 mass % or more, or 95 mass % or more. On the other hand, the upper limit is not particularly restricted, but may typically be 100 mass %, or 100 mass % or less.

*Other starch:

In addition to starch derived from pulse and/or cereal, the solid composition may contain other types of starch. Examples of such other types of starch include starch derived from edible plants other than pulse and/or cereal and synthesis starch, of which starch derived from edible plants is preferred. The ratio of the starch derived from pulse and/or cereal to the total starch content in the solid composition in terms of dry mass basis may preferably be within the range of 30 mass % or more but 100 mass % or less. More specifically, the lower limit may preferably be 30 mass % or more, particularly 40 mass % or more, or 50 mass % or more, or 60 mass % or more, or 70 mass % or more, or 80 mass % or more, or 90 mass % or more, or 95 mass % or more. On the other hand, the upper limit is not particularly restricted, but may typically be 100 mass %, or 100 mass % or less. When the ratio of the starch derived from pulse and/or cereal in the solid composition satisfies the range mentioned above, it may become easier to obtain the effects that cracks are less likely to occur inside the composition after a certain period of time (e.g., 3 days or more) during storage at room temperature, and that ingredients inside the composition are less likely to leak out after cooking. The range mentioned above may be satisfied by the ratio of the pulse-derived starch content to the total starch content in the solid composition, by the ratio of the cereal-derived starch content to the total starch content in the solid composition, or by the ratio of the total content of pulse-derived starch and cereal-derived starch to the total starch content in the solid composition.

The total starch content in the solid composition (including the pulse-derived starch and/or cereal-derived starch, as well as other types of starch) is not particularly be restricted, but may preferably be within the range of 30 mass % or more but 100 mass % or less in terms of dry mass basis. More specifically, the lower limit may preferably be 30 mass % or more, or 35 mass % or more. The upper limit is not particularly limited, and may be typically 100 mass % or less, or 90 mass % or less, or 80 mass % or less, or 70 mass % or less.

The starch in the solid composition may be contained in the composition as an isolated pure substance, but may preferably be contained in the composition in the state of being included in pulse and/or cereal (and optionally in other edible plants). Specifically, the ratio of the starch content in the state of being contained in pulse and/or cereal (preferably the starch content contained in pulse) (and optionally in other edible plants) to the total starch content in the whole solid composition may preferably be within the range of 30 mass % or more but 100 mass % or less in terms of dry mass basis. More specifically, the lower limit may preferably be 30 mass % or more, particularly 40 mass % or more, or 50 mass % or more, or 60 mass % or more, or 70 mass % or more, or 80 mass % or more, or 90 mass % or more, or 95 mass % or more. On the other hand, the upper limit is not particularly restricted, but may typically be 100 mass %, or 100 mass % or less. When the ratio of the starch content in the state of being contained in pulse and/or cereal (and optionally other edible plant) to the total starch content in the whole solid composition satisfies the upper limits mentioned above, it may become easier to obtain the effects that cracks are less likely to occur inside the composition after a certain period of time (e.g., 3 days or more) during storage at room temperature, and that ingredients inside the composition are less likely to leak out after cooking.

When the starch in the solid composition (or precursor composition) is in the state of being contained in pulse and/or cereal, the solid composition (or precursor composition) may preferably contain a micronization processed product of insoluble dietary fiber-localizing sites of pulse and/or cereal having a size within the ranges specified in the "Particle diameter of edible plants (insoluble dietary fiber-localizing sites)" section. The insoluble dietary fiber-localizing sites may preferably be insoluble dietary fiber-localizing sites of oats or kibi (common millet). More specifically, the insoluble dietary fiber-localizing sites may preferably be insoluble dietary fiber-localizing sites of matured pulse, more preferably insoluble dietary fiber-localizing sites of pea (e.g., thin seed coat (also referred to as "hull") or pod attached to edible parts of the pulse. The solid composition (or precursor composition) may also preferably contain both a micronization processed product of insoluble dietary fiber-localizing sites and starch derived from pulse and/or cereal derived from the same species of pulse. The micronization processed product of insoluble dietary fiber-localizing sites may be prepared by isolating insoluble dietary fiber-localizing sites from a food material and subjecting it to micronization processing before being incorporated into the solid composition (or precursor composition), or may be prepared by subjecting a food material containing insoluble dietary fiber to micronization processing before being incorporated into the solid composition (or precursor composition).

According to an embodiment, the total content of starch derived from rice, wheat, and/or barley (preferably wheat and/or barley) in the solid composition may preferably be within a predetermined range. Specifically, the ratio of the total content of starch derived from rice, wheat, and/or barley (preferably wheat and/or barley) to the total starch content in the whole solid composition may preferably be within the range of 0 mass % or more, 10 mass % or less. More specifically, the upper limit for the ratio may preferably be 10 mass % or less, or 9 mass % or less, or 8 mass % or less, or 7 mass % or less, or 6 mass % or less, or 5 mass % or less, or 4 mass % or less, or 3 mass % or less, or 2 mass % or less, or 1 mass % or less, or substantially absent (specifically less than 1 ppm, which is the lower detection limits by general measurement methods) or absent. On the other hand, the lower limit for the ratio is not particularly restricted, but may typically be 0 mass %, or 0 mass % or more.

The starch in the solid composition may preferably have a degree of gelatinization within a predetermined range. Specifically, the lower limit for the degree of gelatinization of starch in the solid composition may be within the range of 50 mass % or more but 100 mass % or less in terms of dry mass basis. More specifically, the lower limit may preferably be 50 mass % or more, or 55 mass % or more, or 60 mass % or more. When the degree of gelatinization of starch in the solid composition satisfies the upper limits mentioned above, it may become easier to obtain the effects that cracks are less likely to occur inside the composition after a certain period of time (e.g., 3 days or more) during storage at room temperature, and that ingredients inside the composition are less likely to leak out after cooking. On the other hand, the upper limit for the degree of gelatinization of starch in the solid composition in terms of dry mass basis 100 mass % or less, or 98 mass % or less, or 95 mass % or less, or 92 mass % or less. When the degree of gelatinization of starch in the solid composition satisfies the upper limits mentioned above, it may become easier to prevent starch degradation and avoid the composition becoming sticky and of undesirable quality. The requirements mentioned above for the solid composition (especially those for starch) may also be satisfied by the precursor composition.

In addition, the other essential constituent of the food composition of the present invention, i.e., the seasoning solution, may also contain starch. The starch content in the seasoning solution is not restricted, but may be within the range of 0.1 mass % or more but 10 mass % or less in terms of wet mass basis. More specifically, the lower limit may preferably be 0.1 mass % or more, or 0.2 mass % or more, or 0.3 mass % or more, or 0.4 mass % or more, or 0.5 mass % or more. The upper limit for the content is not restricted, but may be 10 mass % or less, or 9 mass % or less, or 8 mass % or less. The origin of starch in the seasoning solution is not restricted, but may preferably be derived mainly from edible plants (including pulse and/or cereal), especially from edible-plant processed products as an ingredient of the seasoning solution.

The origin of starch in the seasoning solution is not restricted, but may preferably be derived mainly from edible plants (including pulse and/or cereal), especially from edible-plant processed products as an ingredient of the seasoning solution.

In the present invention, the starch contents in various composition samples such as the solid composition and the seasoning solution can be determined according to the Japan Standard Tables for Food Composition 2015 (7th revised edition) and using the method of AOAC 996.11, by a method in which soluble carbohydrates (glucose, maltose, maltodextrin, etc.) that affect the measured value are removed via extraction treatment with 80% ethanol.

In the present invention, the degree of gelatinization of a composition is measured as the ratio of the gelatinized starch content to the total starch content using the glucoamylase second method, which is a partial modification of the Central Analytical Laboratory of Customs (following the method by Japan Food Research Laboratories: https://web.archive.org/web/20200611054551 or https://www.jfrl.or.jp/storage/file/221.pdf).

*Edible-plant processed product:

The food composition of the present invention may preferably contain an edible-plant processed product. The edible-plant processed product may be in the form of liquid or solid or paste, but may typically be contained in the 4-mesh-pass fraction. Accordingly, the edible-plant processed product forms part of the seasoning solution. Most of (e.g., 80 mass % or more of) the particles of the edible-plant processed product may preferably have a size of 200-mesh on. Specifically, when the seasoning solution of the food composition of the present invention, which corresponds to the 4-mesh-pass fraction, is further sieved with a 200-mesh sieve, the mass ratio of the 200-mesh-on fraction (i.e., the mass ratio defined by [edible-plant processed product]/[seasoning solution] as explained below) may preferably satisfy certain lower limits, as will be detailed below.

The type of the edible plant as a material for the edible-plant processed product is not limited. However, according to an embodiment, they may be at least one species of edible plant selected from specific cereal species, potatoes, beans, nuts, vegetables, fruits, and mushrooms. Specific examples are mentioned below.

Cereals can arbitrary be selected. Examples include, but are not limited to, amaranth, foxtail millet, oat, barley, proso millet, quinoa, wheat, rice, sugar cane, buckwheat, corn, adlay, Japanese barnyard millet, fonio, sorghum, and the like. Preferred among them are corn, more preferably sweet corn.

Potatoes can arbitrarily be selected. Examples include, but are not limited to, Jerusalem artichoke, konjac potato, sweet potato, sato-imo (Japanese taro), mizu-imo, yatzugashira (species of sato-imo), potato, yama-imo (Japanese mountain yam), icho-imo (species of Japanese mountain yam), Chinese yam, yamato-imo (species of Chinese yam), jinenjo (species of Japanese mountain yam), daijo (species of Japanese mountain yam), cassava, yacon, taro, tashiroimo (Polynesian arrow root), purple yam, yam, etc. Preferred among these are purple potato and sweet potato, more preferably sweet potato.

Pulse (beans) can arbitrary be selected. Examples include, but are not limited to, common bean, safflowers, quail beans, soybeans, peas, pigeon peas, mung beans, black-eyed peas, red beans, broad beans, black beans, chickpeas, lentils, lima beans, peanuts, lupine beans, grass peas, carob, coffee beans, cacao beans, etc. Preferred among these include soybeans, peas, and black beans, more preferably soybeans and peas. Edamame is immature, unripe seeds of soybean harvested together with their pods and characterized by their green appearance. From the viewpoint of nutritional values (dietary fibers), insoluble dietary fiber-localizing sites may preferably be derived from matured pulse, more preferably insoluble dietary fiber-localizing sites of pea (e.g., thin seed coat (also referred to as "hull") or pod attached to edible parts of the pulse.

Seeds and nuts can arbitrary be selected. Examples include, but are not limited to, almonds, hempseeds, amani, egoma, cashews, pumpkin seeds, kaya, gingko nuts, chestnuts, walnuts, poppy, coconuts, sesame, chinquapin nuts, horse chestnuts, lotus seeds, water caltrop, pistachios, sunflower seeds, Brazil nuts, hazelnuts, pecans, macadamia nuts, pine nuts, and groundnuts. Preferred among them include sesame, almonds, cashews, macadamia nuts, pistachios, hazelnuts, and coconuts.

Vegetables can arbitrary be selected. Examples include, but are not limited to, garlic, onion, tomato, carrot, celery, artichoke, asatsuki (Japanese chives), ashitaba (Angelica keiskei), asparagus, aloe, uri (Japanese melon), green beans, udo (Aralia cordata), pea sprout, snap peas, okra, turnip, pumpkin, leaf mustard, cauliflower, chrysanthemum, cabbage, cucumber, Siberian onion, water spinach, watercress, arrowhead, kale, burdock root, komatsuna (Japanese mustard spinach), za cai, shishito pepper, shiso, cowpeas, chrysanthemum greens, ginger, zuiki (taro stem), suguina (Brassica rapa var. neosuguki), zucchini, seri (Japanese parsley), taacchino, daikon radish, takana (Brassica juncea var. integrifolia), takenoko (bamboo shoot), chicory, Chinese cabbage, hotpepper, eggplant, nabana (canola flower), bitter melon, Chinese leek, nosawana (Brassica rapa L. var. hakabura), napa cabbage, pok choi, basil, parsley, beet (beetroot), sweet pepper, butterbur, broccoli, Egyptian cucumber (Luffa aegyptiaca), spinach, horseradish, mizuna (Japanese mustard greens), mitsuba (Japanese cryptotaenia), myoga ginger, mung bean sprout, cucumber, Jute mallow, lily bulb, mugwort, Chinese scallion, arugula, rhubarb, lettuce, lotus root, tree onion, wasabi (Japanese horseradish), bracken, and herbs (cilantro, sage, thyme, basil, oregano, rosemary, mint, lemon grass, dill, etc.). Preferred among these include garlic, onion, tomato, carrot, celery, pumpkin, cabbage, kale, bell pepper, beet, broccoli, and spinach.

Fruits can arbitrary be selected. Examples include, but are not limited to, acerola, avocado, apricot, strawberry, fig, plum, citrus fruits (iyokan, unshiu mandarin, orange, grapefruit, lime, lemon, etc.), olive, persimmon, kiwi, guava, coconut, pomegranate, watermelon, plum, cherry (cherry, black cherry, etc.), jujube, pineapple, haskap, banana, papaya, loquat, grape, berry (blueberry, raspberry, etc.), mango, mangosteen, melon, peach, and apple. Preferred among these include avocado, strawbery, berries, citrus fruits, mango, pineapple, grapes, and apple.

Mushrooms can arbitrary be selected. Examples include, but are not limited to, shiitake mushroom, matsutake mushroom, kikurage mushroom (jelly ear), maitake mushroom (ram's head), Polyporaceae (Dryad's saddle), hiratake (pearl oyster mushroom), eryngii mushroom (king trumpet mushroom), enokitake mushroom (velvet shank), shimeji mushroom, naratake mushroom (honey fungus), common mushroom, nameko mushroom, amitake mushroom (Jersey cow mushroom), hatsutake mushroom, chichitake (weeping milk cap), and the like.

These edible plants may be used either singly or in combination of any two or more at any ratios. In addition, while edible plants usually have both edible portions and non-edible portions, each edible plant may be used only with its edible portions, only with its non-edible portions, or both its edible portions and its non-edible portions. when both edible portions and non-edible portions of edible plants are used in combination, they may be a combination of edible portions and non-edible portions derived from the same one or more edible plants, or they may be a combination of edible portions derived from one or more edible plants and non-edible portions derived from other one or more edible plants. That is, there are no restrictions on the selection and combination of edible and/or non-edible parts of one or more edible plants in the present invention.

The term "non-edible portions" of an edible plant as used herein refers to portions of the edible plant that are not suitable for normal eating and drinking or that are discarded in normal eating habits, and the term "edible portions" of an edible plant as used herein refers to portions of the entire edible plant excluding the discarded portions (non-edible portions). The parts and proportions of non-edible portions of an edible plant to be used in the present invention can be naturally understood by those skilled in the art of handling such edible plants and processed products thereof. For example, the "refused portion" and the "refuse (rate)" described in the Japanese Standard Tables of Food Composition 2015 (7th edition) can be referred to as position and the ratio, respectively, of a non-edible portion of the natural material. Table A below shows examples of the "refused portion" and the "refuse (rate)" (that is, the position and the ratio, respectively, of the non-edible portion) described in the Japanese Standard Tables of Food Composition 2015 (7th edition) for each of major edible plants. The position and the ratio of an edible portion of each natural material can be understood based on the position and the ratio of the non-edible portion of each edible plant.

[Table A]

| Edible plants | Position of non-edible portion (refused portion) | Ratio of non-edible portion (refuse) |
|---|---|---|
| Vegetables/Edamame/Raw | Pod | 45% |
| Vegetables/(Corns)/Sweet corn/ Immature seeds, raw | Bract, pistil, and cob | 50% |
| Vegetables/(Pumpkins)/ Japanese pumpkin/Fruit, raw | Pulp, seeds, and ends | 9% |
| Vegetables/(Peppers)/Red pepper/ Fruit, raw(Paprika) | Hull, core, and seeds | 10% |
| Vegetables/Beet/Root, raw | Root tip, peel, and petiole | 10% |
| Vegetables/Broccoli/ Inflorescence, raw | Foliage | 50% |
| Vegetables/(Tomates)/Tomato/ Fruit, raw | Hull | 3% |
| Vegetables/(Cabbages)/Cabbage/ Heading leaves, raw | Core | 15% |
| Vegetables/Spinach/Leaves, raw | Rootstock | 10% |
| Vegetables/Kale/Leaves, raw | Petiole base | 3% |
| Vegetables/(Peas)/Green peas/Raw | Pod | 55% |

(continued)

| Edible plants | Position of non-edible portion (refused portion) | Ratio of non-edible portion (refuse) |
|---|---|---|
| Vegetables/Broad bean/ Immature bean/Raw | Coat and pod | 80% |
| Vegetables/(Carrots)/ Root, unpeeled, raw | Root tip and petiole base | 3% |

The form of the edible-plant processed product is not limited, but may preferably be one or more selected from powder of an edible plant, paste of an edible plant, and aqueous extract of an edible plant. For example, the edible-plant processed product may preferably be a product obtained by subjecting an edible plant to heating treatment (at, e.g., 80°C or more) such as drying treatment, roast treatment, and hot-water extraction treatment.

The content ratio of the edible-plant processed product in the seasoning solution of the present invention may preferably be a predetermined limit or more. This may serve to exhibit the effect of reducing the leakage of ingredients from the solid composition to the seasoning solution. Although the reason for this is not clear, it is possible that an extract from the solid composition reacts with ingredients in the edible-plant processed product in the seasoning solution (thought to be polysaccharides such as pectin contained in the micronized product of edible plant in materials for the seasoning solution) and thickens the solid composition, thereby reducing the fluidity of the seasoning solution around the solid composition and inhibiting the outflow of ingredients from the solid composition.

Specifically, the content ratio of the 4-mesh-pass edible-plant processed product (preferably the 4-mesh-pass and 200-mesh-on edible-plant processed product) in the seasoning solution of the present invention (i.e., the mass ratio defined by the formula [edible-plant processed product]/[seasoning solution]) in terms of wet mass basis f may preferably be within the range of 1 mass % or more but 100 mass % or less. More specifically, the lower limit may preferably be 1 mass % or more, or 2 mass % or more, or 3 mass % or more, or 4 mass % or more, or 5 mass % or more. The upper limit for the content is not restricted, but may be 100 mass % or less, or 90 mass % or less, or 80 mass % or less, or 70 mass % or less, or 60 mass % or less.

*Insoluble dietary fiber-localizing sites

When the seasoning solution of the present invention contains a processed product of an edible plant, it may preferably contain a processed product of, among various portions of the edible plant, insoluble dietary fiber-localizing sites thereof. When the seasoning solution of the present invention contains a processed product of such insoluble dietary fiber-localizing sites of an edible plant, the viscosity of the seasoning solution may easily be improved, and the viscosity may be adjusted to a predetermined value.

The term "insoluble dietary fiber-localizing site" of an edible plant as used herein refers to the portions of the edible plant in which insoluble fiber is localized, in other words, the portions of the edible plant that have a relatively higher percentage of insoluble dietary fiber content than the edible portions of the edible plant. More specifically, the "insoluble dietary fiber-localizing sites" of an edible plant correspond to portions of the edible plant that have, in the dry state, an insoluble dietary fiber content of 1.1 times or more, or 1.2 times or more, or 1.3 times or more, or 1.4 times or more, or 1.5 times or more, or 1.6 times or more, or 1.7 times or more, or 1.8 times or more, or 1.9 times or more, or 2.0 times or more as high as the insoluble dietary fiber content in the edible portions of the edible plant. For example, in the case of tomatoes, the seeds and/or peel, which have a relatively higher insoluble dietary fiber content than that in the edible portion (such as the pulp), correspond to the insoluble dietary fiber-localizing sites.

The insoluble dietary fiber content in the insoluble dietary fiber-localizing sites may preferably be within the range of more than 8 mass % 50 mass % or less in terms of dry mass basis. More specifically, the lower limit may preferably be more than 8 mass %, or more than 9 mass %, or more than 10 mass %, or more than 11 mass %, or more than 12 mass %, or more than 13 mass %, or more than 14 mass %, or more than 15 mass %, or more than 16 mass %, or more than 17 mass %, or more than 18 mass %, or more than 19 mass %, or more than 20 mass % may preferably be. upper limit is not particularly restricted, but may typically be 50 mass % or less, or 40 mass % or less, or 30 mass % or less. The term "dry mass basis" of a component, etc., in a composition or fraction, etc., as used herein refers to the content ratio calculated with the dry mass without water of the composition or fraction, etc., (in the above case, the dry mass of the insoluble dietary fiber-localizing sites) as the denominator and the content of the target component or substance (in the above case, the dry mass of the insoluble dietary fiber) as the numerator.

Specific examples of insoluble dietary fiber-localizing sites in major edible plants include "refused portions" of various edible plants described in the Japanese Standard Tables of Food Composition 2015 (7th edition) (examples of which are listed in Table A above). However, However, insoluble dietary fiber-localizing sites may also be found in "edible portions," which are parts other than such "non-edible portions," such as the skin and seed parts of the above-mentioned species of cereal, pulse, nuts, seeds, and vegetables, as well as the particularly hard and thick parts of the stems and leaves of vegetables. When insoluble dietary fiber-localizing sites of edible plants are used in the present invention, they may be parts of the "edible portions" of edible plants (e.g., seeds or skins of cereals, legumes, seeds and nuts, especially seeds or skins of vegetables, etc.) or "non-edible portions" of edible plants (e.g., corn cores, pods of legumes), but they may preferably be parts of "edible portions" of edible plants, more preferably the peel and/or seed parts of vegetables or the squeezed residues of pulse, still more preferably the peel and/or seed parts of tomatoes (including mini-tomatoes), the squeezed residues of soybeans (okara), and/or the seed coat parts of sesame.

When the seasoning solution of the present invention contains a processed product of insoluble dietary fiber-localizing sites of edible plants, the ratio is not restricted, but may be as follows. The wet mass equivalent ratio of the insoluble dietary fiber-localizing sites to the total mass of the whole seasoning solution may preferably be within the range of 0.1 mass % or more but 20 mass % or less. More specifically, the ratio may preferably be 0.1 mass % or more, or 0.2 mass % or more, or 0.3 mass % or more, and may be 20 mass % or less, or 10 mass % or less, or 5 mass % or less.

When the seasoning solution of the present invention contains a processed product of insoluble dietary fiber-localizing sites of an edible plant, it may contain insoluble dietary fiber-localizing sites either alone in the state of being separated from the edible plant, or in combination with other sites of the edible plant. However, it may preferably contain insoluble dietary fiber-localizing sites and other sites belonging to the same species of edible plant, more preferably insoluble dietary fiber-localizing sites and other sites belonging to the same individual of edible plant. When the seasoning solution of the present invention contains insoluble dietary fiber-localizing sites and other sites belonging to the same species or the same individual of edible plant, the insoluble dietary fiber-localizing sites of the edible plant and the other sites of the edible plant may be incorporated into the seasoning solution individually, or a portion of the edible plant containing insoluble dietary fiber-localizing sites and other sites may be incorporated into the seasoning solution.

When the seasoning solution of the present invention contains a processed product of an edible plant (especially its insoluble dietary fiber-localizing sites), the edible plant may preferably be contained in the form of a micronization processed product having a predetermined particle diameter. This tends to improve the palatability of the resulting seasoning solution, and depending on the form, may also improve the viscosity of the seasoning solution. The principle underlying this is unknown, but it is possible that components such as pectin in the insoluble dietary fiber-localizing sites in the seasoning solution may react with the extract to produce viscosity. Details of the particle distribution of edible plants (especially their insoluble dietary fiber-localizing sites) are discussed below in the section relating to the production method of the present invention.

*Features relating to the particle diameter of the seasoning solution:

The seasoning solution of the present invention is not limited in any way in terms of its physical properties, but may typically contain a large number of microparticles and a large number of microparticle complexes, etc., which are agglomerated in a liquid medium. In this regard, the seasoning solution of the present invention may preferably satisfy the following specific requirements for various parameters related to the particle size of such microparticle complexes and microparticles before and after the application of an external disturbance (usually ultrasonication), namely, the modal particle diameter, maximum particle diameter, and $d_{50}$ of the particle diameter, etc. Specifically, in the undisturbed state (i.e., before ultrasonication), the seasoning solution tends to contain a large number of microparticle complexes consisting of a large number of agglomerated microparticles. On the other hand, under disturbed conditions (i.e., after sonication), some or all of these microparticle complexes tend to disintegrate to form separate microparticles. Therefore, various parameters relating to particle diameter (e.g., modal particle diameter, maximum particle diameter, and particle diameter $d_{50}$, etc.) of the seasoning solution of the present invention tend to change largely before and after the disturbance. In measuring the characteristics of the microparticle complexes and microparticles contained in the seasoning solution, the seasoning solution obtained by the aforementioned method can be used as a sample and measured using the laser diffraction particle size distribution analyzer described below to determine their characteristics.

Although not restricted, the modal particle diameter (modal diameter) of the seasoning solution of the present invention before disturbance (i.e., before ultrasonication) may preferably be adjusted to within a predetermined range. This may allow the seasoning solution to have a quality that is less prone to water release, maintain its effectiveness in improving ingestion, and be commercially distributed. Specifically, the modal particle diameter of the seasoning solution of the present invention before disturbance may preferably be within the range of 5 $\mu$m or more 1900 $\mu$m or less. More specifically, the upper limit may preferably be 1900 $\mu$m or less, or 1800 $\mu$m or less, or 1700 $\mu$m or less, or 1600 $\mu$m or less, or 1500 $\mu$m or less, or 1400 $\mu$m or less, or 1300 $\mu$m or less, or 1200 $\mu$m or less. On the other hand, the lower limit for the modal particle diameter of the seasoning solution before disturbance is not particularly restricted, but from the viewpoint of its production efficiency, it may be 5 $\mu$m or more, or 10 $\mu$m or more, or 12 $\mu$m or more.

Although not restricted, the modal particle diameter (modal diameter) of the seasoning solution of the present invention after disturbance (i.e., after ultrasonication) may also preferably be adjusted to within a predetermined range. Specifically, the modal particle diameter of the seasoning solution after disturbance may preferably be within the range of 0.3 $\mu$m or more 1000 $\mu$m or less. More specifically, the upper limit may preferably be 1000 $\mu$m or less, or 900 $\mu$m or less, or

800 $\mu$m or less, or 700 $\mu$m or less, or 600 $\mu$m or less, or 500 $\mu$m or less, or 400 $\mu$m or less, or 300 $\mu$m or less, or 200 $\mu$m or less. On the other hand, the lower limit for the modal particle diameter of the seasoning solution after disturbance is not particularly restricted, but from the viewpoint of its production efficiency, it may be 0.3 $\mu$m or more, or 1.0 $\mu$m or more, or 3.0 $\mu$m or more, or 5.0 $\mu$m or more, or 6.0 $\mu$m or more, or 7.0 $\mu$m or more. When the seasoning solution contains a micronization processed product of insoluble dietary fiber-localizing sites of edible plants (especially tomato seeds and/or peels) described below, it may be preferable to sufficiently micronize the hard tissues of these sites to within a predetermined range, since this may serve to improve the mouth feel.

Although not restricted, the maximum particle diameter of the seasoning solution of the present invention before disturbance (i.e., before ultrasonication) may also preferably be adjusted to within a predetermined range. Specifically, the maximum particle diameter of the seasoning solution of the present invention before disturbance may preferably be within the range of 30 $\mu$m or more 2000 $\mu$m or less. More specifically, the lower limit may preferably be 30 $\mu$m or more, or 100 $\mu$m or more, or 200 $\mu$m or more, or 300 $\mu$m or more, or 400 $\mu$m or more, or 500 $\mu$m or more, or 600 $\mu$m or more, or 700 $\mu$m or more, or 800 $\mu$m or more, or 900 $\mu$m or more. This may serve to prevent the destruction of edible plant tissues and the imparting of undesirable flavors. On the other hand, the maximum particle diameter of the seasoning solution before disturbance may be, although is not limited to, 2000 $\mu$m or less, or 1800 $\mu$m or less. This may be advantageous for reasons of industrial productivity. When the seasoning solution contains a crushed product of insoluble dietary fiber-localizing sites of an edible plant (especially tomato seeds and/or peels), the maximum particle diameter of the seasoning solution before disturbance may be equal to or larger than the lower limits mentioned above, since even if the hard tissue of these sites are micronized in a desultory manner, some larger tissues remain. However, even in such a case, it is preferable to adjust the mode diameter after disturbance in the seasoning solution described above and the $d_{50}$ of the particle diameter after disturbance in the seasoning solution described below to within their respective predetermined ranges, since the resulting seasoning solution may exhibit a good texture.

Although not restricted, the maximum particle diameter of the seasoning solution of the present invention after disturbance (i.e., after ultrasonication) may also preferably be adjusted to within a predetermined range. Specifically, the maximum particle diameter of the seasoning solution of the present invention after disturbance may preferably be within the range of 30 $\mu$m or more 1900 $\mu$m or less. More specifically, the lower limit may preferably be 30 $\mu$m or more, or 100 $\mu$m or more, or 200 $\mu$m or more, or 300 $\mu$m or more, or 400 $\mu$m or more, or 500 $\mu$m or more, or 600 $\mu$m or more, or 700 $\mu$m or more, or 800 $\mu$m or more, or 900 $\mu$m or more. This may serve to prevent the destruction of edible plant tissues and the imparting of undesirable flavors. On the other hand, the maximum particle diameter of the seasoning solution after disturbance may be, although is not limited to, 1900 $\mu$m or less, or 1700 $\mu$m or less. This may be advantageous for reasons of industrial productivity.

Although not restricted, the particle diameter $d_{50}$ (50% integrated diameter, median particle diameter, median diameter) of the seasoning solution of the present invention before disturbance (i.e., before ultrasonication) may also preferably be adjusted to within a predetermined range. Specifically, the particle diameter $d_{50}$ of the seasoning solution of the present invention before disturbance may preferably be within the range of 5 $\mu$m or more 1000 $\mu$m or less. More specifically, the upper limit may preferably be 1000 $\mu$m or less, or 900 $\mu$m or less, or 800 $\mu$m or less, or 700 $\mu$m or less, or 600 $\mu$m or less, or 500 $\mu$m or less, or 400 $\mu$m or less, or 300 $\mu$m or less, or 200 $\mu$m or less. The lower limit is not particularly restricted, but it may be 5 $\mu$m or more, or 10 $\mu$m or more. When the seasoning solution contains a crushed product of insoluble dietary fiber-localizing sites of an edible plant (especially tomato seeds and/or peels), the hard tissues of the sites may preferably be sufficiently micronized to within a predetermined range, since the resulting seasoning solution may exhibit a good texture.

Although not restricted, the particle diameter $d_{50}$ of the seasoning solution of the present invention after disturbance (i.e., after ultrasonication) may also preferably be adjusted to within a predetermined range. Specifically, the particle diameter $d_{50}$ of the seasoning solution of the present invention after disturbance may preferably be within the range of 1 $\mu$m or more 900 $\mu$m or less. More specifically, the upper limit may preferably be 900 $\mu$m or less, or 800 $\mu$m or less, or 700 $\mu$m or less, or 600 $\mu$m or less, or 500 $\mu$m or less, or 400 $\mu$m or less, or 300 $\mu$m or less, or 200 $\mu$m or less. The lower limit is not particularly restricted, but may preferably be 1 $\mu$m or more, or 5 $\mu$m or more, or 7 $\mu$m or more.

Unless otherwise specified, the term "particle size" as used herein refers to a value measured using a laser diffraction particle size distribution analyzer. All "particle size" values are measured on a volume basis. Unless otherwise specified, the term "particle" as used herein encompasses not only separate microparticles but also microparticle composites consisting of agglomerations of microparticles.

The term "mode particle diameter" as used herein refers to the particle size of the channel with the largest particle frequency % with respect to the particle size distribution in terms of channels as obtained by measuring the object to be measured using a laser diffraction particle size analyzer. If there are multiple channels with exactly the same particle frequency %, the particle diameter of the channel with the smallest particle size among them is used. If the particle size distribution is a Gaussian distribution, the mode particle diameter is equal to the median diameter, while if the particle size distribution is biased, especially if there are multiple peaks in the particle size distribution, then the mode particle diameter and the median diameter may differ significantly. Measurement of the particle size distribution of a sample using a laser diffraction particle size analyzer can be performed, for example, by the method explained later.

The term "d50" of particle size as used herein is defined as the particle size where, when the particle size distribution is divided into two from a certain particle size, the ratio of the cumulative value of the larger particle frequency % to the cumulative value of the smaller particle frequency % is 50:50. The $d_{50}$ of particle diameter can be measured, for example, using a laser diffraction particle size analyzer as described below.

The measurement conditions for various parameters relating to the particle size distribution (e.g., modal particle diameter, maximum particle diameter, particle diameter $d_{50}$, etc.) described above are not restricted, but can be the following conditions. Ethanol is used as the solvent for the measurement, which has little effect on the structure of the composition. The laser diffraction particle size analyzer used for the measurement is not limited to any particular type, an example being Microtrac MT3300 EXII system marketed by Microtrac Bell Inc. The measurement application software used for the measurement is not limited, an example being DMS2 (Data Management System version 2, Microtrac Bell Inc.). When the device and the application software mentioned above are used, the measurement can be carried out by: carrying out cleaning by pressing the Wash button of the software; carrying out calibration by pressing the Set Zero button of the software; and directly loading the sample via the Sample Loading feature until the sample concentration is within the proper range. After the sample is loaded, the measurement sample is subjected to ultrasonic treatment by the measurement device, followed by measurement. Specifically, a sample that has not been subjected to ultrasonic treatment is put into the measurement solvent (ethanol) circulating in the measurement system, the concentration is adjusted to within the appropriate range using the Sample Loading feature, and then the ultrasonic treatment is performed by pressing the Ultrasonic Treatment button of the software. Then, after three times of defoaming, the sample loading can be carried out again to adjust the concentration to within the appropriate range. Thereafter, the sample is promptly laser diffracted at a flow rate of 60% with a measurement time of 10 seconds, and the result is used as the measurement value. The parameters for the measurement may be, e.g., Distribution indication: Volume; Particle refractive index: 1.60; Solvent refractive index: 1.36; Upper limit of measurement: 2,000.00 $\mu$m; Lower limit of measurement: 0.021 $\mu$m.

Unless otherwise specified, the present invention assumes ultrasonication as a typical example of an external disturbance that causes the microparticle composites to break up. The term "ultrasonication" herein refers to, unless otherwise specified, the application of ultrasonic waves with a frequency of 40 kHz at an output of 40 W to the sample to be measured for 3 minutes. When a composition is measured with a laser diffraction particle size analyzer, the composition can be measured as it is. Alternatively, 1 g of the sample can be immersed in 50 g of ethanol at about 80°C, allowed to stand for about 5 minutes, then stirred and suspended with a spatula, and sieved with a sieve with a 2.36 mm gap and 1.0 mm wire diameter (Wire Dia.), and the solution passing through the sieve (2 mass % dispersion) may be used for the measurement.

When determining various particle diameters in the present invention, it is preferable to measure the particle size distribution in terms of channels (CH), and then use the particle diameter for each measurement channel listed in Table B below as a standard. Specifically, according to Table B below, the frequency of particles that are smaller than the particle diameter specified for each channel and larger than the particle diameter specified for the channel with one number larger (for the largest channel in the measurement range, the particle diameter of the lower limit) is measured for each channel in Table B below, and the total frequency for all channels in the measurement range is used as the denominator to obtain the particle frequency % for each channel (also referred to as "particle frequency % for XX channel"). For example, the particle frequency % of channel 1 represents the frequency % of particles of 2000.00 $\mu$m or smaller but larger than 1826.00 $\mu$m. In particular, the maximum particle diameter can be determined as the particle diameter of the channel with the largest particle diameter among the channels in which the particle frequency % was found for the results obtained by measuring the particle frequency % in each of the 132 channels in Table B below. In other words, when various particle sizes are measured in the present invention using a laser diffraction particle size analyzer, the preferred measurement conditions are ethanol as the measurement solvent, an upper measurement limit of 2000.00 $\mu$m and a lower measurement limit of 0.021 $\mu$m, and the particle size is measured immediately after the sample is fed.

[Table B]

| Channel | Particle size ($\mu$m) | Channel | Particle size ($\mu$m) | Channel | Particle size ($\mu$m) | Channel | Particle size ($\mu$m) |
|---|---|---|---|---|---|---|---|
| 1 | 2000.000 | 37 | 88.000 | 73 | 3.889 | 109 | 0.172 |
| 2 | 1826.000 | 38 | 80.700 | 74 | 3.566 | 110 | 0.158 |
| 3 | 1674.000 | 39 | 74.000 | 75 | 3.270 | 111 | 0.145 |
| 4 | 1535.000 | 40 | 67.860 | 76 | 2.999 | 112 | 0.133 |
| 5 | 1408.000 | 41 | 62.230 | 77 | 2.750 | 113 | 0.122 |
| 6 | 1291.000 | 42 | 57.060 | 78 | 2.522 | 114 | 0.111 |
| 7 | 1184.000 | 43 | 52.330 | 79 | 2.312 | 115 | 0.102 |

(continued)

| Channel | Particle size (μm) | Channel | Particle size (μm) | Channel | Particle size (μm) | Channel | Particle size (μm) |
|---|---|---|---|---|---|---|---|
| 8 | 1086.000 | 44 | 47.980 | 80 | 2.121 | 116 | 0.094 |
| 9 | 995.600 | 45 | 44.000 | 81 | 1.945 | 117 | 0.086 |
| 10 | 913.000 | 46 | 40.350 | 82 | 1.783 | 118 | 0.079 |
| 11 | 837.200 | 47 | 37.000 | 83 | 1.635 | 119 | 0.072 |
| 12 | 767.700 | 48 | 33.930 | 84 | 1.499 | 120 | 0.066 |
| 13 | 704.000 | 49 | 31.110 | 85 | 1.375 | 121 | 0.061 |
| 14 | 645.600 | 50 | 28.530 | 86 | 1.261 | 122 | 0.056 |
| 15 | 592.000 | 51 | 26.160 | 87 | 1.156 | 123 | 0.051 |
| 16 | 542.900 | 52 | 23.990 | 88 | 1.060 | 124 | 0.047 |
| 17 | 497.800 | 53 | 22.000 | 89 | 0.972 | 125 | 0.043 |
| 18 | 456.500 | 54 | 20.170 | 90 | 0.892 | 126 | 0.039 |
| 19 | 418.600 | 55 | 18.500 | 91 | 0.818 | 127 | 0.036 |
| 20 | 383.900 | 56 | 16.960 | 92 | 0.750 | 128 | 0.033 |
| 21 | 352.000 | 57 | 15.560 | 93 | 0.688 | 129 | 0.030 |
| 22 | 322.800 | 58 | 14.270 | 94 | 0.630 | 130 | 0.028 |
| 23 | 296.000 | 59 | 13.080 | 95 | 0.578 | 131 | 0.026 |
| 24 | 271.400 | 60 | 12.000 | 96 | 0.530 | 132 | 0.023 |
| 25 | 248.900 | 61 | 11.000 | 97 | 0.486 | | |
| 26 | 228.200 | 62 | 10.090 | 98 | 0.446 | | |
| 27 | 209.300 | 63 | 9.250 | 99 | 0.409 | | |
| 28 | 191.900 | 64 | 8.482 | 100 | 0.375 | | |
| 29 | 176.000 | 65 | 7.778 | 101 | 0.344 | | |
| 30 | 161.400 | 66 | 7.133 | 102 | 0.315 | | |
| 31 | 148.000 | 67 | 6.541 | 103 | 0.289 | | |
| 32 | 135.700 | 68 | 5.998 | 104 | 0.265 | | |
| 33 | 124.500 | 69 | 5.500 | 105 | 0.243 | | |
| 34 | 114.100 | 70 | 5.044 | 106 | 0.223 | | |
| 35 | 104.700 | 71 | 4.625 | 107 | 0.204 | | |
| 36 | 95.960 | 72 | 4.241 | 108 | 0.187 | | |

*Specific surface area of particles of the seasoning solution:

In addition to the various requirements described above, it is preferable, although not limited to, that the specific surface area per unit volume [m$^2$/mL] of the particles (microparticles and microparticle complexes) in the seasoning solution before and after the application of a disturbance (i.e., before and after ultrasonication) satisfies the following requirements. That is, the specific surface area per unit volume [m2/mL] of the seasoning solution may preferably change by a predetermined percentage before and after the disturbance.

Although not restricted, the specific surface area per unit volume [m$^2$/mL] of the particles (microparticles and microparticle complexes) in the seasoning solution before and after the application of a disturbance (i.e., before and after ultrasonication) represented by $\gamma B/\gamma A$ {i.e., (specific surface area per unit volume before ultrasonication)/(specific surface area per unit volume after ultrasonication)} may preferably satisfy a predetermined range. For example, this value may preferably be within the range of 0.10 or more 10.0 or less. Specifically, the upper limit for the ($\gamma B/\gamma A$) value may preferably

be, although is not limited to, 10.0 or less, or 8.0 or less, or 6.0 or less, or 4.0 or less, or 2.0 or less. When the $\gamma B/\gamma A$ satisfies the upper limits above, dietary fibers are complexed with each other so as to be easily crumbled, resulting in a desirable texture. On the other hand, the lower limit for the ($\gamma B/\gamma A$) value may preferably be 0.10 or more, particularly 0.20 or more, or 0.30 or more, or 0.40 or more, or 0.50 or more.

Although not restricted, the specific surface area per unit volume of the particles (microparticles and microparticle complexes) in the seasoning solution of the present invention before disturbance (i.e., before ultrasonication) (hereinafter also referred to as "$\gamma A$") may preferably be within the range of $0.01m^2/mL$ or more but $1.00m^2/mL$ or less. More specifically, the upper limit may preferably be $1.00m^2/mL$ or less, or $0.90m^2/mL$ or less, or $0.80m^2/mL$ or less. When the specific surface area ($\gamma B$) satisfies these upper limits, microparticles may form complexes sufficiently so as to exhibit the effect of improving the storage stability according to the present invention. The lower limit for the specific surface area ($\gamma B$) is not restricted, but may be $0.01m^2/mL$ or more, or $0.02m^2/mL$ or more, or $0.03m^2/mL$ or more.

Although not restricted, the specific surface area per unit volume of the particles (microparticles and microparticle complexes) in the seasoning solution of the present invention after disturbance (i.e., after ultrasonication) (hereinafter also referred to as "$\gamma B$") may preferably be within the range of $0.01m^2/mL$ or more $2.00m^2/mL$ or less. More specifically, the upper limit may preferably be $2.00m^2/mL$ or less, or $1.50m^2/mL$ or less, or $1.20m^2/mL$ or less. When the specific surface area ($\gamma B$) satisfies the upper limits or less, then the microparticles may form complexes sufficiently so as to exhibit the effect of improving the storage stability according to the present invention. The lower limit for the specific surface area ($\gamma B$) is not restricted, but may be $0.01m^2/mL$ or more, or $0.02m^2/mL$ or more, or $0.03m^2/mL$ or more.

The "specific surface area per unit volume" $[m^2/mL]$ herein refers to the specific surface area per unit volume (1 mL) when the particles are assumed to be spherical, as measured using a laser diffraction particle size analyzer. The specific surface area per unit volume $[m^2/mL]$ assuming that the particles are spherical is a numerical value based on a different measurement mechanism than the measured values reflecting the composition and surface structure of the particles (e.g., specific surface area per volume and per mass obtained by the permeation method, gas adsorption method, etc.). The specific surface area per unit volume $[m^2/mL]$ assuming that the particles are spherical is obtained by setting the surface area per particle as ai and the particle diameter of each particle as di, multiplying the particle diameter (di) for each measurement channel by the surface area (ai) per particle, summing up the multiplied products, and dividing back the sum by the surface area (ai) per particle to calculate the area-averaged diameter ($\Sigma(ai \cdot di)/\Sigma(ai)$), and then calculating 6/(area-averaged diameter), i.e., $6 \times \Sigma(ai)/\Sigma(ai*di)$.

*Methods for determining the content ratio of each constituent of the food composition:

In the present disclosure, when measuring the content ratio of each constituent of a food composition (i.e., the "solid composition" and the "seasoning solution," as well as the "edible-plant processed product" as a constituent of the "seasoning solution") from a sample of the food composition, the mass of each sieved "fraction" in a wet state shall be measured and considered as the mass of each corresponding constituent in a wet state. Specifically, a 4-mesh sieve is placed on a 200-mesh sieve, and 100 g of a sample of the food composition to be measured, adjusted to a temperature of 20°C, is spread on the 4-mesh sieve evenly and thinly and left for 10 minutes, and the fraction sieved by each sieve is obtained. Of the resulting fractions, the 4-mesh-on fraction is considered as the "solid composition" fraction, the 4-mesh-pass fraction is considered as the "seasoning solution" fraction, and the 4-mesh-pass and 200-mesh-on fraction is considered as the "edible-plant processed product" fraction. The masses of these fractions are measured and considered as the masses of the corresponding "solid composition", "seasoning solution", and "processed edible plant product." The measurement values for these masses can be used for determining content ratios between these constituents (e.g., the mass ratio of [solid composition]/[seasoning solution], the mass ratio of [edible-plant processed product ]/[seasoning solution], etc.).

A specific mesh-on and/or specific mesh-pass "fraction" obtained by sieving a sample of a food composition herein refers to a partial composition of a liquid seasoning that behaves in a similar manner with respect to specific mesh-on and/or specific mesh-pass properties. Such a "fraction" usually includes one or more kinds of solid components and one or more kinds of liquid components. It should be noted here that a specific mesh-on "fraction" can include not only solid components with a specific mesh-on size, but also liquid components with a specific mesh-pass size. (For example, the 4-mesh-on "solid composition" fraction may contain not only the solid composition with a 4-mesh-on size but also small portions of the edible-plant processed product and the seasoning solution with a 4-mesh-pass size, and the 4-mesh-pass 200-mesh-on "edible-plant processed product" fraction may contain not only the edible-plant processed product with a 4-mesh-pass 200-mesh-on size but also a small portion of the seasoning solution with a 200-mesh-pass size.) This is due to the fact that even solid components or liquid components with a specific mesh-pass size may not pass through the specific mesh sieve and remain on the sieve, depending on the combination with other solid components and liquid components coexisting as well as the properties of the solid composition and the seasoning solution. Thus, when a sample such as the food composition is sieve-fractionated according to the procedure described above, even a fraction containing components with a specific mesh-pass size may be determined as a specific mesh-on fraction as long as it behaves in the same manner and remains on the specific mesh sieve.

*Protein:

The solid composition of the present invention may preferably contain protein. The lower limit for the protein content in the solid composition of the present invention in terms of wet mass basis may be within the range of 3.0 mass % or more but 70 mass % or less. More specifically, the lower limit may preferably be 3.0 mass % or more, or 5.0 mass % or more, or 8.0 mass % or more, or 12 mass % or more, or 15 mass % or more, or 20 mass % or more. On the other hand, the upper limit for the protein content in the solid composition of the present invention is not particularly restricted, but may be 70 mass % or less, or 60 mass % or less, or 50 mass % or less, or 40 mass % or less, or 30 mass % or less in terms of wet mass basis.

The seasoning solution of the present invention may also contain protein. The lower limit for the protein content in the seasoning solution of the present invention in terms of wet mass basis may be within the range of 0.1 mass % or more but 10 mass % or less. More specifically, the lower limit may preferably be 0.1 mass % or more, or 0.2 mass % or more, or 0.3 mass % or more, or 0.5 mass % or more, or 1 mass % or more. On the other hand, the upper limit for the protein content in the seasoning solution of the present invention is not particularly restricted, but may be 10 mass % or less, or 8 mass % or less, or 6 mass % or less, or 4 mass % or less in terms of wet mass basis.

The protein content in a composition sample such as the solid composition or the seasoning solution herein can be measured in accordance with the Japan Standard Tables for Food Composition 2015 (7th revised edition) by, e.g., quantifying the total amount of nitrogen according to the combustion method (improved Dumas method) specified in the Food Labeling Law ("About Food Labeling Standards" (Consumer Food Indication No. 139 dated March 30, 2015))," and then multiplying the total amount of nitrogen with the "nitrogen-protein conversion factor."

The origin of the protein contained in the solid composition of the present invention is not particularly restricted. Examples include plant-derived protein and animal-derived protein, of which plant-derived protein may be preferred. Specifically, the ratio of the plant-derived protein content to the total protein content in the whole solid composition in terms of dry mass basis may preferably be 50 mass % or more, or 60 mass % or more, or 70 mass % or more, or 80 mass % or more, or 90 mass % or more, especially 100 mass %. Examples of plant-derived protein that can be used include those derived from general species of cereal (including specific species of cereal), those derived from pulse (beans), those derived from potatoes, those derived from vegetables, those derived from nuts, and those derived from fruits, among which pulse-derived protein is preferred. The pulse-derived protein may preferably be derived from pea, most preferably from yellow pea. Preferable examples of protein derived from cereals include oats-derived protein. It is preferable that the total of pulse-derived protein and cereal-derived protein satisfy the above ranges.

The protein to be incorporated in the solid composition of the present invention may be either an isolated and pure protein or, more preferably, in the form of protein-containing edible plant (preferably pulse and/or cereal). Specifically, the ratio of protein contained in edible plant (preferably pulse and/or cereal) to the total protein content in the solid composition may be typically 50 mass % or more, or 60 mass % or more, or 70 mass % or more, or 80 mass % or more, or 90 mass % or more, especially100 mass %.

The solid composition of the present invention may preferably be characterized in that 50 mass % or more, or 60 mass % or more, or 70 mass % or more, or 80 mass % or more, or 90 mass % or more, especially 100 mass % of each of the protein and starch contents in terms of dry mass basis is derived from pulse and/or cereal, more preferably from the same species of pulse and/or cereal, still more preferably from the same individual(s) of pulse and/or cereal. In addition, 50 mass % or more, or 60 mass % or more, or 70 mass % or more, or 80 mass % or more, or 90 mass % or more, especially 100 mass % of each of the protein and starch contents in terms of dry mass basis are contained in the composition in the form of edible plant.

*Total oil and fat content:

The total oil and fat content in the solid composition of the present invention is not limited, but may be within the range of 0.01 mass % or more but less than 17 mass % in terms of dry mass basis. More specifically, the upper limit may preferably be less than 17 mass %, or less than 15 mass %, or less than 13 mass %, or less than 10 mass %, or less than 8 mass %, or less than 7 mass %, or less than 6 mass %, or less than 5 mass %, or less than 4 mass %, or less than 3 mass %, or less than 2 mass %, or less than 1 mass %, especially less than 0.8 mass %. On the other hand, the lower limit for the total oil and fat content in the solid composition is not particularly restricted, but it may be 0.01 mass % or more in terms of dry mass basis.

On the other hand, the total oil and fat content in the seasoning solution of the present invention is not limited, but may be within the range of 0.01 mass % or more but less than 30 mass % in terms of wet mass basis. More specifically, the upper limit may preferably be less than 30 mass %, or less than 25 mass %, or less than 20 mass %, or less than 15 mass %. On the other hand, the lower limit for the total oil and fat content in the seasoning solution is not particularly restricted, but it may be 0.01 mass % or more in terms of dry mass basis.

The total oil and fat content in solid composition や seasoning solution 等の composition sample herein can be measured by a method, e.g., according to the Japan Standard Tables for Food Composition 2015 (7th revised edition), using the Soxhlet extraction method with diethyl ether.

The origin of the oil and fat content in the solid composition of the present invention and/or in the seasoning solution is not particularly restricted. Examples include plant-derived oil and fat and animal-derived oil and fat, of which plant-derived oil and fat may be preferred. Specifically, the ratio of oil and fat derived from plant (preferably pulse and/or cereal) to the total oil and fat content of the solid composition and/or the seasoning solution in terms of dry mass basis may preferably be 50 mass % or more, particularly 60 mass % or more, or 70 mass % or more, or 80 mass % or more, or 90 mass % or more, especially 100 mass %. Examples of plant-derived oil and fat that can be used include those derived from general species of cereal (including specific species of cereal), those derived from pulse (beans), those derived from potatoes, those derived from vegetables, those derived from nuts, and those derived from fruits, among which pulse-derived oil and fat is preferred. The pulse-derived oil and fat may preferably be derived from pea, most preferably from yellow pea. Preferable examples of oil and fat derived from cereals include oats-derived oil and fat. It is preferable that the total of pulse-derived oil and fat and cereal-derived oil and fat satisfy the above ranges.

The oil and fat to be incorporated in the solid composition of the present invention and/or in the seasoning solution may be either an isolated and pure oil and fat or, more preferably, in the form of protein-containing edible plant (preferably pulse and/or cereal). Specifically, the ratio of oil and fat contained in edible plant (preferably pulse and/or cereal) to the total oil and fat content in the composition may be within the range of 50 mass % or more 100 mass % or less in terms of dry mass basis. More specifically, the ratio may preferably be typically 50 mass % or more, or 60 mass % or more, or 70 mass % or more, or 80 mass % or more, or 90 mass % or more. The upper limit is not particularly restricted, and may be 100 mass %, or typically 100 mass % or less.

The solid composition and/or the seasoning solution of the present invention may preferably be characterized in that 50 mass % or more but 100 mass % or less of the oil and fat content in terms of dry mass basis is derived from pulse and/or cereal. More specifically, 50 mass % or more, or 60 mass % or more, or 70 mass % or more, or 80 mass % or more, or 90 mass % or more, especially 100 mass % of the oil and fat content in terms of dry mass basis is derived from pulse and/or cereal, more preferably from the same species of pulse and/or cereal, still more preferably from the same individual(s) of pulse and/or cereal. In addition, 50 mass % or more, or 60 mass % or more, or 70 mass % or more, or 80 mass % or more, or 90 mass % or more, especially 100 mass % of the oil and fat content in terms of dry mass basis are contained in the solid composition and/or the seasoning solution of the present invention in the form of edible plant.

*Moisture content (dry mass basis moisture content, wet mass basis moisture content):

The dry mass basis moisture content in the solid composition of the present invention is not limited, but may preferably be within the range of 10 mass % or more but 400 mass % or less. More specifically, the upper limit may preferably be 400 mass % or less, or 350 mass % or less, or 300 mass % or less, or 250 mass % or less, or 200 mass % or less, or 150 mass % or less, or 100 mass % or less, or 80 mass % or less, or 60 mass % or less. On the other hand, the lower limit for the dry mass basis moisture content in the solid composition of the present invention is not limited, but from the viewpoint of industrial production efficiency, it may be 10 mass % or more, or 20 mass % or more, or 30 mass % or more.

On the other hand, the wet mass basis moisture content in the seasoning solution of the present invention is not limited, but may be 30 mass % or more but less than 100 mass % may preferably be within the range of. More specifically, the lower limit may preferably be 30 mass % or more, or 40 mass % or more, or 50 mass % or more. On the other hand, the upper limit for the wet mass basis moisture content is not limited, but may be less than 100 mass %, or 90 mass % or less, or 80 mass % or less, or 70 mass % or less.

The term "dry mass basis water content" for various composition samples herein refers to the ratio of the total amount of water in the composition of the present invention which either originates from the raw materials or was added externally to the total amount of solids in the solid paste composition of the present invention. The value can be measured by a method, for example, according to the Japan Standard Tables for Food Composition 2015 (7th revised edition), by heating to 90°C using the decompression heating and drying method. Specifically, an appropriate amount of sample ($W_1$) is put in a pre-weighed weighing vessel ($W_0$) and weighed, the weighing vessel with the lid removed or opened is placed in a reduced pressure electric constant temperature dryer adjusted to a predetermined temperature (more specifically, 90°C) at normal pressure, the door is closed, and the vacuum pump is operated to dry the sample at a predetermined reduced pressure for a predetermined period of time. The vacuum pump is then stopped, dry air is sent to bring the pressure back to normal, the weighing vessel is removed, the lid is put on, the vessel is left to cool in a desiccator, and the mass is then weighed. The method of drying, cooling, and weighing ($W_2$) is repeated until a constant amount is reached, and the water content (water content based on dry weight) (mass %) is determined using the following formula.

[Formula 1]

$$\text{Dry basis water content (g/100g)} = (W_1 - W_2) / (W_2 - W_0) \times 100$$

In the formula, $W_0$ is the mass (g) of the pre-weighed weighing vessel, $W_1$ is the mass (g) of the weighing vessel with the sample before drying, and $W_2$ is the mass (g) of the weighing vessel with the sample after drying.

*Sodium chloride:

The food composition of the present invention may be characterized in that its sodium chloride content is within a predetermined range. Specifically, the upper limit for the sodium chloride content in the food composition of the present invention may preferably be within the range of 0 mass % or more but 1.2 mass % or less in terms of wet mass basis. More specifically, the upper limit may preferably be 1 mass % or less, or 0.7 mass % or less, or 0.5 mass % or less. According to the food composition of the present invention, even when the sodium chloride content is reduced to such a low value, the decrease in elasticity of the starch-containing solid composition can be suppressed, and good quality can be maintained. Furthermore, suppressing the sodium chloride content to such a low value may serve to promote the elution of 2-pentylfuran and other flavor components from the solid composition when consumed (especially when heated), whereby the flavor of the ingredients may be enhanced. On the other hand, the lower limit for the sodium chloride content in the food composition of the present invention may be, although is not limited to, 0 mass % or more, or 0.1 mass % or more, or 0.2 mass % or more, or 0.3 mass % or more, or 0.4 mass % or more in terms of wet mass basis. In particular, setting the sodium chloride content to 0.2 mass % or more may make it possible to provide the resulting solid composition with properties that resist loss of elasticity and spreading during storage at room temperature (20°C in the case of the present invention). The sodium chloride content of the food composition as used herein refers to the ratio of the total mass of sodium chloride contained in the solid composition and the seasoning solution (the sum of the mass of sodium chloride contained in the solid composition and the mass of the seasoning solution) to the total mass of the solid composition and the seasoning solution that constitute the food composition (the sum of the mass of the solid composition and the mass of the seasoning solution).

Although not restricted, the sodium chloride content in the solid composition of the present invention may preferably be within a predetermined range. Specifically, the sodium chloride content in the solid composition of the present invention in terms of wet mass basis may preferably be within the range of 0.1 mass % or more but 2 mass % or less. More specifically, the upper limit may be 2 mass % or less, or 1.5 mass % or less, or 1 mass % or less, or 0.7 mass % or less, or 0.5 mass % or less, while the lower limit may be 0.1 mass % or more, or 0.2 mass % or more.

Although not restricted, the sodium chloride content in the seasoning solution of the present invention may preferably be within a predetermined range. Specifically, the sodium chloride content in the seasoning solution of the present invention in terms of wet mass basis may preferably be within the range of 0.1 mass % or more but 2 mass % or less. More specifically, the upper limit may be in terms of wet mass basis 2 mass % or less, or 1.5 mass % or less, or 1 mass % or less, or 0.7 mass % or less, or 0.5 mass % or less, while the lower limit may be 0.1 mass % or more, or 0.2 mass % or more.

In the present invention, the sodium chloride contents in the solid composition and in the seasoning solution may be determined, for example, according to the "Salt equivalent" section in the Japan Standard Tables for Food Composition 2015 (7th revised edition), by measuring the amount of sodium using the atomic absorption method and multiplying the measured amount by 2.54. The sodium chloride content in the whole food composition can also be determined from the sodium chloride content and mass of each of the solid composition and the seasoning solution constituting the food composition as the weighted average.

*Other ingredients:

The solid composition and/or the seasoning solution of the present invention may contain, in addition to the various ingredients mentioned above, any one or two other ingredients. Examples of other ingredients include seasonings and food additives.

Examples of seasonings and food additives that may be contained in the solid composition and/or the seasoning solution of the present invention include: soy sauce, miso (Japanese fermented soybean paste), alcohols, sugars (e.g., glucose, sucrose, fructose, glucose-fructose liquid sugar, glucose-fructose liquid sugar, etc.), sugar alcohols (e.g., xylitol, erythritol, maltitol, etc.), artificial sweeteners (e.g., sucralose, aspartame, saccharin, acesulfame K, etc.), minerals (e.g., calcium, potassium, sodium, iron, zinc, magnesium, etc., and their salts), flavoring agents, pH adjusters (e.g., sodium hydroxide, potassium hydroxide, lactic acid, citric acid, tartaric acid, malic acid and acetic acid), cyclodextrins, antioxidants (e.g., vitamin E, vitamin C, tea extract, green coffee bean extract, chlorogenic acid, spice extract, caffeic acid, rosemary extract, vitamin C palmitate, rutin, quercetin, peach extract, sesame extract, etc.), emulsifiers (e.g., glycerin fatty acid esters, acetic acid monoglycerides, lactic acid monoglycerides, citric acid monoglycerides, diacetyl tartaric acid monoglycerides, succinic acid monoglycerides, polyglycerin fatty acid esters, polyglycerin concentrated linosylate esters, chiraya extracts, soybean saponins, chia seed saponins, sucrose fatty acid esters, lecithin, etc.), colorants, thickening stabilizers, etc.

However, in view of the recent increase in nature consciousness, the composition of the present invention may preferably be characterized in that it does not contain at least one, preferably two, more preferably three, of the so-called emulsifiers, colorants, and thickening stabilizer (e.g., those listed in the "Table of food additive substance names for labeling" section of the "Pocket Book of Food Additives Labeling (2011 edition)" as "colorants," "thickening stabilizers," and "emulsifiers"). In particular, the solid composition and/or the seasoning solution of the present invention (preferably at least the seasoning solution) may preferably be substantially free (or free) of xanthane gum, which is a representative thickening stabilizers.

*Requirements relating to viscosity by rapid visco-analyzer:

According to an embodiment, the food composition of the present invention may preferably be characterized I that various kinds of viscosity measured using a rapid visco-analyzer (RVA) in accordance with [Procedure a] below (hereinafter also referred to as the "RVA viscosity") satisfy predetermined requirements.

[Procedure a] A sample is measured for viscosity using a rapid visco-analyzer, while the sample is heated from 50 °C to 95 °C, maintained for 3 minutes, then cooled to 50 °C, and maintained for 1 minute.

The rapid visco-analyzer (RVA) is a device that measures the irreversible viscosity profile of a sample as it is stirred and heated up and down under a given temperature profile. Any device that can raise the temperature of the object to 95°C can be used as the RVA, a specific example being RVA4800 manufactured by Perten. The measuring principle of this device is that a sample is placed in an aluminum cup (approx. 70 mL volume) for measurement, and while raising and lowering the temperature under a predetermined temperature profile, the sample is agitated by rotating two paddles (blades) of about 13 mm x 19 mm, and its viscosity characteristics are measured based on the resistance applied to the paddles. If the viscosity of the sample is high, the resistance applied to the paddles will be high, while if the viscosity is low, the resistance will be low. This makes it possible to measure the viscosity characteristics of the sample based on the resistance applied to the paddles.

The seasoning solution of the present invention is characterized in that when it is subjected to measurement in accordance with [Procedure a] above, the final viscosity at the time the temperature is decreased to 50 °C (hereinafter also referred to as "RVA final viscosity (50 °C)") is within a predetermined range. According to an embodiment, the viscosity may preferably be within the range of more than 5.0 cP but 550 cP or less. Specifically, upper limit for the RVA final viscosity (50 °C) of the seasoning solution of the present invention may preferably be 550 cP or less, or 520 cp or less, or 500 cP or less, or 490 cp or less, or 480 cP or less, or 450 cP or less, or 420 cp or less, or 400 cp or less, or 380 cp or less. When this value satisfies the predetermined upper limits mentioned above, desirable flavor components in the solid composition may be more likely to flow out of the solid composition into the seasoning solution. On the other hand, the lower limit for the RVA final viscosity (50 °C) of the seasoning solution of the present invention may preferably be more than 5.0 cP, or 6.0 cP or more, or 7.0 cP or more, or 9.0 cP or more, or 10.0 cP or more, or 11.0 cP or more. When this value satisfies the predetermined lower limits mentioned above, it may become easier to prevent the extraction of undesirable components in the solid composition.

The RVA viscosity of the seasoning solution, which corresponds to the liquid portion of the food composition of the present invention, can be measured by weighing a 25.0 g wet mass of the seasoning solution sample into an aluminum cup for RVA measurement, and subjecting it directly to the RVA viscosity measurement in accordance with [Procedure a] above. On the other hand, the RVA viscosity of the solid composition or the precursor composition, which corresponds to the solid portion of the food composition of the present invention, can be measured by crushing a sample of the solid composition or the precursor composition with a dry mass of 3.5 g (to a size of, e.g., 100 mesh pass (150 $\mu$m mesh opening) and 120 mesh on (125 $\mu$m mesh opening)), weighing it into an aluminum cup for RVA measurement, adding distilled water to make the total weight 28.5 g to thereby prepare a 14 mass % sample water slurry (also simply referred to as "dry milled slurry"), and subjecting it to the RVA viscosity measurement in accordance with [Procedure a] above.

*2-Pentylfuran peak measurement by DHS-GC/MS analysis:

The food composition of the present invention may preferably be characterized in that the 2-pentylfuran (CAS.No.3777-69-3, 2-Pentylfuran) content satisfies specific conditions. The content or peak area of 2-pentylfuran herein may be measured by dynamic headspace gas chromatography-mass spectrometry (DHS-GC/MS).

The DHS-GC/MS method is a method in which a measurement sample is volatilized by the DHS (dynamic headspace) method (a dynamic extraction method in which volatile components in the gas phase are forcibly purged with inert gas and collected on an adsorbent), followed by measurement by gas chromatography mass spectrometry (GS/MS). As a specific procedure, for example, a small amount (1 g) of sample can be measured into a 10-mL flat-bottomed vial, sealed, and volatilized by nitrogen gas purge, then introduced into a gas chromatography analyzer for analysis by adsorption with an adsorption resin (such as Tenax column) appropriate for the nature of the analyzed component and processed by a heat desorption system. In order to measure the content of a component in a sample, the sample and a standard sample diluted to a desired content are analyzed, the confirmatory ion peak area values of both samples are ascertained, and the values are compared to determine the content of the relevant component in the sample.

After the above analysis, a portion of the sample is subjected to a mass spectrometer to obtain a mass spectrum, and the retention time of the component is confirmed with the component-related ions of 2-pentylfuran (2-pentylfuran: $m/z$ = 81, 82, 138). A quadrupole type 5977 Mass Selective Detector (Agilent) is used as the mass spectrometer (MS). Ionization method and ionization voltage are performed under the conditions of ionization method: EI+, ionization voltage: 70 eV. Results are captured in scan mode, and mass spectral analysis can be performed by identifying ions characteristic of the component (2-pentylfuran: $m/z$ = 81, 82, 138) using them as related ions, and by identifying the retention time when all these related ions are detected in the standard. The term "$m/z$" as used herein refers to the value detected in the range of -0.3 to +0.7 at the $m/z$ center value of each component. For example, $m/z$ = 81 represents the cumulative ion peak area detected at 80.7 to 81.7.

Specifically, a sample of the solid composition and/or seasoning solution is processed (usually at 1000 rpm for about 15 seconds) using, for example, a small Hiscotron (homogenizer NS-310E3 manufactured by Microtek Nithion) until it reaches a porridge-like consistency, and then submitted for analysis by the DHS-GC/MS method. The specific conditions for DHS-GC/MS analysis are, for example, as follows. This analysis may be referred to as "one-dimensional GC/MS analysis" in contrast to the two-dimensional GC/MS analysis described below.

[One-dimensional DHS-GC/MS conditions]

(Dynamic head space (dynamic headspace: DHS) injection method)

*Instrument: Agilent 7890B (GC), 5977B (MS)

Gester MultiPurpose Sampler (auto-sampler)

    *Absorption resin: TENAX
    *Incubation temperature: 80 °C
    *Nitrogen gas purge amount: 60mL
    *Nitrogen gas purge flow rate: 10mL/minute
    *TDU: [30 °C] - [210 °C/minute] - [240 °C (3 minutes)]
    *CIS: [10 °C] - [12 °C /second] - [240°C]

(Liner filler: TENAX)

    *Column: Gester DB-WAX (30m x 250μm x 0.25μm)
    *Column temperature: [40 °C (3 minutes)]-[5 °C/minute]-[240 °C (7 minutes)]
    *Carrier gas: He
    *Transfer line: 250 °C
    *Ion source temperature: 230°C
    *Scan parameter: $m/z$ = 28.7 to 300
    *Split: none

A sample of 2-pentylfuran of known content (Tokyo Kasei Kogyo Co., Ltd.) diluted in distilled water to an appropriate content and a sample are subjected to analysis under the conditions described above. Although there are some deviations depending on the measurement conditions, analysis based on the mass spectral pattern of the mass spectrometer makes it possible to quantify the components in the sample by comparing the peak area integration results of the amount of confirmatory ions (2-pentylfuran: $m/z$ = 138) between the diluted sample and the sample near the retention time of the peak that seems to be the target component, in comparison with the standard product retention time.

Furthermore, it is particularly desirable to perform one-dimensional GC/MS analysis under the above conditions and then perform two-dimensional gas chromatography using a column with different properties by heart-cutting around the retention time of the peak that is thought to be the target component, as this allows more precise quantification of the content of the component in question. Specifically, two-dimensional gas chromatography analysis can be performed under the following conditions. The retention time in the two-dimensional GC/MS analysis is calculated with the column temperature rise start point as 0 minutes, so the value will be different from that in the one-dimensional GC/MS analysis, but the retention time can be determined by comparing the analysis results with those of the standard product.

[Two-dimensional GC/MS conditions]

*CTS: [-150 °C]-[10 °C / seconds]-[250 °C]
*Column: Gester DB-5 (10 m x 180 μm x 0.4 μm)
*Column temperature: [40 °C (0 minute)] - [40 °C/ minute] - [240 °C (15 minutes)]
*Carrier gas: He

The 2-pentylfuran content in the solid composition of the present invention may preferably be, although is not limited to, within the range of 1 mass ppb or more but 50 mass ppm or less in terms of dry mass basis. More specifically, the lower limit may preferably be 1 mass ppb or more, or 3 mass ppb or more, or 5 mass ppb or more, or 7 mass ppb or more, or 10 mass ppb or more, or 15 mass ppb or more. When this content satisfies the lower limits mentioned above, it may become easier to achieve the effect of enhancing the flavor of the ingredients. On the other hand, the upper limit is not limited, but may be 50 mass ppm or less, or 47 mass ppm or less, or 40 mass ppm or less, or 30 mass ppm or less, or 20 mass ppm or less, or 15 mass ppm or less, or 10 mass ppm or less, or 5 mass ppm or less, or 3 mass ppm or less, or 2 mass ppm or less, or 1.2 mass ppm or less, or 0.5 mass ppm or less, or 0.2 mass ppm or less, or 0.1 mass ppm or less, or 0.07 mass ppm or less in terms of dry mass basis. When this content satisfies the upper limits mentioned above, it may become easier to achieve the effect of imparting desirable flavor components derived from pulse and/or cereal to the seasoning solution. Unless otherwise specified in the present invention, the term "ppb" stands for "mass ppb," and the term "ppm" stands for "mass ppm."

The 2-pentylfuran content in the seasoning solution of the present invention may preferably be within the range of 1 mass ppb or more but 50 mass ppm or less in terms of wet mass basis. More specifically, the lower limit may preferably be 1 mass ppb or more, or 3 mass ppb or more, or 5 mass ppb or more, or 7 mass ppb or more, or 10 mass ppb or more, or 15 mass ppb or more. When this content satisfies the lower limits mentioned above, the effect of enhancing the flavor of the ingredients is easily achieved. On the other hand, the upper limit may preferably be, although is not limited to, 50 mass ppm or less, or 47 mass ppm or less, or 40 mass ppm or less, or 30 mass ppm or less, or 20 mass ppm or less, or 15 mass ppm or less, or 10 mass ppm or less, or 5 mass ppm or less, or 3 mass ppm or less, or 2 mass ppm or less, or 1.2 mass ppm or less, or 0.5 mass ppm or less, or 0.2 mass ppm or less, in terms of wet mass basis.

The food composition of the present invention may preferably be characterized in that the 2-pentylfuran peak area ratio (m/z=138) in the seasoning solution of the solid composition is equal to or lower than a specific ratio. The term "peak area ratio" as used herein can be calculated from the value obtained by multiplying the peak area of each m/z (m/z = 138 for 2-pentylfuran) obtained by DHS-GC/MS) measurement of each solid composition and seasoning solution by the wet mass ratio to the total food composition. The "peak area ratio" becomes lower for compositions that contain relatively more solid compositions with characteristics that make its components more likely to volatilize even after heating in liquid. For example, in a composition containing 30% in terms of wet mass basis of the solid composition and 70% in terms of wet mass basis of the seasoning solution, if the peak area (m/z = 138) of the solid composition is 1000 and that of the seasoning solution (m/z = 138) is 100, then the ratio of the 2-pentylfuran peak area to the solid composition is {(100 x 0.7)/(1000 x 0.3)} = 0.233. Specifically, the ratio may preferably be within the range of 0 or more 100 or less. More specifically, the upper limit for the ratio may preferably be 100 or less, or 90 or less, or 85 or less, or 80 or less, or 70 or less, or 60 or less, or 50 or less, or 40 or less, or 30 or less, or 25 or less, or 20 or less, or 15 or less, or 10 or less, or 6 or less, or 3 or less, or 2 or less. When this ratio satisfies the upper limits mentioned above, the balance of the 2-pentylfuran contents in the solid composition and in the seasoning solution becomes favorable, making it easier to obtain food compositions with excellent flavor balance. On the other hand, the lower limit for the ratio is not particularly restricted, but may typically be 0 or more, or 0.001 or more, or 0.002 or more, or 0.003 or more. When this content satisfies the lower limits mentioned above, it becomes easier to obtain a food composition with excellent flavor balance.

The 2-pentylfuran peak areas in the solid composition and in the seasoning solution of the food composition can be measured for each of the solid composition and the seasoning solution using the one-dimensional DHS-GC/MS method described above, and the peak area of m/z = 138 at the retention time when m/z = 81, 82 and 138 are both significantly detected.

The content ratio of the 2-pentylfuran content in the seasoning solution to that in the solid composition in terms of wet mass basis may be equal to or lower than a specific ratio. The term "content ratio" as used herein can be calculated from the values obtained by multiplying the 2-pentylfuran content in the solid composition and that of the seasoning solution by the wet mass ratio to the total food composition. The "content ratio" becomes lower for compositions that contain relatively more solid compositions that maintains more of its components even after heating in liquid. Specifically, the ratio may preferably be within the range of 0 or more 100 or less. More specifically, the upper limit for the ratio may preferably be 100 or less, 80 or less, or 60 or less, or 50 or less, or 40 or less, or 30 or less, or 25 or less, or 20 or less, or 15 or less, or 10 or less, or 6 or less, or 3 or less, or 2 or less. On the other hand, the lower limit for the ratio is not particularly restricted, but may typically be 0 or more, or 0.001 or more, or 0.002 or more, or 0.003 or more.

The 2-pentylfuran contained in the food composition of the present invention may be contained in food ingredients, e.g., pulse and/or cereal as raw materials for the solid composition or edible plants as raw materials for the seasoning solution, or may be externally added separately from the food ingredients during the production of the food composition of the present invention, or may be generated when producing the food composition of the present invention. Alternatively, it may be the combination of 2-pentylfuran from two or more of these sources, as long as it satisfies the aforementioned predetermined content and/or percentage. When 2-pentylfuran is externally added separately from the food ingredients during the production of the food composition of the present invention, it may be added as a purified, extracted, high-purity 2-pentylfuran reagent or in the form of some composition containing 2-pentylfuran. However, since the food composition of the present invention is to be served for eating and drinking, the majority (more preferably, all) of the 2-pentylfuran contained in the composition may preferably be derived from some food ingredient, more preferably from edible plants.

*Concentration:

The food composition of the present invention may be consumed as is (at room temperature or heated), or may be consumed after the seasoning solution may be concentrated or evaporated by heating. In the latter case, heating conditions are not particularly limited, but the heating temperature may be within the range of 50°C or more but 100°C or less, and the treatment time may be within the range of 30 seconds or more but 20 minutes or less. More specifically, the heating temperature may be 50 °C or more, or 60 °C or more, or 70 °C or more, or 80 °C or more, or 85 °C or more, or 90 °C or more, or 95 °C or more, and usually 100 °C or less, and the heating period may be 30 seconds or more, or 1 minute or more, or 2 minutes or more, and 20 minutes or less, or 10 minutes or less, or 5 minutes or less. The concentration rate of the seasoning solution is also not limited, but may be 90 mass % or less, 80 mass % or less, 70 mass % or less, 60 mass % or less, 50 mass % or less, 40 mass % or less, 30 mass % or less, 20 mass % or less, or 10 mass % or less, in terms of the ratio to the mass before the heating. Such food compositions intended to be consumed after the seasoning solution is concentrated or evaporated by heating are also subject to the present invention. In this case, he various provisions of the present invention described above may not be satisfied by the food composition after the concentration of the seasoning solution by heating, but may preferably be satisfied at least by the food composition before the heating. In general, however, heating temperature and the heating time generally have an interdependent relationship with each other. That is, the higher the heating temperature, the shorter the heating time, while the longer the heating time, the lower the heating temperature. Therefore, the heating temperature and the heating time may be set to within their respective appropriate ranges in consideration of these relationships.

[II. Production Method of Food Composition]

*Summary:

Another embodiment of the present invention relates to a method for producing the food composition of the present invention, comprising steps (i) to (v) mentioned below. Although not restricted, the production method of the present invention makes it possible to produce the food composition of the present invention efficiently. This method may also be referred to as "the production method of the present invention."

(i) The step of preparing a precursor seasoning solution having specific characteristics.
(ii) The step of preparing a precursor composition containing starch derived from pulse and/or cereal and having specific characteristics.
(iii) The step of heating the precursor composition from step (ii) in aqueous medium to obtain a solid composition.
(iv) The step of adding an extract of the precursor composition from step (ii) (hereinafter also referred to simply as the "extract") to the precursor seasoning solution from step (i) to thereby obtain a seasoning solution.
(v) The step of placing the solid composition from step (iii) in the seasoning solution from step (iv).

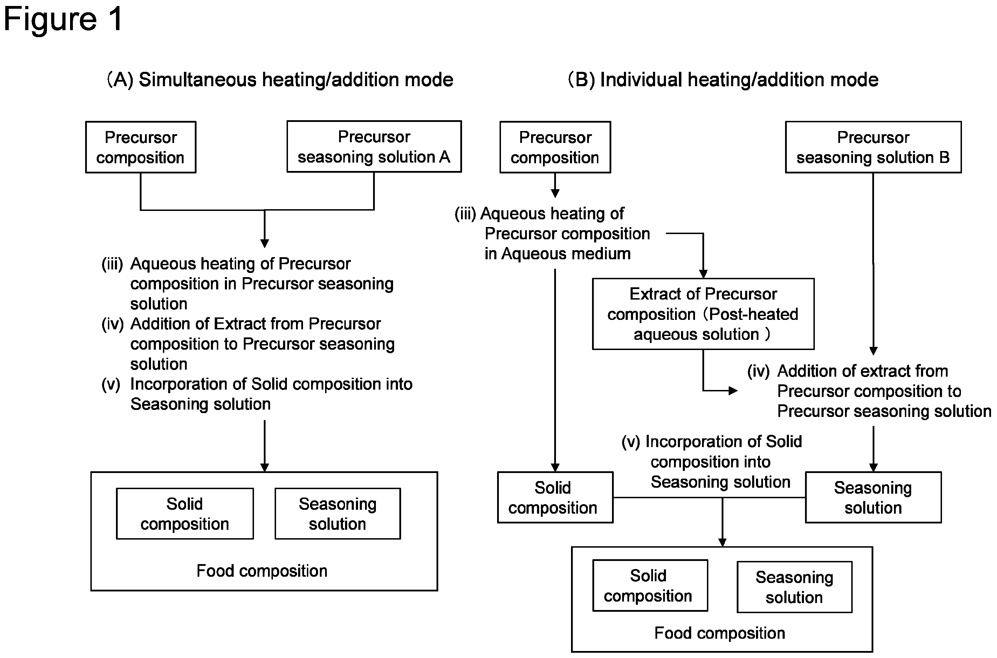

Steps (i) through (v) of the production method of the present invention may be carried out in any order without any restriction, except that at least the step (ii) of preparing the precursor composition should be carried out prior to the step (iii) of heating the precursor composition in aqueous medium to obtain a solid composition and, along with the step (i) of preparing a precursor seasoning solution, should be carried out prior to the step (iv) of adding an extract of the precursor composition to the precursor seasoning solution to thereby obtain a seasoning solution. These steps may be implemented sequentially, or two or more of these steps may be implemented simultaneously. However, there are two main embodiments for implementing steps (iii) through (v) in particular, which are illustrated in Figure 1.

According to the mode shown in Figure 1(A), the precursor seasoning solution is used as the aqueous medium for the aqueous heating of the precursor composition at step (iii). According to this mode, the precursor composition is heated in the precursor seasoning solution while the extract of the precursor composition is transferred directly into the precursor seasoning solution, making it possible to achieve the conversion of the precursor composition into the solid composition in step (iii), the conversion of the precursor composition into the seasoning solution in step (iv), and the inclusion of the solid composition into the seasoning solution in step (v) simultaneously (hereinafter also referred to as "simultaneous heating/addition mode").

On the other hand, according to the mode shown in Figure 1(B), an aqueous medium other than the precursor seasoning solution is used as the aqueous medium for the aqueous heating of the precursor composition at step (iii), while addition of the extract of the precursor composition to the precursor seasoning solution is carried out separately. In this case, the aqueous medium after the heating in step (iii) (also referred to as the "post-heated aqueous solution") contains components extracted from the precursor composition. This post-heated aqueous solution may be used as the extract of the precursor composition and added to the precursor seasoning solution to achieve step (iv). Then, as step (v), the solid composition obtained in step (iii) can be immersed in the seasoning solution from step (iv) to prepare the food composition (hereinafter also referred to as "individual heating/addition mode"). In the case of a ready-to-eat preparation product containing the precursor seasoning in the form of powder or concentrated liquid, the post-heated aqueous solution at step (iii) may be combined with the precursor seasoning to prepare the seasoning solution in which the straight-type liquid precursor seasoning solution is combined with the extract of the precursor composition, whereby step (i) and step (iv) are achieved simultaneously.

In the following explanation, (A) the simultaneous heating/addition mode is explained first, and then (B) the individual heating/addition mode is explained, focusing mainly on the differences from (A). However, it should be noted that the production method of the present invention is not limited to these modes (A) and (B), but can be carried out in any mode as long as the food composition of the present invention containing the solid composition in the seasoning solution described above is finally produced.

(A) Simultaneous heating/addition mode:

As mentioned above, (A) the simultaneous heating/addition mode is a mode in which the precursor seasoning solution is used as the aqueous medium for heating the precursor composition in step (iii), and the precursor composition is heated in the precursor seasoning solution to transfer the extract of the precursor composition directly into the precursor seasoning solution, whereby the conversion of the precursor composition into the solid composition in step (iii), the conversion of the precursor composition into the seasoning solution in step (iv), and the inclusion of the solid composition into the seasoning solution in step (v) are achieved simultaneously.

*Step (i): Preparation of a precursor seasoning solution

This step is to prepare a precursor seasoning solution. The term "precursor seasoning solution" as used herein refers to a composition that functions as a precursor to the seasoning solution of the present invention, i.e., that can be converted into the seasoning solution of the present invention by adding an extract of the precursor composition. The constituents and properties of the precursor seasoning solution differ between (A) the simultaneous heating/addition mode and (B) the individual heating/addition mode. In this disclosure, the precursor seasoning solution used in (A) simultaneous heating/addition mode is referred to as the "the precursor seasoning solution A," while the precursor seasoning solution used in (B) the individual heating/addition mode is referred to as the "precursor seasoning solution B." The following description will be made to the precursor seasoning solution A, but in contexts where no particular distinction is made between the precursor seasoning solution A and the precursor seasoning solution B, they may be referred to collectively as "the precursor seasoning solution".

According to mode (A), the precursor seasoning solution A is used as an aqueous medium for heating the precursor composition. Here, the precursor composition is immersed in the precursor seasoning solution A and heated (step (iii) described below), the components extracted from the precursor composition are directly transferred into (i.e., added to) the precursor seasoning solution A, which is thereby converted into the seasoning solution of the present invention (step (iv) described below). In addition, depending on the embodiment of the precursor composition, which will be described later, there will be a migration of moisture from the precursor seasoning solution A to the precursor composition or from the precursor composition to the precursor seasoning solution A.

Therefore, the constituents and properties of the precursor seasoning solution A are basically the same as those of the seasoning solution of the present invention as the final product. However, it may be preferable to make slight modifications thereto, in consideration of the migration of components from the precursor composition (extracts of the precursor composition) and the migration of moisture to and from the precursor composition during heating in water. Specifically, the following are suggested.

The sodium chloride content of in the precursor seasoning solution may preferably be within a predetermined range. Specifically, when the lower limit for the sodium chloride content of the precursor seasoning solution is set at a predetermined value or higher, desirable flavor components may be eluted from the solid composition ultimately contained in the seasoning solution (especially during heating and eating), and the effect of enhancing the flavor of the ingredients may be achieved. The flavor components leached from the solid composition may also coat the composition to enhance the flavor of the ingredients. In addition, the flavor components leached from the solid composition may coat the composition to enhance the flavor of the ingredients, whereby the effect of enhancing the flavor of the ingredients may be achieved. Although the reason for this is not clear, but it is speculated that suppressing the sodium chloride content of the seasoning solution serves to prevent the surface of the solid composition from hardening and thereby promote the leakage of useful ingredients from the solid composition. Specifically, the content may preferably be within the range of 0.1 mass % or more but 2.5 mass % or less. More specifically, the lower limit for the sodium chloride content in the precursor seasoning solution in terms of wet mass basis may preferably be 0.1 mass % or more, or 0.2 mass % or more. On the other hand, the upper limit for the sodium chloride content in the precursor seasoning solution is not limited, but may be 2.5 mass % or less, or 2.3 mass % or less, or 2.0 mass % or less, or 1.5 mass % or less, or 1.0 mass % or less, or 0.7 mass % or less, or 0.5 mass % or less.

When the precursor seasoning solution is measured using the rapid visco-analyzer (RVA) in accordance with [Procedure a] above, the final viscosity of the precursor seasoning solution at the time the temperature is decreased to 50 °C (the RVA final viscosity (50 °C) before correction for NaCl concentration) is not restricted, but may preferably be within a predetermined range. According to an embodiment, this value may preferably be within the range of more than 5.0 cp but 500 cp or less. More specifically, the upper limit for the RVA final viscosity (50 °C) of the precursor seasoning solution may preferably be 500 cP or less, or 480 cP or less, or 450 cP or less, or 400 cP or less. When this value satisfies the predetermined upper limits mentioned above, desirable flavor components in the precursor composition may easily leach out of the precursor composition into the precursor seasoning solution. On the other hand, the lower limit for the RVA final viscosity (50 °C) of of the precursor seasoning solution is not limited, but may be more than 5.0 cP, or 6.0 cP or more, or 7.0 cP or more. When this value satisfies the predetermined lower limits mentioned above, it may become easier to prevent the extraction of undesirable components in the solid composition.

When the precursor seasoning solution is measured in accordance with [Procedure a] above, the parameter for the precursor seasoning solution calculated by multiplying the RVA final viscosity (when cooled to 50 °C) by {(0.1 mass %)/(the mass % value of the sodium chloride content in the precursor seasoning solution in terms of wet mass basis)} may preferably be, although is not limited to, within a predetermined range. The term "corrected value based on the sodium chloride content in terms of wet mass basis" as used herein refers to a value corrected assuming that the sodium chloride content in the precursor seasoning solution is 0.1 mass % in terms of wet mass basis. Specifically, when the precursor seasoning solution is measured in accordance with [Procedure a] above, the parameter for the precursor seasoning solution calculated by multiplying the RVA final viscosity (when cooled to 50 °C) by 0.1/x (where x refers to the sodium chloride content in the precursor seasoning solution in terms of wet mass basis (mass %). For example, when x = 10 mass %, then 0.1/x is calculated as 0.1/10=0.01) (hereinafter also referred to as the "corrected RVA final viscosity (50 °C)" or the "RVA final viscosity (50 °C) of the precursor seasoning solution corrected for the NaCl concentration") may preferably be within the range of more than 0 cp but 450 cp or less. More specifically, this parameter may preferably be more than 0 cP, or 0.2 cP or more, or 0.4 cP or more, or 0.6 cP or more, or 0.8 cP or more, or 1.0 cP or more, or 1.3 cP or more, or 1.6 cP or more, or 2.0 cP or more, or 3.0 cP or more, or 4.0 cP or more, or 5.0 cP or more. When this value satisfies the predetermined lower limits mentioned above, it may become easier to prevent the extraction of undesirable components in the solid composition. On the other hand, the upper limit for the corrected RVA final viscosity (50 °C) may be, although is not limited to, 450 cP or less, or 400 cP or less, or 350 cP or less, or 300 cP or less, or 250 cp or less, or 200 cp or less. When this value satisfies the predetermined upper limits mentioned above, desirable flavor components in the precursor composition may easily flow out of the precursor composition to the precursor seasoning solution. It may especially be preferable that the precursor seasoning solution A satisfies this requirement. However, since this ratio may also be maintained by dilution or concentration of the seasoning solution, the seasoning solution may satisfy this requirement, or the precursor seasoning may satisfy this requirement.

The precursor seasoning solution may contain protein. The protein content in the seasoning solution of the present invention in terms of wet mass basis may be within the range of 0.1 mass % or more but 10 mass % or less. More specifically, the lower limit in terms of wet mass basis may preferably be 0.1 mass % or more, or 0.2 mass % or more, or 0.3 mass % or more, or 0.5 mass % or more, or 1 mass % or more. On the other hand, the upper limit for the protein content of the precursor seasoning solution is not particularly restricted, but may be in terms of wet mass basis for example 10 mass % or less, or 8 mass % or less, or 6 mass % or less, or 4 mass % or less.

The total oil and fat content in the precursor seasoning solution in terms of wet mass basis may be within the range of 0.01 mass % or more but less than 30 mass %. More specifically, the upper limit is not limited, but may preferably be less than 30 mass %, or less than 25 mass %, or less than 20 mass %, or less than 15 mass %, in terms of wet mass basis. On the other hand, the lower limit for the total oil and fat content in the precursor seasoning solution is not limited, but may be 0.01 mass % or more in terms of dry mass basis.

The moisture content of the precursor seasoning solution in terms of wet mass basis may be within the range of 30 mass % or more but less than 100 mass %. More specifically, the lower limit is not limited, but may be 30 mass % or more, or 40 mass % or more, or 50 mass % or more, in terms of wet mass basis. On the other hand, the upper limit for the wet mass basis moisture content of the precursor seasoning solution is not limited, but may be less than 100 mass %, or 90 mass % or less, or 80 mass % or less, or 70 mass % or less.

The method for preparing the precursor seasoning solution in this step is also not limited. For example, an edible-plant processed product (preferably powders thereof) may be mixed with other ingredients that are optionally used (e.g., other food ingredients, seasonings, food additives, etc.) in an aqueous medium such as water. The mixing method is also not limited. For example, ordinary agitating equipment can be used for mixing.

*Particle diameter of edible plants (insoluble dietary fiber-localizing sites)

When the seasoning solution of the present invention contains a processed product of edible plant, the edible plant (containing, e.g., its insoluble dietary fiber-localizing sites) may preferably undergo micronization processing before being used for the preparation of the precursor seasoning solution preparing in step (i). It may especially be preferred that the seasoning solution of the present invention contains insoluble dietary fiber-localizing sites of an edible plant, since the resulting seasoning solution of the present invention may exhibit the effect of enhancing viscosity. Although the principle behind this is unknown, it is possible that pectin and other components contained with insoluble dietary fiber may be responsible for the viscosity.

When insoluble dietary fiber-localizing sites are subjected to micronization processing, the insoluble dietary fiber-localizing sites may be separated before undergoing micronization processing, or a food material containing the insoluble dietary fiber-localizing sites is subjected to micronization processing. However, it may be preferable to separate some or all of the insoluble dietary fiber-localizing sites that are difficult to crush from the other sites before being subjected to micronization processing.

The seasoning solution of the present invention may preferably contain both a micronization processed product of insoluble dietary fiber-localizing sites and the other sites belonging to the same species of food material. In addition, the micronization processed product of insoluble dietary fiber-localizing sites may be prepared by separating insoluble dietary fiber-localizing sites from a food material and subjecting them to micronization processing before incorporation into the precursor seasoning solution. Alternatively, a food material containing insoluble dietary fiber-localizing sites may be subjected to micronization processing before incorporation into the precursor seasoning solution.

When carrying out micronization processing of an edible plant (containing, e.g., its insoluble dietary fiber-localizing sites), the micronization may preferably be carried out until the modal diameter after disturbance is adjusted to within a predetermined range. Specifically, the modal particle diameter after disturbance may preferably be within the range of 0.3 $\mu$m or more 1000 $\mu$m or less. More specifically, the upper limit may preferably be 1000 $\mu$m or less, or 900 $\mu$m or less, or 800 $\mu$m or less, or 700 $\mu$m or less, or 600 $\mu$m or less, or 500 $\mu$m or less, or 400 $\mu$m or less, or 300 $\mu$m or less, or 200 $\mu$m or less. The lower limit is not particularly restricted, but may preferably be 0.3 $\mu$m or more, or 1.0 $\mu$m or more, or 3.0 $\mu$m or more, or 5.0 $\mu$m or more, or 6.0 $\mu$m or more, especially 7.0 $\mu$m or more.

When carrying out micronization processing of an edible plant (containing, e.g., its insoluble dietary fiber-localizing sites), the micronization may preferably be carried out until the particle diameter after disturbance $d_{50}$ is adjusted to within a predetermined range. Specifically, the particle diameter after disturbance $d_{50}$ may preferably be within the range of 1 $\mu$m or more 900 $\mu$m or less. More specifically, the upper limit may preferably be 900 $\mu$m or less, or 800 $\mu$m or less, or 700 $\mu$m or less, or 600 $\mu$m or less, or 500 $\mu$m or less, or 400 $\mu$m or less, or 300 $\mu$m or less, or 200 $\mu$m or less. The lower limit is not particularly restricted, but may preferably be 1 $\mu$m or more, or 5 $\mu$m or more, or 7 $\mu$m or more.

The pulverization conditions used for the micronization processing are not limited. The temperature during pulverization is also not limited, and may be high-temperature, room temperature, or low-temperature pulverization. The pressure during the pulverization and powdering process is not limited, and may be chosen from high pressures, normal pressures, and low pressures. Examples of devices for the pulverization process include, but are not limited to, blenders, mixers, mills, kneaders, crushers, disintegrators, and grinders. Specific examples that can be used include, for example, media stirring mills such as dry bead mills ball mills (rolling, vibrating, etc.), jet mills, high-speed rotating impact mills (pin mills, etc.), roll mills, hammer mills, etc.

When carrying out micronization processing of insoluble dietary fiber-localizing sites, the specific surface area per unit volume [m$^2$/mL] of the particles in the micronization processed product of insoluble dietary fiber-localizing sites (microparticles and microparticle complexes) before and after the application of a disturbance (i.e., before and after ultrasonication) may preferably satisfy the following requirement. Specifically, the micronization processed product of insoluble dietary fiber-localizing sites according to the present invention may preferably contain a large number of microparticle complexes in the undisturbed state (i.e., before ultrasonication), and its specific surface area per unit volume [$m^2$/mL] may preferably increase before and after the disturbance.

Although not restricted, the ratio of the specific surface areas per unit volume [$m^2$/mL] in the particles (microparticles and microparticle complexes) in the micronization processed product of insoluble dietary fiber-localizing sites according to the present invention before and after the application of a disturbance (i.e., before and after ultrasonication), i.e., {(specific surface area per unit volume before ultrasonication)/(specific surface area per unit volume after ultrasonication)} may preferably satisfy a predetermined range. This value may preferably be within the range of 0.10 or more but 10.0 or less. More specifically, the upper limit for this value may preferably be, although is not limited to, 10.0 or less, or 8.0 or less, or 6.0 or less, or 4.0 or less, or 2.0 or less. When this value satisfies the upper limits above, dietary fibers are complexed with each other so as to be easily crumbled, resulting in a desirable texture. On the other hand, the lower limit may preferably be 0.10 or more, particularly 0.20 or more, or 0.30 or more, or 0.40 or more, especially 0.50 or more may preferably be.

Although not restricted, the specific surface area per unit volume of the particles (microparticles and microparticle complexes) in the micronization processed product of insoluble dietary fiber-localizing sites according to the present invention before disturbance (i.e., before ultrasonication) may preferably be within the range of 0.01$m^2$/mL or more but 1.00$m^2$/mL or less. More specifically, the upper limit may preferably be 1.00$m^2$/mL or less, or 0.90$m^2$/mL or less, or 0.80$m^2$/mL or less. When the specific surface area satisfies these upper limits, the microparticles may preferably form sufficient complexes, whereby the effect of improved storage stability may be fully realized. The lower limit for the specific surface area is not restricted, but may be 0.01$m^2$/mL or more, or 0.02$m^2$/mL or more, or 0.03$m^2$/mL or more.

Although not restricted, the specific surface area per unit volume of the particles (microparticles and microparticle complexes) in the micronization processed product of insoluble dietary fiber-localizing sites according to the present invention after disturbance (i.e., after ultrasonication) may preferably be within the range of 0.01$m^2$/mL or more 2.00$m^2$/mL or less. More specifically, the upper limit may preferably be 2.00$m^2$/mL or less, or 1.50$m^2$/mL or less, or 1.20$m^2$/mL or less. When the specific surface area satisfies these upper limits, the microparticles may preferably form sufficient complexes, whereby the effect of improved storage stability may be fully realized. The lower limit for the specific surface area is not restricted, but may be 0.01$m^2$/mL or more, or 0.02$m^2$/mL or more, or 0.03$m^2$/mL or more.

*Step (ii): Preparation of a precursor composition

This step is to prepare a precursor composition containing starch derived from pulse and/or cereal and satisfying the requirements below. The term "precursor composition" as used herein refers to a composition that functions as a precursor to the solid composition of the present invention and that can be converted into the solid composition of the present invention by being heated in liquid. The details of heating in liquid (liquid heating) are described in detail in the description of step (iii) below.

The constituents and properties of the precursor composition prepared in this step are substantially the same as those of the solid composition of the present invention, except for the constituents and properties that may change during the liquid heating. Examples of constituents and properties of the precursor composition that may preferably be adjusted in consideration of the liquid heating are described below, but constituents and properties of the precursor composition that may change during the liquid heating are not limited to these. A person skilled in the art can adjust the constituents and properties of the precursor composition as appropriate so as to obtain a solid composition having desired constituents and properties, taking into consideration the constituents and properties of the solid composition to be prepared and the conditions for liquid heating.

According to an embodiment, the sodium chloride content of the precursor composition in terms of wet mass basis may be within the range of 0.1 mass % or more but 2 mass % or less. More specifically, the lower limit may preferably be, although is not limited to, 0.1 mass % or more, or 0.2 mass % or more in terms of dry mass basis. On the other hand, the upper limit may preferably be, although is not limited to, 2 mass % or less, or 1 mass % or less, or 0.7 mass % or less, or 0.5 mass % or less in terms of wet mass basis.

According to an embodiment, the degree of gelatinization of starch in the precursor composition in terms of dry mass basis may be within the range of 35 mass % or more but 100 mass % or less. More specifically, the lower limit may preferably be 35 mass % or more, or 40 mass % or more, or 50 mass % or more, or 55 mass % or more, or 60 mass % or more in terms of dry mass basis. When the degree of gelatinization of starch in the precursor composition satisfies the upper limits mentioned above, it may become easier to obtain the effects that cracks are less likely to occur inside the composition after a certain period of time (e.g., 3 days or more) during storage at room temperature, and that ingredients inside the composition are less likely to leak out after cooking. On the other hand, the upper limit may preferably be 100 mass % or less, or 98 mass % or less, or 95 mass % or less, or 92 mass % or less, in terms of dry mass basis. When the degree of gelatinization of starch in the precursor composition is adjusted to a certain value or less, it may become easier to prevent starch degradation and avoid the composition becoming sticky and of undesirable quality.

According to an embodiment, the 2-pentylfuran content in the precursor composition in terms of dry mass basis may be within the range of 1 mass ppb or more but 50 mass ppm or less. More specifically, the lower limit in terms of dry mass basis may preferably be 1 mass ppb or more, or 3 mass ppb or more, or 5 mass ppb or more, or 7 mass ppb or more, or 10 mass ppb or more, or 15 mass ppb or more, or 25 mass ppb or more, or 30 mass ppb or more. When the 2-pentylfuran content of the precursor composition is adjusted to these lower limits or more, the final food composition may tend to have a good balance of the 2-pentylfuran contents in the solid composition and the seasoning solution, resulting in a food composition with an excellent flavor balance. On the other hand, the upper limit for the 2-pentylfuran content in the precursor composition may preferably be 50 mass ppm or less, or 47 mass ppm or less, or 40 mass ppm or less, or 30 mass ppm or less, or 20 mass ppm or less, or 15 mass ppm or less, or 10 mass ppm or less, or 5 mass ppm or less, or 3 mass ppm or less, or 2 mass ppm or less, or 1.2 mass ppm or less, or 0.5 mass ppm or less, or 0.2 mass ppm or less, in terms of dry mass basis. When the 2-pentylfuran content in the precursor composition is adjusted to these upper limits or less, the seasoning solution of the resulting food composition tends to contain a moderate amount of 2-pentylfuran, resulting in a composition with a good flavor balance.

According to an embodiment, when the precursor composition is crushed (until it has the size of, e.g., 100-mesh-pass (aperture 150μm) and 120-mesh-on (aperture 125μm)) and made into the form of dry crushed slurry (water slurry containing 14 mass % of the sample), and then subjected to viscosity measurement using the rapid visco-analyzer (RVA) in accordance with [Procedure a] above, the maximum attained viscosity (cP) ([value $\alpha$]) in the course of changing the temperature from 50 °C to 95 °C (i.e., when the sample is heated from 50 °C to 95 °C and maintained at 95 °C for 3 minutes) may preferably be within a predetermined range. Specifically, the value may be within the range of more than 100 cP but 4000 cP or less. More specifically, the upper limit for [value $\alpha$] of the crushed dry slurry of the precursor composition may preferably be 4000 cP or less, or 3500 cP or less, or 3000 cP or less, or 2500 cP or less, or 2000 cP or less. When this value satisfies the predetermined upper limits mentioned above, desirable flavor components in the precursor composition may easily leach out of the precursor composition into the seasoning solution. On the other hand, the lower limit for [value $\alpha$] of the crushed dry slurry of the precursor composition is not limited, but may preferably be more than 100 cP, or 200 cP or more, or 300 cP or more. When this value satisfies the predetermined lower limits mentioned above, it may become easier to prevent the extraction of even undesirable components in the precursor composition.

According to an embodiment, when the precursor composition is crushed and made into the form of dry crushed slurry, and then subjected to viscosity measurement using the RVA in accordance with [Procedure a] above, the breakdown viscosity (cP) ([value $\beta$]) may preferably be within a predetermined range. Specifically, the value may be within the range of more than 10 cP but 4000 cP or less. More specifically, the upper limit for [value $\beta$] of the crushed dry slurry of the precursor composition may preferably be 4000 cP or less, or 3500 cP or less, or 3000 cP or less, or 2500 cP or less, or 2000 cP or less, or 1500 cP or less, or 1000 cP or less. When this value satisfies the predetermined upper limits mentioned above, desirable flavor components in the precursor composition may easily leach out of the precursor composition into the seasoning solution. On the other hand, the lower limit for [value $\beta$] of the crushed dry slurry of the precursor composition is not limited, but may preferably be more than 10 cP, or 20 cP or more, or 30 cP or more, or 40 cP or more, or 50 cP or more, or 60 cP or more, or 70 cP or more, or 80 cP or more. When this value satisfies the predetermined lower limits mentioned above, it may become easier to prevent the extraction of even undesirable components in the precursor composition. The term "breakdown" as used herein refers to the phenomenon wherein, when measurement is continuously performed using RVA in accordance with [Procedure a] above with elevating the temperature from 50 °C to 95 °C, the viscosity of the measurement object decreases after reaching the maximum viscosity (cP) ([value $\alpha$]), and the term "breakdown viscosity" (cP) ([value $\beta$]) refers to the lowest attained viscosity (cP) after reaching the [value $\alpha$] until the end of the measurement under [Procedure a]. Therefore, if no viscosity reduction occurs from [value $\alpha$], then [value $\alpha$] and [value $\beta$] will be the same value, and if a slight viscosity reduction occurs, the ratio of [value $\beta$]/[value $\alpha$] will be close to 1.

According to an embodiment, the ratio of [value $\beta$] to [value $\alpha$] ([value $\beta$]/[value $\alpha$]) of the crushed dry slurry of the precursor composition may preferably be within a predetermined range. Specifically, the ratio may be within the range of 0 or more but 0.95 or less. More specifically, the upper limit for the ratio of [value $\beta$]/[value $\alpha$] may preferably be 0.95 or less, or 0.90 or less, or 0.85 or less, or 0.80 or less, or 0.75 or less. When the ratio [value $\beta$]/[value $\alpha$] of the precursor composition is controlled to these upper limits or less, it may become possible to effectively and continuously inhibit the outflow of degrading odor components derived from pulse and/or cereal that may be contained in the precursor composition. Although the reason for this is not clear, it is thought to be as follows. It is known that starch grains of pulse and/or cereal usually have a very strong structure and do not shatter at about 90°C. Therefore, even if a composition containing such starch grains of pulse and/or cereal is heated up from 50°C to 95°C according to [Procedure a] above, the starch grains of pulse and/or cereal remain swollen and hardly cause a decrease in the breakdown viscosity, whereby the ratio [value $\beta$]/[value $\alpha$] becomes almost 1. On the other hand, the lower limit for the ratio [value $\beta$]/[value $\alpha$] is not limited, but may be 0.10 or more, or 0.20 or more, or 0.30 or more, or 0.34 or more, or 0.40 or more.

The method for preparing the precursor composition in this step is not limited. It can be prepared by mixing pulse and/or cereal as raw materials for starch, preferably their powders, together with other ingredients that are optionally used (e.g., edible plants other than pulse and/or cereal, other food ingredients, seasonings, food additives, etc.). When mixing the ingredients, a solvent such as water or aqueous medium may be used together as needed. The method of mixing is also not limited. For example, mixing may be done using ordinary agitating equipment, or mixing with kneading using a uniaxial or biaxial extruder or the like.

Heat treatment may be performed before (e.g., at the stage of pulse and/or cereal or pulse and/or cereal powders as raw materials for the precursor composition), during, or after mixing the ingredients of the precursor composition described above. Although the conditions of heat treatment are not limited, it is preferable to perform heat treatment so as to adjust [value β] and [value α] mentioned above to within their respective desirable ranges, and especially so as to adjust the ratio of [value β]/[value α] to a predetermined ratio. Specifically, the heating temperature may be within the range of 100 °C or more but 200 °C or less, and the treatment time may be within the range of 0.1 minutes or more but 2 hours or less. More specifically, the heating temperature may preferably be 100 °C or more, or 110 °C or more, or 120 °C or more, and 200 °C or less, or 190 °C or less, or 180 °C or less, and the treatment time may preferably be 0.1 minutes or more, or 0.2 minutes or more, or 0.3 minutes or more, and 2 hours or less, or 1.5 hours or less, or 1 hour or less. In general, however, heating temperature and the heating time generally have an interdependent relationship with each other. That is, the higher the heating temperature, the shorter the heating time, while the longer the heating time, the lower the heating temperature. Therefore, the heating temperature and the heating time may be set to within their respective appropriate ranges in consideration of these relationships.

Furthermore, it may be preferable to perform the heating treatment in the presence of moisture at a predetermined content ratio or more, since this may make it easier to adjust [value β]/[value α] to a predetermined value or less. Although the reason for this is not clear, it is thought to be because the starch grains of pulse and/or cereal, which have a very strong structure, are more easily crushed, resulting in a relatively low value of [value β] relative to [value α]. Specifically, the dry mass basis moisture content may be within the range of more than 40 mass % but 200 mass % or less. More specifically, it is preferable to carry out the heating treatment with a dry mass basis moisture content of more than 40 mass %, more preferably more than 45 mass %, or more than 50 mass %. The upper limit is not particularly restricted, but may typically be 200 mass % or less, or 150 mass % or less, or 100 mass % or less.

According to an embodiment, the ingredients of the precursor composition were mixed, and optionally subjected to heating treatment, the resulting precursor composition may be dried. When the precursor composition is made in such a dried form (e.g., dried noodles, etc.), the moisture content based on dry weight may be within the range of 1 mass % or more but 25 mass % or less. More specifically, the upper limit may preferably be 25 mass % or less, or 23 mass % or less. The lower limit for is not restricted, but may be 1 mass % or more, or 2 mass % or more, or 3 mass % or more, or 4 mass % or more, or 5 mass % or more. Alternatively, without carrying out such a drying step of the precursor composition, the precursor composition in a wet form with a high moisture content (e.g., semi-fresh or fresh noodles) may be used in the subsequent steps. When the precursor composition is used in such a wet form, the upper limit for the dry mass basis moisture content may preferably be 300 mass % or less, or 250 mass % or less. The lower limit for the dry mass basis moisture content is not restricted, but may be more than 25 mass %, or more than 30 mass %.

*Step (iii): Preparation of the precursor composition via aqueous heating of the solid composition

This step is to prepare a solid composition by heating the precursor composition from step (ii) in aqueous medium (aqueous heating). In particular, in this embodiment (A), the aqueous heating of the precursor composition is carried out using the precursor seasoning solution A as the aqueous medium. The procedure is not restricted. Usually, the precursor composition may be heated in the precursor seasoning solution A.

The mass ratio of the precursor seasoning solution A to the precursor composition during aqueous heating is not limited, but may be within the range of 50 mass % or more but 2000 mass % or less in terms of wet mass basis. More specifically, the lower limit may preferably be 50 mass % or more, or 70 mass % or more, or 100 mass % or more, or 120 mass % or more in terms of wet mass basis. On the other hand, the upper limit for mass ratio of the precursor seasoning solution A to the precursor composition during aqueous heating may be, although is not limited to, 2000 mass % or less, or 1000 mass % or less.

The heating temperature and the heating time during the aqueous heating are not restricted, but the heating temperature may be within the range of 80 °C or more but 150 °C or less, and the heating time may be within the range of 1 minute or more but 120 minutes or less. More specifically, the lower limit for the heating temperature may preferably be 80 °C or more, or 85 °C or more, or 90°C or more, or 95 °C or more, or 100 °C (i.e., the boiling state of the precursor seasoning solution A under normal pressure), while the upper limit is not particularly limited, but may be 150 °C or less, or 130 °C or less. The lower limit for the heating time may preferably be 1 minute or more, or 2 minutes or more, or 3 minutes or more, while the upper limit is not particularly limited, but may be 120 minutes or less, or 100 minutes or less, or 80 minutes or less, or 60 minutes or less, or 40 minutes or less, or 20 minutes or less. In general, however, heating temperature and the heating time generally have an interdependent relationship with each other. That is, the higher the heating temperature, the shorter the heating time, while the longer the heating time, the lower the heating temperature. Therefore, the heating temperature and the heating time may be set to within their respective appropriate ranges in consideration of these relationships.

According to an embodiment, the increase in the 2-pentylfuran content in the precursor seasoning solution A before and after the aqueous heating of the precursor composition at step (iii) (i.e., the difference defined by "(the 2-pentylfuran content in the precursor seasoning solution A after the aqueous heating) - (the 2-pentylfuran content in the precursor seasoning solution A before the aqueous heating)") may preferably be a predetermined lower limit or more, e.g., may be within the range of 1 mass ppb or more but 10 mass ppm or less. More specifically, the 2-pentylfuran content in the precursor seasoning solution A before and after the aqueous heating in terms of wet mass basis may be 1 mass ppb or more, or 2 mass ppb or more, or 3 mass ppb or more, or 4 mass ppb or more, or 5 mass ppb or more. In other words, the aqueous heating of the precursor composition in the precursor seasoning solution A may be carried out until the 2-pentylfuran content in the precursor seasoning solution A increase by, e.g., 1 mass ppb or more, or 3 mass ppb or more, or 5 mass ppb or more. If the aqueous heating is carried out until the 2-pentylfuran content increases to the lower limits mentioned above or more, the seasoning solution in the resulting composition may contain a moderate amount of 2-pentylfuran, resulting in a composition with a good flavor balance. The upper limit is not particularly restricted, but may typically be 10 mass ppm or less, or 5 mass ppm or less, or 2 mass ppm or less, or 1.5 mass ppm or less, or 1.1 mass ppm or less, or 1.0 mass ppm or less, or 0.6 mass ppm or less in terms of wet mass basis.

*Step (iv): Preparation of the seasoning solution by adding the precursor composition extract to the precursor seasoning solution A

This step is to prepare the seasoning solution by incorporating the extract of the precursor composition into the precursor seasoning solution A. In particular, according to the embodiment (A), the precursor composition is heated in the precursor seasoning solution A in step (iii), the extract of the precursor composition is transferred into the precursor seasoning solution A, whereby the conversion of the precursor composition to the solid composition, the conversion of the precursor seasoning solution A to the seasoning solution, and the incorporation of the seasoning solution into the solid composition are carried out simultaneously, to achieve both step (iii) and step (iv) at the same time.

When the seasoning solution prepared in this step is subjected to measurement in accordance with [Procedure a] above, the final viscosity at the time the temperature is decreased to 50 °C (RVA final viscosity (50 °C)) satisfies a predetermined range. According to an embodiment, the RVA final viscosity (50 °C) of the seasoning solution prepared in this step may be within the range of more than 5.0 cP but 550 cP or less. Specifically, the upper limit for the value may preferably be 550 cP or less, or 520 cP or less, or 500 cP or less, or 490 cp or less, or 480 cP or less, or 450 cP or less, or 420 cp or less, or 400 cp or less, or 380 cp or less. When this value satisfies the predetermined upper limits mentioned above, desirable flavor components in the solid composition may be more likely to flow out of the solid composition into the seasoning solution. On the other hand, the lower limit for the value may preferably be more than 5.0 cP, or 6.0 cP or more, or 7.0 cP or more, or 9.0 cP or more, or 10.0 cP or more, or 11.0 cP or more. When this value satisfies the predetermined lower limits mentioned above, it may become easier to prevent the extraction of undesirable components in the solid composition.

According to an embodiment, the increase ratio of the RVA final viscosity (50 °C) of the seasoning solution A after the addition of the extract (i.e., after the aqueous heating of the precursor composition) from the RVA final viscosity (50 °C) of the precursor seasoning solution A before the addition of the extract (i.e., before the aqueous heating of the precursor composition) (hereinafter also referred to as the "increase ratio of the RVA final viscosity (50 °C) before and after the addition of the extract") may preferably be a predetermined lower limit or more. This value may be within the range of 10% or more but 2000% or less. More specifically, the lower limit for the increase ratio of the RVA final viscosity (50 °C) before and after the addition of the extract may preferably be 10% or more, or 15% or more, or 20% or more, 30% or more. The upper limit is not particularly restricted, but may typically be 2000% or less, or 1500% or less, or 1000% or less, or 800% or less. In other words, the addition of the precursor composition extract (i.e., the aqueous heating of the precursor composition in the precursor seasoning solution A) may preferably be continued until the RVA final viscosity (50 °C) increases by 10% or more, or 15% or more, or 20% or more (and 2000% or less, or 1500% or less, or 1000% or less). When the aqueous heating is carried out until the increase ratio of the RVA final viscosity (50 °C) reaches the lower limits mentioned above or more, it may become easier to obtain the effect of inhibiting the leakage of ingredients from the solid composition to the seasoning solution.

This increase ratio (%) can be used for calculating the ratio of the viscosity derived from the precursor composition extract to the viscosity of the entire seasoning solution. For example, if a composition has an increase ratio of 10% and the viscosity of the resulting seasoning solution is 110%, then the ratio of the viscosity derived from the precursor composition extract to the viscosity of the entire seasoning solution is calculated to be 9.09% (10%/110%). The ratio of the viscosity derived from the precursor composition extract to the viscosity of the entire seasoning solution may preferably be a predetermined lower limit or more. This ratio may be within the range of 8% or more but less than 100%. More specifically, the lower limit may preferably be 8% or more, or 10% or more, or 15% or more, or 20% or more, or 25% or more. The upper limit is not particularly restricted, but may typically be less than 100%, or 97% or less, or 95% or less, or 93% or less, or 91% or less, or 90% or less.

According to an embodiment, the increase in the 2-pentylfuran content in the precursor seasoning solution A after the addition of the extract relative to the 2-pentylfuran content in the precursor seasoning solution A before the addition of the extract may preferably be a predetermined lower limit or more. Specifically, this value may be within the range of 1 mass ppb or more but 10 mass ppm or less. More specifically, the increase in the 2-pentylfuran content before and after the addition of the extract in terms of wet mass basis may preferably be 1 mass ppb or more, or 2 mass ppb or more, or 3 mass ppb or more, or 4 mass ppb or more, or 5 mass ppb or more. In other words, the addition of the precursor composition extract (i.e., the aqueous heating of the precursor composition in the precursor seasoning solution A) may preferably be carried out until, relative to the 2-pentylfuran content in the precursor seasoning solution A before the addition of the extract (i.e., in the case of (A) the simultaneous heating/addition mode, before the aqueous heating of the precursor composition), the 2-pentylfuran content in the seasoning solution after the addition of the extract (i.e., in the case of (A) the simultaneous heating/addition mode, after the aqueous heating of the precursor composition) increases 1 mass ppb or more, or 2 mass ppb or more, or 3 mass ppb or more, or 4 mass ppb or more, or 5 mass ppb or more, in terms of wet mass basis. The upper limit is not particularly restricted, but may typically be 10 mass ppm or less, or 5 mass ppm or less, or 2 mass ppm or less, or 1.5 mass ppm or less, or 1.1 mass ppm or less, or 1.0 mass ppm or less, in terms of wet mass basis.

*Step (v): Preparation of the food composition from the solid composition and the seasoning solution

This step is to produce the food composition of the present invention by placing the solid composition from step (iii) into the seasoning solution from step (iv). According to this embodiment (A), as explained above, when the precursor composition is heated in the precursor seasoning solution A in step (iii), the extract of the precursor composition is transferred into the precursor seasoning solution A, whereby the conversion of the precursor composition into the solid composition in step (iii), the conversion of the precursor composition into the seasoning solution in step (iv), and the inclusion of the solid composition into the seasoning solution in step (v) are achieved simultaneously.

(B) Individual heating/addition mode:

As mentioned above, (B) the individual heating/addition mode is a mode in which an aqueous medium other than the precursor seasoning solution is used as the aqueous medium for the aqueous heating of the precursor composition at step (iii), while the aqueous medium after the aqueous heating (post-heated aqueous solution) is used as the extract of the precursor composition and added to the precursor seasoning solution as step (iv), and then as step (v), the solid composition obtained in step (iii) is immersed in the seasoning solution from step (iv) to prepare the food composition. In the case of a ready-to-eat preparation product containing a precursor seasoning in the form of powder or concentrated liquid as explained below, it is possible to add the precursor seasoning to the post-heated aqueous solution at step (iii) to prepare the straight-type liquid precursor seasoning solution to which the extract of the precursor composition has been added as the seasoning solution, whereby both step (i) and step (iv) simultaneously.

*Step (i): Preparation of the precursor seasoning solution B

This step is to prepare a precursor seasoning solution (in this example, the precursor seasoning solution B). According to this embodiment (B), the precursor seasoning solution B will be converted into the seasoning solution of the present invention by adding the post-heated aqueous solution (that corresponds to the extract of the precursor composition after the aqueous heating in aqueous medium) (in step (iv), which will be explained later), which is obtained by heating the precursor composition in aqueous medium (in step (iii), which will be explained later).

The constituents and properties of the precursor seasoning solution B are basically the same as those of the precursor seasoning solution A in the embodiment (A) explained above, except that the moisture content may preferably be adjusted in consideration of step (iv) later, in which the post-heated aqueous solution of the precursor composition is added as the extract of the precursor composition. Specifically, when the seasoning solution is prepared by adding the post-heated aqueous solution of the precursor composition in a volume of X times as much as the volume of the precursor seasoning solution B (where X is any positive number) in step (iv) described below, the moisture content in the precursor seasoning solution B may be adjusted by subtracting the moisture content in the post-heated aqueous solution from the moisture content in the final seasoning solution to be prepared. Accordingly, the contents of the ingredients in the precursor seasoning solution B (e.g., the edible-plant processed product, other seasonings, and sodium chloride) can be set at higher values than the contents of the ingredients in the final seasoning solution to be prepared. For example, in the case where one volume of the precursor seasoning B (e.g., 100g) is mixed with two volumes of the post-heated aqueous solution of the precursor composition (e.g., with a moisture content of 200g) to prepare the seasoning solution, the moisture content in the post-heated aqueous solution (200g) may be subtracted from the moisture content in the final seasoning solution to be prepared (e.g., when 300g of the composition contains 290g of water), and the contents of the ingredients in the precursor seasoning solution B (100g) may be adjusted such that the resulting volume of moisture content, 90g, contains the ingredients for the remaining 10g. The other details of the precursor seasoning solution B are the same as those of the precursor seasoning solution A in the embodiment (A) mentioned above.

*Step (ii): Preparation of a precursor composition

This step is to prepare a precursor composition containing starch derived from pulse and/or cereal and satisfying the requirements below. The details thereof are the same as those explained for step (ii) of the embodiment (A) above.

*Step (iii): Preparation of the precursor composition via aqueous heating of the solid composition

This step is to prepare the solid composition by carrying out aqueous heating of the precursor composition from step (ii) in aqueous medium. According to this embodiment (B), the aqueous heating of the precursor composition is carried out using aqueous medium other than the precursor seasoning solution B. The procedure is not restricted, but usually the precursor composition may preferably be placed in the aqueous medium and heated. The aqueous medium may be water or an aqueous solution containing various ingredients such as seasonings in water.
The ratio between the precursor composition and the aqueous medium to be used for the aqueous heating is not restricted, but the mass ratio of the aqueous medium to the precursor composition may preferably be within the range of 50 mass % or more but 2000 mass % or less. More specifically, the lower limit may preferably be 50 mass % or more, or 70 mass % or more, or 100 mass % or more, or 120 mass % or more in terms of wet mass basis. On the other hand, the upper limit for the mass ratio of the aqueous medium to the precursor composition may be, although is not limited to, 2000 mass % or less, or 1000 mass % or less.
The heating temperature and the heating time during the aqueous heating are not restricted, but the heating temperature may preferably be within the range of 80 °C or more 150 °C or less, and the heating time may preferably be within the range of 1 minute or more 120 minutes or less. More specifically, the maximum heating temperature may preferably be 80 °C or more, or 85 °C or more, or 90 °C or more, or 95 °C or more, or 100 °C (i.e., the boiling state of the aqueous medium under normal pressure), while the upper limit is not particularly limited, but may be 150 °C or less, or 130 °C or less. The heating time may preferably be 1 minute or more, or 2 minutes or more, or 3 minutes or more, while the upper limit is not particularly limited, but may be 120 minutes or less, or 100 minutes or less, or 80 minutes or less, or 60 minutes or less, or 40 minutes or less, or 20 minutes or less. In general, however, heating temperature and the heating time generally have an interdependent relationship with each other. That is, the higher the heating temperature, the shorter the heating time, while the longer the heating time, the lower the heating temperature. Therefore, the heating temperature and the heating time may be set to within their respective appropriate ranges in consideration of these relationships.
By the aqueous heating of the precursor composition in this step, the precursor composition is converted into the solid composition, while some ingredients of the precursor composition are extracted into the aqueous medium during the aqueous heating, and added to the precursor seasoning solution B in step (iv).
According to an embodiment, the increase in the 2-pentylfuran content of the aqueous medium before and after the aqueous heating of the precursor composition at step (iii) (i.e., the increment calculated by "(the 2-pentylfuran content in the aqueous medium after the aqueous heating) -(the 2-pentylfuran content in the aqueous medium before the aqueous heating)") may preferably be a predetermined lower limit or more. Specifically, the increase in the 2-pentylfuran content of the aqueous medium before and after the aqueous heating may preferably be within the range of 1 mass ppb or more but 10 mass ppm or less. More specifically, the increase rate may preferably be 1 mass ppb or more, or 2 mass ppb or more, or 3 mass ppb or more, or 4 mass ppb or more, or 5 mass ppb or more, in terms of wet mass basis. In other words, the aqueous heating of the precursor composition in the solvent may preferably be continued until the 2-pentylfuran content in the aqueous medium in terms of wet mass basis increases by 1 mass ppb or more, or 3 mass ppb or more, or 5 mass ppb or more. The upper limit of the increase rate is not particularly restricted, but may typically be 10 mass ppm or less, or 5 mass ppm or less, or 2 mass ppm or less, or 1.5 mass ppm or less, or 1.1 mass ppm or less, or 1.0 mass ppm or less, or 0.6 mass ppm or less.

*Step (iv): Preparation of the seasoning solution by adding the precursor composition extract to the precursor seasoning solution A

This step is to prepare the seasoning solution by incorporating the extract of the precursor composition into the precursor seasoning solution B. According to this embodiment (B), the aqueous medium after the aqueous heating of the precursor composition at step (iii) (post-heated aqueous solution) is used as the extract of the precursor composition and added to the precursor seasoning solution B. In the case of a ready-to-eat preparation product containing a precursor seasoning in the form of powder or concentrated liquid as explained below, it is possible to add the precursor seasoning to the post-heated aqueous solution at step (iii) to prepare the straight-type liquid precursor seasoning solution to which the extract of the precursor composition has been added as the seasoning solution, whereby both step (i) and step (iv) simultaneously.

When the seasoning solution prepared by this step is subjected to measurement in accordance with [Procedure a] above, the final viscosity at the time the temperature is decreased to 50 °C (RVA final viscosity (50 °C)) satisfies a predetermined range. According to an embodiment, the RVA final viscosity (50 °C) of the seasoning solution prepared by this step may preferably be within the range of more than 5.0 cP but 550 cP or less. Specifically, the upper limit for this value may preferably be 550 cP or less, or 520 cp or less, or 500 cP or less, or 480 cP or less, or 450 cP or less. When this value satisfies the predetermined upper limits mentioned above, desirable flavor components in the solid composition may be more likely to flow out of the solid composition into the seasoning solution. On the other hand, the lower limit for the value may preferably be more than 5.0 cP, or 6.0 cP or more, or 7.0 cP or more, or 9.0 cP or more, or 10.0 cP or more, or 11.0 cP or more. When this value satisfies the predetermined lower limits mentioned above, it may become easier to prevent the extraction of undesirable components in the solid composition.

In this step, the content and the amount of the extract of the precursor composition are not restricted, but may preferably be set so that the constituents and properties of the precursor seasoning solution B are changed by the addition of the extract to thereby yield the final seasoning solution with desired constituents and properties. Specifically, the extraction temperature and extraction time of the precursor composition (i.e., heating temperature and heating time in step (iii)) and the amount of the extract added to the precursor seasoning solution B may be determined using the changes in constituents and properties of the precursor seasoning solution as indicators.

According to an embodiment, the increase ratio of the RVA final viscosity (50 °C) of the seasoning solution after the addition of the precursor composition extract (i.e., post-heated aqueous solution) from the RVA final viscosity (50 °C) of the precursor seasoning solution B before the addition of the precursor composition extract (i.e., post-heated aqueous solution) (i.e., the increase ratio of the RVA final viscosity (50 °C) before and after the addition of the extract) may preferably be a predetermined lower limit or more. Specifically, the increase ratio of the RVA final viscosity (50 °C) before and after the addition of the extract may be within the range of 10% or more but 2000% or less. More specifically, the lower limit for the increase rate may preferably be 10% or more, or 15% or more, or 20% or more, 30% or less. The upper limit is not particularly restricted, but may typically be 2000% or less, or 1500% or less, or 1000% or less, or 800% or less. In other words, the precursor composition extract (i.e., post-heated aqueous solution) may preferably be added to the precursor seasoning solution B until the RVA final viscosity (50 °C) of the seasoning solution after the addition of the precursor composition extract (i.e., post-heated aqueous solution) increases from the RVA final viscosity (50 °C) of the precursor seasoning solution B before the addition of the precursor composition extract (i.e., post-heated aqueous solution) by 10% or more, or 15% or more, or 20% or more (and 2000% or less, or 1500% or less, or 1000% or less).

According to an embodiment, the increase rate of the 2-pentylfuran content in the seasoning solution after the addition of the precursor composition extract (i.e., post-heated aqueous solution) from the 2-pentylfuran content in the precursor seasoning solution B before the addition of the precursor composition extract (i.e., post-heated aqueous solution) may preferably be a predetermined lower limit or more. Specifically, the increase of the 2-pentylfuran content before and after the addition of the extract in terms of wet mass basis may be within the range of 1 mass ppb or more but 10 mass ppm or less. More specifically, the increase rate may preferably be 1 mass ppb or more, or 2 mass ppb or more, or 3 mass ppb or more, or 4 mass ppb or more, or 5 mass ppb or more. In other words, the precursor composition extract (i.e., post-heated aqueous solution) may preferably be added to the precursor seasoning solution B until the 2-pentylfuran content in the seasoning solution after the addition of the precursor composition extract (i.e., post-heated aqueous solution) increases from the 2-pentylfuran content in the precursor seasoning solution B before the addition of the precursor composition extract (i.e., post-heated aqueous solution) by 1 mass ppb or more, or 2 mass ppb or more, or 3 mass ppb or more, or 4 mass ppb or more, or 5 mass ppb or more in terms of wet mass basis. The upper limit is not particularly restricted, but may typically be 10 mass ppm or less, or 5 mass ppm or less, or 2 mass ppm or less, or 1.5 mass ppm or less, or 1.1 mass ppm or less, or 1.0 mass ppm or less.

*Step (v): Preparation of the food composition from the solid composition and the seasoning solution

This step is to produce the food composition of the present invention by placing the solid composition from step (iii) into the seasoning solution from step (iv). According to this embodiment (B), since the solid composition from step (iii) and the seasoning solution from step (iv) are obtained individually, the preparation of the food composition in this step is carried out by immersing the solid composition from step (iii) in the seasoning solution from step (iv).

[III. Ready-to-eat preparation product and the precursor composition and the precursor seasoning]

Another embodiment of the present invention relates to a ready-to-eat preparation product for preparing the food composition of the present invention, comprising: a precursor seasoning solution for use in the production method of the present invention, or a precursor seasoning for preparing such a precursor seasoning solution; and a precursor composition for preparing the production method of the present invention. This ready-to-eat preparation product may also be referred to as "the ready-to-eat preparation product of the present invention." Providing the ready-to-eat preparation product of the present invention makes it possible for the consumers to cook the food composition of the present invention just before eating, and to eat the food composition of the present invention in a fresher, freshly prepared state.

The ready-to-eat preparation product of the present invention at least contains: the precursor composition of the present invention; and the precursor seasoning solution of the present invention, or a precursor seasoning for preparing the precursor seasoning solution of the present invention. The precursor composition of the present invention was already explained above in relation to the production method of the present invention.

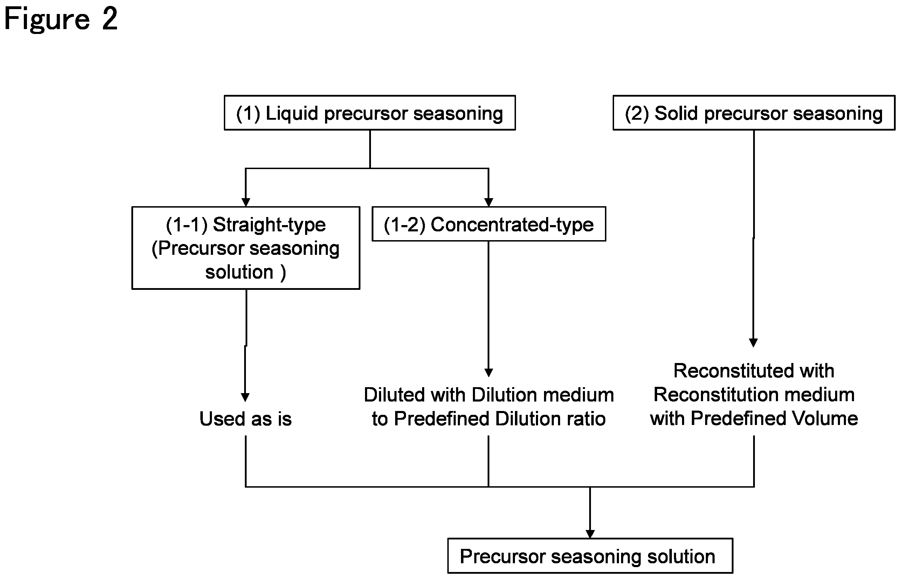

The term "precursor seasoning" as used herein refers to a composition for preparing the precursor seasoning solution of the present invention as explained above. Major embodiments of the precursor seasoning are illustrated in a schematic diagram of Figure 2. As shown in Figure 2, the precursor seasonings are classified into (1) liquid (e.g., solution, suspension, etc.) precursor seasonings and (2) solid (e.g., powder, granules, etc.) precursor seasonings, and the former are further classified into (1-1) straight-type liquid precursor seasonings and (1-2) concentrated-type liquid precursor seasonings.

(1-1) The straight-type liquid precursor seasoning is a precursor seasoning that can be used as it is as a precursor seasoning solution, i.e., it is identical to the precursor seasoning solution.

(1-2) The concentrated-type liquid precursor seasoning is a composition prepared by concentrating the precursor seasoning solution at a predetermined concentration ratio, and is configured to be converted into the precursor seasoning solution via dilution with water or other aqueous medium at a predetermined dilution ratio corresponding to the concentration ratio. The concentration ratio of the concentrated-type liquid precursor seasoning (i.e., the dilution ratio required for preparing the precursor seasoning) is not restricted, but the mass ratio of the precursor seasoning to the concentrated-type liquid precursor seasoning {i.e., ([the mass of the precursor seasoning] / [the mass of the concentrated-type liquid precursor seasoning]) x 100%} may be within the range of 100 mass % or more but 2000 mass % or less. More specifically, the lower limit is not particularly restricted, but may preferably be 100 mass % or more, or 150 mass % or more, or 200 mass % or more, or 250 mass % or more, or 300 mass % or more. On the other hand, the upper limit is not particularly restricted, but may be 2000 mass % or less, or 1500 mass % or less, or 1000 mass % or less. The method of preparing the concentrated-type liquid precursor seasoning is not restricted, but it may preferably be prepared by dissolving various ingredients of the precursor seasoning solution in water or an aqueous medium in amounts in consideration of a desired concentration ratio, or by evaporating the solvent from the once-prepared precursor seasoning solution to achieve the desired concentration ratio.

(2) The solid (e.g., powder, granules, etc.) precursor seasoning is a composition prepared by evaporating the solvent from the precursor seasoning solution, and is configured to be converted into the precursor seasoning solution by reconstituting it with a predetermined amount of water or other aqueous medium. The concentration ratio of the concentrated-type solid precursor seasoning (i.e., dilution ratio necessary for preparing the precursor seasoning solution) is not restricted, but the ratio of the precursor seasoning solution mass ratio to the concentrated-type solid precursor seasoning {i.e., ([the mass of the precursor seasoning solution]/[the mass of the concentrated-type solid precursor seasoning]) $\times$ 100%} in terms of wet mass basis may preferably be within the range of 500 mass % or more but 2000 mass % or less. More specifically, the lower limit is not particularly restricted, but may preferably be 500 mass % or more, or 600 mass % or more, or 700 mass % or more, or 800 mass % or more, or 900 mass % or more. On the other hand, the upper limit is not particularly restricted, but may preferably be 2000 mass % or less, or 1500 mass % or less, or 1000 mass % or less. The method for preparing the solid precursor seasoning is not restricted, but it may preferably be prepared by mixing the ingredients of the desired precursor seasoning solution except for the solvent in the solid state, and prilling or granulating it as necessary, or by evaporating the solvent from the once-prepared precursor seasoning solution completely.

The components of the ready-to-eat preparation product of the present invention, e.g., the precursor composition and the precursor seasoning solution or the precursor seasoning, may be either packaged individually or unpackaged, but may preferably be packaged individually and opened when preparing the food composition of the present invention. When the precursor seasoning is a solid precursor seasoning, precursor composition and solid precursor seasoning may coexist in an unpackaged state, or the solid precursor seasoning may be kneaded into the precursor composition in advance.

The ready-to-eat preparation product of the present invention may contain, in addition to the precursor composition and the precursor seasoning solution or the precursor seasoning, other additional components. Examples of such additional components include ingredients that are optionally added to the food composition of the present invention. It is preferred that such ingredients are also packaged individually and opened when preparing the food composition of the present invention. Furthermore, the individually packaged precursor composition and precursor seasoning (and optionally, ingredients) may be further packaged together in a batch, or the precursor composition and solid precursor seasoning (and optionally, ingredients) may be packaged together in a batch without individual packaging. The method for cooking the food composition of the present invention using the precursor composition and precursor seasoning (and optionally, ingredients) (e.g., mixing method, heating method, etc.) may be printed on any of the packages.

The precursor composition (e.g., noodles) and the precursor seasoning solution or precursor seasoning (e.g.,

soup), which constitute the ready-to-eat preparation product of the present invention, may each be a stand-alone product. The precursor composition and the precursor seasoning solution as stand-alone products may also be referred to as "the precursor composition of the present invention" and "the precursor seasoning of the present invention," respectively. As is the case of the food composition of the present invention explained above, providing the precursor composition of the present invention or the precursor seasoning of the present invention as a product makes it possible for the consumers to cook the food composition of the present invention just before eating, and to eat the food composition of the present invention in a fresher, freshly prepared state. Furthermore, the consumers can combine any optional precursor seasoning (soup, etc.) or precursor composition (noodles, etc.) with the precursor composition or precursor seasoning of the present invention, making it possible to provide flexible variations in taste to meet the tastes of the consumers.

The precursor composition of the present invention and the precursor seasoning of the present invention may also preferably be packaged individually and opened when preparing the food composition of the present invention. Furthermore, the type of precursor seasonings (soup, etc.) or compositions (noodles, etc.) to be combined and the cooking method (e.g., mixing method, heating method, etc.) may be printed on the packaging.

**EXAMPLES**

The present invention will now be described in further detail by way of Examples. These examples are shown merely for convenience of the description, and should not be construed as limitations to the present invention in any sense. Text Examples 5 and 7 are not part of invention.

[I. Preparation of precursor compositions and precursor seasoning solutions as well as food compositions]

The following procedures were used for preparing the precursor compositions and the precursor seasoning solutions of the Test Examples and the Comparative Examples, as well as the food compositions using the same.

(1) Preparation of precursor seasoning solutions:

The following procedure was used to prepare the precursor seasoning solution of each example (step (i) above). Specifically, the edible-plant processed product having the type, form, and content ratio (wet mass basis) indicated in the corresponding cell of the "4M-pass 200M-on edible-plant processed product" column (where "M" in "4M" and "200M" refers to "mesh") of Table 1 below was suspended in water. To the resulting suspension, sodium chloride was added to achieve the concentration in terms of wet mass basis as indicated in the "NaCl content in the precursor seasoning" column of Table 1 and mixed, whereby the precursor seasoning solution of each example was prepared. To some edible-plant processed products, crushed products of insoluble dietary fiber-localizing sites (tomato peel, tomato seed, or sesame peel) were added so as to achieve the viscosity indicated in the "RVA final viscosity (50 °C) corrected for NaCl concentration" column. The constituents and properties of the precursor seasoning solution of each example are indicated in Table 1.

In each example for which the cell in the "Mass ratio of the precursor seasoning solution /precursor seasoning" column indicates "100%," the precursor seasoning was prepared as a straight-type liquid precursor seasoning, and used as it is as a precursor seasoning solution for the subsequent steps. On the other hand, In each example for which the cell in the "Mass ratio of the precursor seasoning solution /precursor seasoning" column indicates a percentage exceeding 100% (except for Test Examples 7), the precursor seasoning was prepared as a concentrated-type liquid precursor seasoning with a wet mass basis concentration ratio corresponding to the indicated percentage, and then diluted with water at a dilution ratio corresponding to the indicated percentage to thereby reconstituting the precursor seasoning solution before subjecting it to the subsequent steps. Only the food composition in Test Examples 7 was prepared in accordance with (B) the individual heating/addition mode (the food compositions of the other examples were all prepared in accordance with (A) the simultaneous heating/addition mode. Namely, the dilution ratio refers to "the mass ratio between (the precursor seasoning solution A)/(the precursor seasoning)"). The parenthesized "400%" in the same column of Test Example 7 means the dilution ratio of the precursor seasoning solution B (i.e., "the mass ratio between (the seasoning solution)/(the precursor seasoning solution B or the precursor seasoning)")) by the addition of the precursor composition extract (post-heated aqueous solution).

(2) Preparation of the precursor composition:

The following procedure was used to prepare the precursor composition of each example (step (ii) above). Specifically, the edible plant powder indicated in the "edible plant" column in Table 2 below ($d_{50}$ after disturbance: $100\mu m$) was used as the raw material, and the heating and kneading were carried out with adding water as appropriate and with adjusting the conditions as necessary, whereby the precursor composition of each example was prepared. The 2-pentylfuran content of the precursor composition was adjusted to the value indicated in the "2-pentylfuran content" column of Table 2, based on the 2-pentylfuran content resulting from the raw material, and optionally by externally adding 2-pentylfuran as appropriate. The constituents and properties of the precursor composition of each example are indicated in Table 2.

(3) Heating of the precursor composition and addition of the extract of the precursor composition to the precursor seasoning solution:

The precursor seasoning solution and the precursor composition of each example prepared above were used to produce the food composition of each example, by heating the precursor composition and adding the extract of the precursor composition precursor to the seasoning solution.

For each of the examples except Test Examples 7 (for which the "Method" column of Table 3 indicates "Simultaneous heating/adding mode"), the food composition was prepared in accordance with (A) the simultaneous heating/adding mode. Specifically, the precursor composition of each example was immersed in the precursor seasoning solution of each example, and subjected to heating at the temperature and for the time as indicated in the "Heating temperature" and "Time" columns, respectively, of Table 3 to thereby carry out the conversion of the precursor composition to the solid composition by heating (in step (iii)), the conversion of the precursor to the seasoning solution by the addition of the extract of the precursor composition (in step (iv)), and the production of the food composition by immersing the solid composition in the seasoning solution (in step (v)) simultaneously. The wet mass of the precursor seasoning solution to the precursor composition was adjusted to the ratio indicated in the "Liquid/solid ratio of heating/extraction" column of Table 3. The food composition of Test Examples 40 was prepared based on the food composition of Test Examples 16, by adding 2-pentylfuran to the seasoning solution to thereby adjust the 2-pentylfuran peak area ratio of the seasoning solution to the solid composition.

On the other hand, Test Examples 7 (for which the "Method" column of Table 3 indicates "Individual heating/adding mode"), the food composition was prepared in accordance with (B) the individual heating/adding mode. Specifically, the precursor composition was immersed in water, and subjected to heating at the temperature and for the time as indicated in the "Heating temperature" and "Time" columns, respectively, of Table 3 to thereby carry out the conversion of the precursor composition to the solid composition by heating (in step (iii)). The wet mass ratio of water to the precursor composition was adjusted to the ratio indicated in the "Liquid/solid ratio of heating/extraction" column of Table 3. Then the water after the heating, which contains the extract of the precursor composition, was mixed with the precursor seasoning solution to thereby carry out the conversion of the precursor to the seasoning solution by the addition of the extract of the precursor composition (in step (iv)). Finally, the resulting solid composition was immersed in the seasoning solution to thereby produce the food composition (in step (v)).

The conditions for the heating of the precursor composition and the addition of the extract of the precursor composition to the precursor seasoning solution are indicated in Table 3, and the constituents and properties of the resulting food composition are indicated in Table 4.

[II. Measurement of the properties of the precursor composition, and the precursor seasoning solution and the food composition]

The following procedures were used for measuring various properties of the precursor compositions and the precursor seasoning solutions of the Test Examples and the Comparative Examples, as well as the food compositions using the same.

(1) Separation between the solid composition and the seasoning solution in the food composition and separation of the edible-plant processed product from the seasoning solution:

For each example in Table 4, the separation between the solid composition and the seasoning solution in the food composition and separation of the edible-plant processed product from the seasoning solution were carried out in accordance with the following procedure. Specifically, a 4-mesh sieve was placed on a 200-mesh sieve, and the food composition sample of each example 100g adjusted to a temperature of 20 °C was spread evenly and thinly on the sieves and left to stand for 10 minutes, after which the fractions sieved by each sieve were obtained. The 4-mesh-on fraction was regarded as the "solid composition" fraction, the 4-mesh-pass fraction as the "seasoning solution" fraction, and the 4-mesh-pass 200-mesh-on fraction as the "edible-plant processed product" fraction, and the mass of each fraction was measurement as the mass of the corresponding "solid composition," "seasoning solution," or "edible-plant processed product." The measurement values of these masses were used for calculating the content ratios between these constituents (e.g., the mass ratio of [solid composition]/[seasoning solution] and the mass ratio of [edible-plant processed product]/[seasoning solution], etc.).

(2) Starch content, the degree of gelatinization, and the dry mass basis moisture content:

Among the contents of ingredients in each sample as shown in Tables 1 to 4, the "starch" was measured in accordance with the Japanese Standard Tables of Food Composition 2015 (7th edition) using the method of AOAC996.11, after removing the soluble carbohydrates that may affect the measurement values (e.g., glucose, maltose, maltodextrin, etc.) via 80% ethanol extraction treatment. The "dry mass basis moisture content" was measured according to the Japan Standard Tables for Food Composition 2015 (7th revised edition), by heating to 90°C using the decompression heating and drying method. The "degree of gelatinization" was measured using the glucoamylase second method, which is a partial modification of the Central Analytical Laboratory of Customs (following the method by Japan Food Research Laboratories: https://web.archive.org/web/20200611054551 or https://www.jfrl.or.jp/storage/file/221.pdf). The mass of the precursor composition used for each Test Example was 80g in terms of dry mass basis. The dry mass basis moisture content in the solid composition of each Test Example was 100 mass %.

(3) Measurement of viscosity using rapid visco-analyzer:

For each sample as shown in Tables 1 to 4, the measurement of viscosity using a rapid visco-analyzer (RVA) was carried out in accordance with the following procedure. Specifically, RVA4800 manufactured by Perten was used as the rapid visco-analyzer (RVA). The RVA viscosity of the seasoning solution, which corresponds to the liquid portion of the food composition of the present invention, was measured by placing 25.0 g of each example in an aluminum cup (approx. 70 mL volume) for measurement, changing the temperature in accordance with predetermined temperature profile with agitating the sample with two paddles (blades) of about $13mm \times 19mm$, to thereby measure the RVA viscosity profile. The RVA viscosity of the precursor composition, which corresponds to the solid portion of the food composition of the present invention, was measured by crushing the precursor composition sample with a drying mass of 3.5 g (so as to have the size of, e.g., 100-mesh-pass (aperture $150\mu m$) and 120-mesh-on (aperture $125\mu m$)), placing the crushed sample in an aluminum cup (approx. 70 mL volume) for measurement, adding distilled water to adjust the total volume to 28.5 g to thereby prepare a 14 mass % aqueous slurry of the sample, and subject the slurry sample to the RVA viscosity measurement in accordance with [Procedure a] above.

(4) Measurement of the 2-pentylfuran peak by DHS-GC/MS analysis:

Measurement of the 2-pentylfuran peak in each sample as shown in Tables 1 to 4 was carried out using the DHS-GC/MS method. Specifically, 1g of the composition sample of each example was weight in a 10-mL flat-bottomed vial, sealed, and volatilized by nitrogen gas purge. The volatilized sample was absorbed by the Tenax column, and processed by a heat desorption system, and introduced into a gas chromatography analysis device for analysis. Measurement of the contents of ingredients in each sample was carried out by analyzing both the sample and a standard sample diluted to a desired content, ascertaining the confirmatory ion peak area values of both samples, and comparing the integral results of these peak area values.

After the above analysis, a portion of the sample was subjected to a mass spectrometer to obtain a mass spectrum, and the retention time of the component was confirmed with the component-related ions of 2-pentylfuran (2-pentylfuran: m/z = 81, 82, 138). A quadrupole type 5977 Mass Selective Detector (Agilent) was used as the mass spectrometer (MS). Ionization method and ionization voltage were performed under the conditions of ionization method: EI+, ionization voltage: 70 eV. Results were captured in scan mode, and mass spectral analysis was performed by identifying ions characteristic of the component (2-pentylfuran: m/z = 81, 82, 138) using them as related ions, identifying the retention time when all these related ions were detected in the standard to thereby identify the retention time for 2-pentylfuran, and comparing the peak area (the integral result of m/z) of the confirmatory ion (2-pentylfuran: m/z=138) of the dilution standard having a known concentration with that of the sample, whereby the ingredients in each sample were quantified. The "2-pentylfuran peak area ratio of the seasoning solution to the solid composition" was calculated from the value obtained by multiplying the peak area of m/z=138, which was measured by DHS-GC/MS for the solid composition and the seasoning solution respectively, by the wet mass ratio to the total food composition.

Specifically, each composition sample was processed (usually at 1000 rpm for about 15 seconds) using a small Hiscotron (homogenizer NS-310E3 manufactured by Microtek Nithion) until it reaches a porridge-like consistency, and then submitted for analysis by the DHS-GC/MS method. The specific conditions for DHS-GC/MS analysis were explained above.

Each composition sample and a sample of 2-pentylfuran of known content (Tokyo Kasei Kogyo Co., Ltd.) diluted in distilled water to an appropriate content were subjected to analysis under the conditions described above. Although there were some deviations depending on the measurement conditions, based on the mass spectral pattern of the mass spectrometer, the components in the sample were quantified by comparing the peak area integration results of the amount of confirmatory ions (2-pentylfuran: m/z = 138) between the diluted sample and the sample near the retention time of the peak that seems to be the target component, in comparison with the standard product retention time.

[III. Sensory evaluation of the food compositions]

*Summary of sensory evaluation procedure:

The sensory evaluation of the food composition prepared in each example was performed by 10 trained sensory inspectors. The food compositions prepared according to the procedure in each example were eaten by the sensory evaluators before cooling, and evaluated for (1) good flavor of the seasoning solution, (2) deterioration odor peculiar to the raw materials (pulse and/or cereal) in the seasoning solution, (3) texture of the solid composition, and (4) overall evaluation.

*Sensory inspectors:

The sensory inspectors were selected from those who achieved excellent performance in the identification training described in A to C below, had experience in product development, had a lot of knowledge about food qualities such as taste and texture, and were capable of performing absolute evaluation for each sensory evaluation item.

A) Taste discrimination test: a total of seven samples were prepared, including five aqueous solutions prepared for five tastes (sweetness: taste of sugar; sourness: taste of tartaric acid; umami: taste of monosodium glutamate; saltiness; taste of sodium chloride; and bitterness: taste of caffeine), each with a concentration close to the threshold value of each component, and two sample solutions with distilled water, and the trainees were instructed to accurately identify the sample of each taste.

B) Concentration difference discrimination test: a series of five solutions with slightly different concentrations was prepared for each of salt and acetic acid, and the trainees were instructed to accurately distinguish the solutions of different concentrations for each component.

C) Three-point identification test to accurately identify from three soy sauce samples, two from Manufacturer A and one from Manufacturer B, the soy sauce sample from Manufacturer B.

For any of the aforementioned evaluation items, standard samples were evaluated in advance by all the inspectors, and each score of the evaluation criteria was standardized before objective sensory inspection was carried out by 10 inspectors. The evaluation of each evaluation item was carried out using a method in which each inspector selected one of the scores closest to his or her own evaluation from a five-point grading scale for each item. The total of the evaluation results was calculated from the arithmetic mean of the scores of the 10 inspectors, and rounded to one decimal place to determine the final scores.

(1) Good flavor of the seasoning solution:

For each food composition sample, the flavor characteristic of the raw materials (pulse and/or cereal) in the seasoning solution was evaluated on the following five-point grading scale.

5: Very favorable, with the flavor of the raw materials strongly felt.
4: Favorable, with the flavor of the raw materials relatively strongly felt.
3: Rather favorable, with the flavor of the raw materials moderately felt.
2: Rather unfavorable, with the flavor of the raw materials little felt.
1: Unfavorable, with the flavor of the raw materials scarcely felt.

(2) Deterioration odor peculiar to the raw materials (pulse and/or cereal) in the seasoning solution:

For each food composition sample, deterioration odor peculiar to the raw materials (pulse and/or cereal) in the seasoning solution of the food composition was evaluated on the following five-point grading scale.

5: Very favorable, with the deterioration odor peculiar to the raw materials not felt at all.
4: Favorable, with the deterioration odor peculiar to the raw materials scarcely felt.
3: Rather favorable, with deterioration odor peculiar to the raw materials weakly felt but acceptable.
2: Rather unfavorable, with deterioration odor peculiar to the raw materials moderately felt.

(3) Food texture of the solid composition:

For each food composition sample, the food texture of the solid composition in the food composition was evaluated on the following five-point grading scale.

5: Very favorable, with the food texture of the solid composition strongly felt.
4: Favorable, with the food texture of the solid composition relatively strongly felt.
3: Rather favorable, with the food texture of the solid composition moderately felt.
2: Rather unfavorable, with the food texture of the solid composition little felt.
1: Unfavorable, with the food texture of the solid composition scarcely felt.

(4) Overall evaluation:

For each food composition sample, the overall taste of the food composition was evaluated on the following five-point grading scale.

5: Very favorable, with excellent balance of flavor between the solid composition and the seasoning solution.
4: Favorable, with good balance of flavor between the solid composition and the seasoning solution.
3: Rather favorable, with moderate balance of flavor between the solid composition and the seasoning solution.
2: Rather unfavorable, with relatively poor balance of flavor between the solid composition and the seasoning solution.
1: Unfavorable, with poor balance of flavor between the solid composition and the seasoning solution.

The results of the sensory evaluation of the food composition of each example according to the above procedure are shown in Table 5 below.

[IV. Raw materials, constituents, properties, process, conditions, and results]

[Table 1-1]

| Table 1 | | Constituents and properties of Precursor seasoning and Precursor seasoning solution | | | | | |
|---|---|---|---|---|---|---|---|
| | | 4M-pass 200M-on Edible-plant processed product | | | Precursor seasoning NaCl content (wet mass basis) | Final RVA viscosity of Precursor seasoning solution corrected for NaCl concentration (50°C) | Mass ratio of Precursor seasoning solution / Precursor seasoning (wet mass basis) | Precursor seasoning solution NaCl content (wet mass basis) |
| | | Type | Form | Content (wet mass basis) | | | | |
| | | | | mass % | mass % | Equivalent cp | mass % | mass % |
| Test Example | 1 | Tomato | Paste | 10% | 3.9% | 2.1 | 400% | 0.97% |
| Test Example | 2 | Tomato | Paste | 10% | 0.40% | 20.0 | 400% | 0.10% |
| Test Example | 3 | Tomato | Paste | 10% | 2.0% | 4.0 | 400% | 0.50% |
| Test Example | 4 | Tomato | Paste | 10% | 6.0% | 1.3 | 400% | 1.50% |
| Test Example | 5 | Tomato | Paste | 10% | 8.0% | 1.0 | 400% | 2.00% |
| Comparative Example | 6 | Tomato | Paste | 10% | 10.4% | 0.8 | 400% | 2.60% |
| Test Example | 7 | Tomato | Paste | 10% | 8.0% | 1.0 | (400) | — |
| Comparative Example | 8 | Tomato | Paste | 0.9% | 0.08% | 0.0 | 400% | 0.02% |
| Test Example | 9 | Tomato | Paste | 1% | 0.13% | 6.2 | 100% | 0.13% |
| Test Example | 10 | Tomato | Paste (crushed peel and seeds/ nuts added) | 3% | 0.13% | 10.9 | 100% | 0.13% |
| Test Example | 11 | Tomato | Paste (crushed peel and seeds/ nuts added) | 15% | 0.13% | 52.7 | 100% | 0.13% |
| Test Example | 12 | Tomato | Paste (crushed peel and seeds/ nuts added) | 40% | 0.13% | 78.3 | 100% | 0.13% |
| Test Example | 13 | Tomato | Paste (crushed peel and seeds/ nuts added) | 50% | 0.13% | 198.4 | 100% | 0.13% |
| Test Example | 14 | Tomato | Paste (crushed peel and seeds/ nuts added) | 60% | 0.13% | 271.3 | 100% | 0.13% |
| Comparative Example | 15 | Tomato | Paste (crushed peel and seeds/ nuts added) | 70% | 0.13% | 476.6 | 100% | 0.13% |
| Test Example | 16 | Tomato | Paste | 20% | 1.9% | 2.1 | 200% | 0.97% |
| Test Example | 17 | Tomato | Paste | 20% | 1.9% | 2.1 | 200% | 0.97% |
| Test Example | 18 | Tomato | Paste | 20% | 1.9% | 2.1 | 200% | 0.97% |
| Test Example | 19 | Tomato | Paste | 20% | 1.9% | 2.1 | 200% | 0.97% |

[Table 1-2]

| Table 1 | | Constituents and properties of Precursor seasoning and Precursor seasoning solution | | | | | |
|---|---|---|---|---|---|---|---|
| | | 4M-pass 200M-on Edible-plant processed product | | | Precursor seasoning NaCl content (wet mass basis) | Final RVA viscosity of Precursor seasoning solution corrected for NaCl concentration (50°C) | Mass ratio of Precursor seasoning solution / Precursor seasoning (wet mass basis) | Precursor seasoning solution NaCl content (wet mass basis) |
| | | Type | Form | Content (wet mass basis) | | | | |
| | | | | mass % | mass % | Equivalent cp | mass % | mass % |
| Test Example | 20 | Tomato | Paste | 20% | 1.9% | 2.1 | 200% | 0.97% |
| Test Example | 21 | Tomato | Paste | 20% | 1.9% | 2.1 | 200% | 0.97% |
| Comparative Example | 22 | Tomato | Paste | 20% | 1.9% | 2.1 | 200% | 0.97% |
| Test Example | 23 | Tomato | Paste | 20% | 4.8% | 2.1 | 500% | 0.97% |
| Test Example | 24 | Tomato | Paste | 20% | 4.8% | 2.1 | 500% | 0.97% |
| Test Example | 25 | Tomato | Paste | 20% | 9.7% | 2.1 | 1000% | 0.97% |
| Test Example | 26 | Tomato | Paste | 20% | 14.5% | 2.1 | 1500% | 0.97% |
| Test Example | 27 | Tomato | Paste | 20% | 19.4% | 2.1 | 2000% | 0.97% |
| Test Example | 28 | Tomato | Paste | 20% | 7.7% | 2.1 | 800% | 0.97% |
| Test Example | 29 | Tomato | Powder | 40% | 3.9% | 3.9 | 400% | 0.97% |
| Test Example | 30 | Soybean | Aqueous extract | 12% | 3.9% | 0.6 | 400% | 0.97% |
| Test Example | 31 | sesami | Paste (crushed seed coat added) | 10% | 3.9% | 1.4 | 400% | 0.97% |
| Test Example | 32 | garlic | Powder | 11% | 3.9% | 2.5 | 400% | 0.97% |
| Test Example | 33 | onion | Paste | 30% | 3.9% | 3.0 | 400% | 0.97% |
| Test Example | 34 | Mushroom | Paste | 20% | 3.9% | 1.9 | 400% | 0.97% |
| Test Example | 35 | Sweet potato | Paste | 10% | 3.9% | 0.8 | 400% | 0.97% |
| Test Example | 36 | Tomato | Paste | 20% | 3.9% | 3.1 | 400% | 0.97% |
| Test Example | 37 | Tomato | Paste | 10% | 3.9% | 2.1 | 400% | 0.97% |
| Test Example | 38 | Tomato | Paste | 10% | 3.9% | 1.3 | 400% | 0.97% |
| Test Example | 39 | Tomato | Paste | 10% | 3.9% | 1.3 | 400% | 0.97% |
| Test Example | 40 | Tomato | Paste | 20% | 1.9% | 2.1 | 200% | 0.97% |

[Table 2-1]

| Table 2 | | Constituents and properties of Precursor composition | | | | | |
|---------|---|-------------|--------------------------------|----------------------------------|------------------------------|-------------------------------------------|
| | | Edible plant | Starch content (dry mass basis) | Starch Degree of gelatinization (dry mass basis) | Dry mass basis moisture content | 2-pentylfuran content (dry mass basis) | Breakdown viscosity / Maximum viscosity ([β]/[α]) |
| | | | mass % | mass % | mass % | mass ppb | |
| Test Example | 1 | Yellow pea | 50% | 90% | 5% | 51 | 0.69 |
| Test Example | 2 | Yellow pea | 50% | 90% | 5% | 51 | 0.69 |
| Test Example | 3 | Yellow pea | 50% | 90% | 5% | 51 | 0.69 |
| Test Example | 4 | Yellow pea | 50% | 90% | 5% | 51 | 0.69 |
| Test Example | 5 | Yellow pea | 50% | 90% | 5% | 51 | 0.69 |
| Comparative Example | 6 | Yellow pea | 50% | 90% | 5% | 51 | 0.69 |
| Test Example | 7 | Yellow pea | 50% | 90% | 5% | 51 | 0.69 |
| Comparative Example | 8 | Yellow pea | 60% | 90% | 12% | 51 | 0.42 |
| Test Example | 9 | Yellow pea | 60% | 90% | 12% | 51 | 0.42 |
| Test Example | 10 | Yellow pea | 60% | 90% | 12% | 51 | 0.42 |
| Test Example | 11 | Yellow pea | 60% | 90% | 12% | 51 | 0.42 |
| Test Example | 12 | Yellow pea | 60% | 90% | 12% | 51 | 0.42 |
| Test Example | 13 | Yellow pea | 60% | 90% | 12% | 51 | 0.42 |
| Test Example | 14 | Yellow pea | 60% | 90% | 12% | 51 | 0.42 |
| Comparative Example | 15 | Yellow pea | 60% | 90% | 12% | 51 | 0.42 |
| Test Example | 16 | Yellow pea | 42% | 90% | 2% | 1 | 0.34 |
| Test Example | 17 | Yellow pea | 42% | 90% | 2% | 15 | 0.34 |
| Test Example | 18 | Yellow pea | 42% | 90% | 2% | 104 | 0.34 |
| Test Example | 19 | Yellow pea | 42% | 90% | 2% | 1029 | 0.34 |

[Table 2-2]

| Table 2 | | Edible plant | Constituents and properties of Precursor composition | | | | |
|---|---|---|---|---|---|---|---|
| | | | Starch content (dry mass basis) | Starch Degree of gelatinization (dry mass basis) | Dry mass basis moisture content | 2-pentylfuran content (dry mass basis) | Breakdown viscosity / Maximum viscosity ([β]/[α]) |
| | | | mass % | mass % | mass % | mass ppb | |
| Test Example | 20 | Yellow pea | 42% | 90% | 2% | 14035 | 0.34 |
| Test Example | 21 | Yellow pea | 42% | 90% | 2% | 45821 | 0.34 |
| Comparative Example | 22 | Yellow pea | 50% | 13% | 5% | 51820 | 0.98 |
| Test Example | 23 | Yellow pea | 50% | 90% | 35% | 51 | 0.55 |
| Test Example | 24 | Yellow pea | 50% | 90% | 42% | 33 | 0.51 |
| Test Example | 25 | Lentil | 40% | 80% | 25% | 28 | 0.62 |
| Test Example | 26 | Black kidney bean | 35% | 70% | 11% | 57 | 0.74 |
| Test Example | 27 | White pea | 28% | 42% | 5% | 49 | 0.90 |
| Test Example | 28 | Chickpea | 32% | 51% | 6% | 5 | 0.45 |
| Test Example | 29 | Yellow pea | 52% | 90% | 9% | 51 | 0.69 |
| Test Example | 30 | Yellow pea | 52% | 90% | 9% | 51 | 0.69 |
| Test Example | 31 | Yellow pea | 52% | 90% | 9% | 51 | 0.69 |
| Test Example | 32 | Yellow pea | 52% | 90% | 9% | 51 | 0.69 |
| Test Example | 33 | Yellow pea | 52% | 90% | 9% | 51 | 0.69 |
| Test Example | 34 | Yellow pea | 52% | 90% | 9% | 51 | 0.69 |
| Test Example | 35 | Yellow pea | 52% | 90% | 9% | 51 | 0.69 |
| Test Example | 36 | Yellow pea | 52% | 90% | 9% | 51 | 0.69 |
| Test Example | 37 | Oat | 60% | 85% | 8% | 72 | 0.51 |
| Test Example | 38 | Kibi | 35% | 88% | 5% | 105 | 0.55 |
| Test Example | 39 | Yellow pea + Kibi | 40% | 87% | 5% | 287 | 0.61 |
| Test Example | 40 | Yellow pea | 42% | 90% | 2% | 1 | 0.34 |

[Table 3-1]

| Table 3 | | Heating of Precursor composition and Addition of its Extract to Precursor seasoning solution | | | | | Change in properties of Seasoning solution during Addition of Extract |
|---|---|---|---|---|---|---|---|
| | | Conditions for Heating and Extraction | | | | | |
| | | Method | Liquid/solid ratio during heating and extraction | Heating Temperature | Time | Increase in 2-pentylfuran content during aqueous heating (wet mass basis) | Increase rate of Viscosity |
| | | | | °C | min | mass ppb | % |
| Test Example | 1 | Simultaneous heating/addition mode | 3.9 | 100 | 7 | 11 | 120% |
| Test Example | 2 | Simultaneous heating/addition mode | 3.9 | 100 | 7 | 11 | 120% |
| Test Example | 3 | Simultaneous heating/addition mode | 3.9 | 100 | 7 | 11 | 120% |
| Test Example | 4 | Simultaneous heating/addition mode | 3.9 | 100 | 7 | 11 | 120% |
| Test Example | 5 | Simultaneous heating/addition mode | 3.9 | 100 | 7 | 9 | 120% |
| Comparative Example | 6 | Simultaneous heating/addition mode | 3.9 | 100 | 7 | 8 | 119% |
| Test Example | 7 | Individual heating/addition mode | 3.9 | 100 | 7 | 202 | 10% |
| Comparative Example | 8 | Simultaneous heating/addition mode | 7.8 | 100 | 7 | 120 | — |
| Test Example | 9 | Simultaneous heating/addition mode | 7.8 | 100 | 7 | 111 | 37% |
| Test Example | 10 | Simultaneous heating/addition mode | 7.8 | 100 | 7 | 71 | 42% |
| Test Example | 11 | Simultaneous heating/addition mode | 7.8 | 100 | 7 | 10 | 93% |
| Test Example | 12 | Simultaneous heating/addition mode | 7.8 | 100 | 7 | 8 | 212% |
| Test Example | 13 | Simultaneous heating/addition mode | 7.8 | 100 | 7 | 5 | 241% |
| Test Example | 14 | Simultaneous heating/addition mode | 7.8 | 100 | 7 | 2 | 281% |
| Comparative Example | 15 | Simultaneous heating/addition mode | 7.8 | 100 | 7 | 0 | 282% |
| Test Example | 16 | Simultaneous heating/addition mode | 1.9 | 100 | 7 | 10 | 774% |
| Test Example | 17 | Simultaneous heating/addition mode | 1.9 | 100 | 7 | 25 | 777% |
| Test Example | 18 | Simultaneous heating/addition mode | 1.9 | 100 | 7 | 89 | 790% |
| Test Example | 19 | Simultaneous heating/addition mode | 1.9 | 100 | 7 | 359 | 844% |

[Table 3-2]

| Table 3 | | Heating of Precursor composition and Addition of its Extract to Precursor seasoning solution | | | | | |
|---|---|---|---|---|---|---|---|
| | | Conditions for Heating and Extraction | | | | | Change in properties of Seasoning solution during Addition of Extract |
| | | Method | Liquid/solid ratio during heating and extraction | Heating Temperature | Time | Increase in 2-pentylfuran content during aqueous heating (wet mass basis) | Increase rate of Viscosity |
| | | | | °C | min | mass ppb | % |
| Test Example | 20 | Simultaneous heating/addition mode | 1.9 | 100 | 7 | 576 | 874% |
| Test Example | 21 | Simultaneous heating/addition mode | 1.9 | 100 | 7 | 984 | 969% |
| Comparative Example | 22 | Simultaneous heating/addition mode | 1.9 | 100 | 7 | 1105 | 773% |
| Test Example | 23 | Simultaneous heating/addition mode | 3.9 | 80 | 2 | 3 | 118% |
| Test Example | 24 | Simultaneous heating/addition mode | 3.9 | 60 | 1 | 1 | 118% |
| Test Example | 25 | Simultaneous heating/addition mode | 3.9 | 100 | 7 | 4 | 119% |
| Test Example | 26 | Simultaneous heating/addition mode | 3.9 | 100 | 7 | 7 | 119% |
| Test Example | 27 | Simultaneous heating/addition mode | 3.9 | 100 | 7 | 5 | 119% |
| Test Example | 28 | Simultaneous heating/addition mode | 3.9 | 100 | 7 | 14 | 121% |
| Test Example | 29 | Simultaneous heating/addition mode | 3.9 | 100 | 7 | 7 | 206% |
| Test Example | 30 | Simultaneous heating/addition mode | 3.9 | 100 | 7 | 2 | 87% |
| Test Example | 31 | Simultaneous heating/addition mode | 3.9 | 100 | 7 | 7 | 98% |
| Test Example | 32 | Simultaneous heating/addition mode | 3.9 | 100 | 7 | 9 | 114% |
| Test Example | 33 | Simultaneous heating/addition mode | 3.9 | 100 | 10 | 23 | 147% |
| Test Example | 34 | Simultaneous heating/addition mode | 3.9 | 100 | 10 | 28 | 127% |
| Test Example | 35 | Simultaneous heating/addition mode | 3.9 | 100 | 14 | 54 | 133% |
| Test Example | 36 | Simultaneous heating/addition mode | 10.0 | 100 | 20 | 101 | 21% |
| Test Example | 37 | Simultaneous heating/addition mode | 3.9 | 100 | 7 | 36 | 120% |
| Test Example | 38 | Simultaneous heating/addition mode | 3.9 | 100 | 7 | 25 | 120% |
| Test Example | 39 | Simultaneous heating/addition mode | 3.9 | 100 | 7 | 21 | 120% |
| Test Example | 40 | Simultaneous heating/addition mode | 1.9 | 100 | 7 | 10 | 774% |

[Table 4-1]

| Table 4 | | Final properties of Solid composition and Seasoning solution | | | |
|---|---|---|---|---|---|
| | | Final RVA viscosity of Seasoning solution (50°C) | 2-Pentylfuran peak area ratio of Seasoning solution to Solid composition | [Solid composition]/ [Seasoning solution] mass ratio (wet mass basis) | NaCl content in entire Food composition (wet mass basis) |
| | | cP | — | mass % | mass % |
| Test Example | 1 | 40 | 0.5 | 160% | 0.77% |
| Test Example | 2 | 40 | 0.5 | 170% | 0.08% |
| Test Example | 3 | 40 | 0.5 | 160% | 0.40% |
| Test Example | 4 | 40 | 0.5 | 135% | 1.19% |
| Test Example | 5 | 40 | 0.5 | 120% | 1.59% |
| Comparative Example | 6 | 40 | 0.4 | 110% | 2.07% |
| Test Example | 7 | 40 | 1.9 | 115% | 1.59% |
| Comparative Example | 8 | 4 | 1.4 | 74% | 0.10% |
| Test Example | 9 | 9 | 2.1 | 74% | 0.10% |
| Test Example | 10 | 17 | 1.1 | 74% | 0.10% |
| Test Example | 11 | 98 | 0.8 | 74% | 0.10% |
| Test Example | 12 | 210 | 0.2 | 74% | 0.10% |
| Test Example | 13 | 384 | 0.01 | 74% | 0.10% |
| Test Example | 14 | 487 | 0.003 | 74% | 0.10% |
| Comparative Example | 15 | 580 | ND (<0.001) | 74% | 0.10% |
| Test Example | 16 | 159 | 45 | 238% | 0.77% |
| Test Example | 17 | 159 | 5.1 | 238% | 0.77% |
| Test Example | 18 | 159 | 0.2 | 238% | 0.77% |
| Test Example | 19 | 159 | 0.01 | 238% | 0.77% |

[Table 4-2]

| Table 4 | | Final properties of Solid composition and Seasoning solution | | | |
|---|---|---|---|---|---|
| | | Final RVA viscosity of Seasoning solution (50°C) | 2-Pentylfuran peak area ratio of Seasoning solution to Solid composition | [Solid composition]/ [Seasoning solution] mass ratio (wet mass basis) | NaCl content in entire Food composition (wet mass basis) |
| | | cP | — | mass % | mass % |
| Test Example | 20 | 159 | 0.01 | 238% | 0.77% |
| Test Example | 21 | 159 | 0.001 | 238% | 0.77% |
| Comparative Example | 22 | 159 | ND (<0.001) | 179% | 0.77% |
| Test Example | 23 | 40 | 0.01 | 160% | 0.77% |
| Test Example | 24 | 40 | 0.002 | 160% | 0.77% |
| Test Example | 25 | 40 | 0.02 | 160% | 0.77% |
| Test Example | 26 | 40 | 0.15 | 160% | 0.77% |
| Test Example | 27 | 40 | 0.03 | 160% | 0.77% |
| Test Example | 28 | 40 | 21 | 160% | 0.77% |
| Test Example | 29 | 98 | 0.4 | 160% | 0.77% |
| Test Example | 30 | 11 | 0.03 | 160% | 0.77% |
| Test Example | 31 | 26 | 0.4 | 160% | 0.77% |
| Test Example | 32 | 46 | 0.6 | 160% | 0.77% |
| Test Example | 33 | 62 | 0.9 | 160% | 0.77% |
| Test Example | 34 | 37 | 1.1 | 160% | 0.77% |
| Test Example | 35 | 18 | 0.3 | 160% | 0.77% |
| Test Example | 36 | 32 | 0.001 | 11% | 0.77% |
| Test Example | 37 | 40 | 0.71 | 170% | 0.77% |
| Test Example | 38 | 40 | 1.0 | 170% | 0.77% |
| Test Example | 39 | 40 | 2.8 | 170% | 0.77% |
| Test Example | 40 | 159 | 87 | 238% | 0.77% |

[Table 5-1]

| Table 5 | | Sensory evaluation | | | | Comments |
|---|---|---|---|---|---|---|
| | | Good flavor of Seasoning solution | Deterioration odor peculiar to raw materials (pulse and/or cereal) in seasoning solution | Food texture of Solid composition | Overall evaluation | |
| Test Example | 1 | 5 | 5 | 5 | 5 | Hardly get soft when stored at room temperature |
| Test Example | 2 | 5 | 5 | 5 | 5 | |
| Test Example | 3 | 5 | 5 | 5 | 5 | Hardly get soft when stored at room temperature |
| Test Example | 4 | 5 | 5 | 5 | 4 | Hardly get soft when stored at room temperature |
| Test Example | 5 | 5 | 5 | 4 | 4 | Hardly get soft when stored at room temperature |
| Comparative Example | 6 | 4 | 5 | 2 | 1 | |
| Test Example | 7 | 5 | 4 | 4 | 4 | |
| Comparative Example | 8 | 5 | 2 | 5 | 2 | |
| Test Example | 9 | 5 | 4 | 5 | 4 | |
| Test Example | 10 | 5 | 5 | 5 | 5 | |
| Test Example | 11 | 5 | 5 | 5 | 5 | |
| Test Example | 12 | 5 | 5 | 5 | 5 | |
| Test Example | 13 | 5 | 5 | 5 | 5 | |
| Test Example | 14 | 4 | 5 | 5 | 4 | |
| Comparative Example | 15 | 2 | 5 | 4 | 2 | |
| Test Example | 16 | 5 | 5 | 5 | 4 | Hardly get soft when stored at room temperature |
| Test Example | 17 | 5 | 5 | 5 | 5 | Hardly get soft when stored at room temperature |
| Test Example | 18 | 5 | 5 | 5 | 5 | Hardly get soft when stored at room temperature |
| Test Example | 19 | 4 | 5 | 5 | 5 | Hardly get soft when stored at room temperature |

[Table 5-2]

| Table 5 | | Sensory evaluation | | | | |
|---|---|---|---|---|---|---|
| | | Good flavor of Seasoning solution | Deterioration odor peculiar to raw materials (pulse and/or cereal) in seasoning solution | Food texture of Solid composition | Overall evaluation | Comments |
| Test Example | 20 | 4 | 5 | 5 | 5 | Hardly get soft when stored at room temperature |
| Test Example | 21 | 4 | 4 | 5 | 3 | Hardly get soft when stored at room temperature |
| Comparative Example | 22 | 3 | 1 | 3 | 1 | |
| Test Example | 23 | 4 | 5 | 4 | 4 | |
| Test Example | 24 | 3 | 5 | 3 | 3 | |
| Test Example | 25 | 5 | 5 | 5 | 5 | Hardly get soft when stored at room temperature |
| Test Example | 26 | 5 | 5 | 5 | 5 | Hardly get soft when stored at room temperature |
| Test Example | 27 | 4 | 4 | 4 | 4 | |
| Test Example | 28 | 5 | 5 | 5 | 4 | Hardly get soft when stored at room temperature |
| Test Example | 29 | 5 | 5 | 5 | 5 | Hardly get soft when stored at room temperature |
| Test Example | 30 | 5 | 5 | 5 | 5 | Hardly get soft when stored at room temperature |
| Test Example | 31 | 5 | 5 | 5 | 5 | Hardly get soft when stored at room temperature |
| Test Example | 32 | 5 | 5 | 5 | 5 | Hardly get soft when stored at room temperature |
| Test Example | 33 | 5 | 5 | 5 | 5 | Hardly get soft when stored at room temperature |
| Test Example | 34 | 5 | 5 | 5 | 5 | Hardly get soft when stored at room temperature |
| Test Example | 35 | 5 | 5 | 5 | 5 | Hardly get soft when stored at room temperature |
| Test Example | 36 | 5 | 5 | 5 | 4 | Hardly get soft when stored at room temperature |
| Test Example | 37 | 5 | 5 | 5 | 5 | Hardly get soft when stored at room temperature |
| Test Example | 38 | 5 | 5 | 5 | 5 | Hardly get soft when stored at room temperature |
| Test Example | 39 | 5 | 5 | 5 | 5 | Hardly get soft when stored at room temperature |
| Test Example | 40 | 5 | 5 | 5 | 4 | Hardly get soft when stored at room temperature |

In addition, the food composition of Test Example 1, which contained the solid composition in the seasoning solution, was heated to reduce the seasoning solution to a certain percentage or less (5 mass% or less), and the resulting food composition was evaluated and confirmed that it exhibited a favorable quality.

In addition, the food composition of Test Example 1 concentrated to prepare a powdered precursor seasoning, which was then added to the post-heated aqueous solution of the precursor composition to prepare a seasoning solution in which the extract of the precursor composition was added to the straight-type liquid precursor seasoning solution, to thereby prepare a food composition reconstituted from the seasoning solution of Test Example 1. The resulting food composition was evaluated and confirmed that it exhibited similar effects to those of Test Example 1.

**INDUSTRIAL APPLICABILITY**

The present invention is widely applicable in the field of various food products, and its use is of great value.

**Claims**

1. A food composition comprising a solid composition containing a starch derived from pulse and/or cereal in a seasoning solution, the food composition satisfying the following requirements (a) to (c).

    (a) The sodium chloride content in the food composition in terms of wet mass basis is 1.2 mass % or less.
    (b) When the seasoning solution is subjected to measurement using a rapid visco-analyzer in accordance with [Procedure a], a final viscosity at the time the temperature is lowered to 50 °C is more than 5.0 cP but 550 cP or less.
    [Procedure a] A sample is measured for viscosity using a rapid visco-analyzer, while the sample is heated from 50 °C to 95 °C, maintained for 3 minutes, and then cooled to 50 °C.
    (c) When measured by dynamic headspace gas chromatography-mass spectrometry, a 2-pentylfuran peak area ratio of the seasoning solution to the solid composition is 100 or less, wherein
    the cereal is selected from awa (foxtail millet), hie (Japanese millet), kibi (common millet), sorghum, rye, oat, hatomugi (job's tear), corn, amaranthus, and quinoa.

2. A food composition according to claim 1,

    wherein the seasoning solution contains a 4-mesh-pass edible-plant processed product in an amount of 1 mass % or more in terms of wet mass basis,
    wherein the edible-plant processed product is in one or more forms selected from powder, paste, and aqueous extract,
    wherein the edible-plant processed product is a processed product of at least one species of edible plant selected from specific cereals, potatoes, beans, nuts, vegetables, fruits, and mushrooms, and/or
    wherein the edible-plant processed product is a processed product of at least one species of edible plant selected from garlic, onion, tomato, sesame, common mushroom, and sweet potato.

3. A food composition according to claim 1 or 2, which is substantially free of xanthane gum.

4. A food composition according to any one of claims 1 to 3, wherein the ratio of the solid composition to the seasoning solution is 10 mass % or more in terms of wet mass basis.

5. A food composition according to any one of claims 1 to 4,

    containing starch derived from matured pulse, and/or
    containing starch derived from one or more species of pulse selected from Pisum, Phaseolus, Cajanus, Vigna, Vicia, Cicer, and Lens species.

6. A food composition according to any one of claims 1 to 5, wherein a 2-pentylfuran content in the solid composition is 1 mass ppb or more but 50 mass ppm or less in terms of dry mass basis.

7. A food composition according to any one of claims 1 to 6, which is to be consumed after the seasoning solution is concentrated or evaporated by heating.

8. A production method for a food composition according to claim 1 comprising a solid composition containing a starch derived from pulse and/or cereal in a seasoning solution, comprising the steps of:

(i) preparing a precursor seasoning solution with a sodium chloride content of 0.1 mass % or more but 2.5 mass % or less in terms of wet mass basis;
(ii) preparing a precursor composition containing a starch derived from pulse and/or cereal and having a 2-pentylfuran content of 1 mass ppb or more but 50 mass ppm or less in terms of dry mass basis, the cereal being selected from awa (foxtail millet), hie (Japanese millet), kibi (common millet), sorghum, rye, oat, hatomugi (job's tear), corn, amaranthus, and quinoa;
(iii) heating the precursor composition from step (ii) in an aqueous medium to produce a solid composition;
(iv) adding an extract of the precursor composition from step (ii) to the precursor seasoning solution from step (i) to produce a seasoning solution of which, when measured using a rapid visco-analyzer in accordance with [Procedure a], a final viscosity at the time the temperature is lowered to 50 °C is more than 5.0 cP but 550 cP or less; and
(v) placing the solid composition from step (iii) in the seasoning solution from step (iv), wherein the sodium chloride content in the food composition comprising the solid composition in terms of wet mass basis is 1.2 mass % or less.

9. A production method according to claim 8, wherein when the precursor seasoning solution from step (i) is measured using a rapid visco-analyzer in accordance with [Procedure a], a parameter calculated by multiplying (the final viscosity at the time the temperature is decreased to 50 °C) by {(0.1 mass %)/(the mass % value of the sodium chloride content in the precursor seasoning solution in terms of wet mass basis)} is more than 0 cP but 450 cP or less.

10. A production method according to claim 8 or 9, wherein when the precursor composition from step (ii) is made into the form of crushed dry slurry and then subjected to measurement using a rapid visco-analyzer, a ratio of [value β] to [value α] as defined below is 0.95 or less.

[value α] A maximum viscosity (cP) reached during the course where the temperature is elevated from 50 °C to 95 °C.
[value β] A breakdown viscosity (cP),

wherein a degree of gelatinization of starch in the precursor composition from step (ii) is 35 mass % or more, and/or
wherein a dry mass basis moisture content in the precursor composition from step (ii) is 25 mass % or less.

11. A production method according to any one of claims 8 to 10, wherein the aqueous heating of the precursor composition at step (iii) and the addition of the extract to the precursor seasoning solution at step (iv) are carried out at the same time by using the precursor seasoning solution as the aqueous medium at step (iii),

wherein the addition of the extract to the precursor seasoning solution at step (iv) is carried out separately of the aqueous heating of the precursor composition at step (iii) by using a different aqueous medium from the precursor seasoning solution as the aqueous medium at step (iii),
wherein the aqueous heating of the precursor composition at step (iii) is carried out in such a manner that an increase in the 2-pentylfuran content in the aqueous medium before and after the heating in water is 1 mass ppb or more in terms of wet mass basis,
wherein the RVA final viscosity of the seasoning solution after the addition of the extract (50 °C) increases from the RVA final viscosity before the addition of the extract (50 °C) by 10% or more at step (iv), and/or
wherein the produced food composition is a food composition according to any one of claims 1 to 7.

12. Use of a precursor seasoning solution in a production method according to any one of claims 8 to 11, satisfying the requirements (a) and (b) below.

(a) A sodium chloride content in the precursor seasoning solution is 0.1 mass % or more in terms of wet mass basis.
(b) When the precursor seasoning solution is measured using a rapid visco-analyzer in accordance with [Procedure a], a parameter calculated by multiplying (the final viscosity at the time the temperature is decreased to 50 °C) by {(0.1 mass %)/(the mass % value of the sodium chloride content in the precursor seasoning solution in terms of wet mass basis)} is more than 0 cP but 450 cP or less.

13. Use of a precursor seasoning according to claim 12, which is selected from either (a) or (b) below.

(a) A concentrated liquid precursor seasoning, which yields a precursor seasoning solution according to claim 12 when diluted with a predetermined amount of aqueous medium.
(b) A solid precursor seasoning, which yields a precursor seasoning solution according to claim 12 when reconstituted with a predetermined amount of aqueous medium.

14. Use of a precursor composition in the production method according to any one of claims 8 to 11, comprising starch derived from pulse and/or cereal and having a 2-pentylfuran content of 1 mass ppb or more but 50 mass ppm or less in terms of dry mass basis.

15. Use of a product in preparing a food composition according to any one of claims 1 to 7 upon consumption, the product comprising: the precursor seasoning solution as specified in claim 12 and/or the precursor seasoning as specified in 13; and the precursor composition as specified in claim 14.

**Patentansprüche**

1. Lebensmittelzusammensetzung, umfassend eine feste Zusammensetzung, die eine aus Hülsenfrüchten und/oder Getreide gewonnene Stärke in einer Gewürzlösung enthält, wobei die Lebensmittelzusammensetzung die folgenden Anforderungen (a) bis (c) erfüllt

(a) Der Natriumchloridgehalt in der Lebensmittelzusammensetzung in Bezug auf Feuchtmassenbasis beträgt 1,2 Massen-% oder weniger
(b) Wenn die Gewürzlösung einer Messung unter Verwendung eines Schnell-Viskoanalysators gemäß [Verfahren a] unterzogen wird, beträgt eine Endviskosität zum Zeitpunkt der Absenkung der Temperatur auf 50 °C mehr als 5,0 cP, aber 550 cP oder weniger
[Verfahren a] Eine Probe wird unter Verwendung eines Schnell-Viskoanalysators auf Viskosität gemessen, während die Probe von 50 °C auf 95 °C erhitzt, für 3 Minuten gehalten und dann auf 50 °C abgekühlt wird
(c) Bei Messung durch dynamische Headspace-Gaschromatographie-Massenspektrometrie beträgt ein 2-Pentylfuran-Peakflächenverhältnis der Gewürzlösung zu der festen Zusammensetzung 100 oder weniger, wobei

das Getreide aus Awa (Fuchsschwanzhirse), Hie (japanischer Hirse), Kibi (gemeiner Hirse), Sorghum, Roggen, Hafer, Hatomugi (Hiobsträne), Mais, Amaranthus und Quinoa ausgewählt ist.

2. Lebensmittelzusammensetzung nach Anspruch 1,

wobei die Gewürzlösung ein essbares 4-Mesh-Pass-Pflanzenverarbeitungsprodukt in einer Menge von 1 Massen-% oder mehr in Bezug auf Feuchtmassenbasis enthält,
wobei das essbare Pflanzenverarbeitungsprodukt in einer oder mehreren Formen vorliegt, die aus Pulver, Paste und wässrigem Extrakt ausgewählt sind,
wobei das essbare Pflanzenverarbeitungsprodukt ein Verarbeitungsprodukt aus mindestens einer essbaren Pflanzenart ist, die aus spezifischen Getreiden, Kartoffeln, Bohnen, Nüssen, Gemüsen, Früchten und Pilzen ausgewählt ist, und/oder
wobei das essbare Pflanzenverarbeitungsprodukt ein verarbeitetes Produkt aus mindestens einer essbaren Pflanzenart ist, die aus Knoblauch, Zwiebel, Tomate, Sesam, gewöhnlichem Pilz und Süßkartoffel ausgewählt ist.

3. Lebensmittelzusammensetzung nach Anspruch 1 oder 2, die im Wesentlichen frei von Xanthangummi ist.

4. Nahrungsmittelzusammensetzung nach einem der Ansprüche 1 bis 3, wobei das Verhältnis der festen Zusammensetzung zu der Gewürzlösung 10 Massen-% oder mehr in Bezug auf Feuchtmassenbasis beträgt.

5. Lebensmittelzusammensetzung nach einem der Ansprüche 1 bis 4, enthaltend Stärke, die aus gereifter Hülsenfrucht gewonnen wird, und/oder enthaltend Stärke, die aus einer oder mehreren Hülsenfruchtarten gewonnen wird, die aus den Spezies Pisum, Phaseolus, Cajanus, Vigna, Vicia, Cicer und Linse ausgewählt sind.

6. Lebensmittelzusammensetzung nach einem der Ansprüche 1 bis 5, wobei ein 2-Pentylfuran-Gehalt in der festen Zusammensetzung 1 Massen-ppb oder mehr, aber 50 Massen-ppm oder weniger bezogen auf Trockenmassenbasis beträgt.

7. Lebensmittelzusammensetzung nach einem der Ansprüche 1 bis 6, die zu verzehren ist, nachdem die Gewürzlösung konzentriert oder durch Erhitzen verdampft wurde.

8. Herstellungsverfahren für eine Lebensmittelzusammensetzung nach Anspruch 1, umfassend eine feste Zusammensetzung, die eine aus Hülsenfrüchten und/oder Getreide gewonnene Stärke in einer Gewürzlösung enthält, umfassend die folgenden Schritte:

   (i) Herstellen einer Vorläufergewürzlösung mit einem Natriumchloridgehalt von 0,1 Massen-% oder mehr, aber 2,5 Massen-% oder weniger in Bezug auf Feuchtmassenbasis;
   (ii) Herstellen einer Vorläuferzusammensetzung, die eine aus Hülsenfrüchten und/oder Getreide gewonnene Stärke enthält und einen 2-Pentylfuran-Gehalt von 1 Massen-ppb oder mehr, aber 50 Massen-ppm oder weniger in Bezug auf die Trockenmasse aufweist, wobei das Getreide aus Awa (Fuchsschwanzhirse), Hie (japanischer Hirse), Kibi (gemeiner Hirse), Sorghum, Roggen, Hafer, Hatomugi (Hiobsträne), Mais, Amaranthus und Quinoa ausgewählt ist;
   (iii) Erhitzen der Vorläuferzusammensetzung aus Schritt (ii) in einem wässrigen Medium, um eine feste Zusammensetzung herzustellen;
   (iv) Zugeben eines Extrakts der Vorläuferzusammensetzung aus Schritt (ii) zu der Vorläufergewürzlösung aus Schritt (i), um eine Gewürzlösung herzustellen, von der, wenn unter Verwendung eines Schnell-Viskoanalysators gemäß [Verfahren a] gemessen, eine Endviskosität zum Zeitpunkt der Absenkung der Temperatur auf 50 °C mehr als 5,0 cP, aber 550 cP oder weniger beträgt; und
   (v) Einbringen der festen Zusammensetzung aus Schritt (iii) in die Gewürzlösung aus Schritt (iv), wobei der Natriumchloridgehalt in der Lebensmittelzusammensetzung, die die feste Zusammensetzung umfasst, in Bezug auf Feuchtmassenbasis 1,2 Massen-% oder weniger beträgt.

9. Herstellungsverfahren nach Anspruch 8, wobei, wenn die Vorläufergewürzlösung aus Schritt (i) unter Verwendung eines Schnell-Viskoanalysators gemäß [Verfahren a] gemessen wird, ein Parameter, der durch Multiplizieren (der Endviskosität zum Zeitpunkt der Verringerung der Temperatur auf 50 °C) mit {(0,1 Massen-%)/(den Massen-%-Wert des Natriumchloridgehalts in der Vorläufergewürzlösung in Bezug auf Feuchtmassenbasis)} berechnet wird, mehr als 0 cP, aber 450 cP oder weniger beträgt.

10. Herstellungsverfahren nach Anspruch 8 oder 9, wobei, wenn die Vorläuferzusammensetzung aus Schritt (ii) in die Form einer zerkleinerten trockenen Aufschlämmung gebracht und dann einer Messung unter Verwendung eines Schnell-Viskosanalysators unterzogen wird, ein Verhältnis von [Wert $\beta$] zu [Wert $\alpha$], wie unten definiert, 0,95 oder weniger beträgt

   [Wert $\alpha$] Eine maximale Viskosität (cP), die während des Verlaufs, in dem die Temperatur von 50 °C auf 95 °C erhöht wird, erreicht wird
   [Wert $\beta$] Ein Viskositätsverlust (cP),
   wobei ein Verkleisterungsgrad der Stärke in der Vorläuferzusammensetzung aus Schritt (ii) 35 Massen-% oder mehr beträgt, und/oder
   wobei ein Trockenmassenbasis-Feuchtigkeitsgehalt in der Vorläuferzusammensetzung aus Schritt (ii) 25 Massen-% oder weniger beträgt.

11. Herstellungsverfahren nach einem der Ansprüche 8 bis 10, wobei das wässrige Erhitzen der Vorläuferzusammensetzung in Schritt (iii) und die Zugabe des Extrakts zu der Vorläufergewürzlösung in Schritt (iv) gleichzeitig durch Verwendung der Vorläufergewürzlösung als wässriges Medium in Schritt (iii) durchgeführt werden,

   wobei die Zugabe des Extrakts zu der Vorläufergewürzlösung in Schritt (iv) getrennt von dem wässrigen Erhitzen der Vorläuferzusammensetzung in Schritt (iii) durch Verwendung eines anderen wässrigen Mediums als der Vorläufergewürzlösung als dem wässrigen Medium in Schritt (iii) durchgeführt wird,
   wobei das wässrige Erhitzen der Vorläuferzusammensetzung in Schritt (iii) derart durchgeführt wird, dass eine Erhöhung des 2-Pentylfuran-Gehalts in dem wässrigen Medium vor und nach dem Erhitzen in Wasser 1 Massen-ppb oder mehr in Bezug auf die Feuchtmassenbasis beträgt, wobei die RVA-Endviskosität der Gewürzlösung nach der Zugabe des Extrakts (50 °C) von der RVA-Endviskosität vor der Zugabe des Extrakts (50 °C) um 10 % oder mehr in Schritt (iv) zunimmt, und/oder
wobei die hergestellte Lebensmittelzusammensetzung eine Lebensmittelzusammensetzung nach einem der Ansprüche 1 bis 7 ist.

12. Verwendung einer Vorläufergewürzlösung in einem Herstellungsverfahren nach einem der Ansprüche 8 bis 11, die die nachfolgenden Anforderungen (a) und (b) erfüllt

 (a) Ein Natriumchloridgehalt in der Vorläufergewürzlösung beträgt 0,1 Massen-% oder mehr in Bezug auf Feuchtmassenbasis
 (b) Wenn die Vorläufergewürzlösung unter Verwendung eines Schnell-Viskoanalysators gemäß [Verfahren a] gemessen wird, beträgt ein Parameter, der durch Multiplizieren (der Endviskosität zum Zeitpunkt der Verringerung der Temperatur auf 50 °C) mit {(0,1 Massen-%)/(den Massen-%-Wert des Natriumchloridgehalts in der Vorläufergewürzlösung in Bezug auf Feuchtmassenbasis)} berechnet wird, mehr als 0 cP, aber 450 cP oder weniger.

13. Verwendung eines Vorläufergewürzes nach Anspruch 12, das entweder aus (a) oder (b) unten ausgewählt ist

 (a) Ein konzentriertes flüssiges Vorläufergewürz, das eine Vorläufergewürzlösung nach Anspruch 12 ergibt, wenn mit einer vorbestimmten Menge eines wässrigen Mediums verdünnt
 (b) Ein festes Vorläufergewürz, das eine Vorläufergewürzlösung nach Anspruch 12 ergibt, wenn mit einer vorbestimmten Menge eines wässrigen Mediums rekonstituiert.

14. Verwendung einer Vorläuferzusammensetzung in dem Herstellungsverfahren nach einem der Ansprüche 8 bis 11, die aus Hülsenfrüchten und/oder Getreide gewonnene Stärke umfasst und einen 2-Pentylfuran-Gehalt von 1 Massen-ppb oder mehr, aber 50 Massen-ppm oder weniger in Bezug auf Trockenmassenbasis aufweist.

15. Verwendung eines Produkts beim Herstellen einer Lebensmittelzusammensetzung nach einem der Ansprüche 1 bis 7, wobei das Produkt beim Verzehr umfasst: die Vorläufergewürzlösung nach Anspruch 12 und/oder das Vorläufergewürz nach Anspruch 13; und die Vorläuferzusammensetzung nach Anspruch 14.

## Revendications

1. Composition alimentaire comprenant une composition solide contenant un amidon dérivé de légumineuses et/ou de céréales dans une solution d'assaisonnement, la composition alimentaire satisfaisant aux exigences (a) à (c) suivantes

 (a) La teneur en chlorure de sodium dans la composition alimentaire en termes de masse humide est de 1,2 % en masse ou moins
 (b) Lorsque la solution d'assaisonnement est soumise à une mesure à l'aide d'un visco-analyseur rapide conformément à la [Procédure a], la viscosité finale au moment où la température est abaissée à 50 °C est de 5,0 cP ou plus mais de 550 cP ou moins
 [Procédure a] Un échantillon est mesuré pour la viscosité à l'aide d'un visco-analyseur rapide, tandis que l'échantillon est chauffé de 50 °C à 95° C, maintenu pendant 3 minutes, puis refroidi à 50 °C
 (c) Lorsqu'il est mesuré par chromatographie en phase gazeuse par spectrométrie de masse à espace de tête dynamique, le rapport entre la surface de pic de 2-pentylfurane de la solution d'assaisonnement et la composition solide est de 100 ou moins, dans laquelle

la céréale est sélectionnée parmi le awa (millet des oiseaux), le hie (millet du Japon), le kibi (millet commun), le sorgho, le seigle, l'avoine, le hatomugi (grain de Job), le maïs, l'amarante et le quinoa.

2. Composition alimentaire selon la revendication 1,

dans laquelle la solution d'assaisonnement contient un produit transformé de plante comestible de 4 mesh en une quantité de 1 % en masse ou plus en termes de masse humide,
dans laquelle le produit transformé de plante comestible est sous une ou plusieurs formes choisies parmi une poudre, une pâte et un extrait aqueux,
dans laquelle le produit transformé de plante comestible est un produit transformé d'au moins une espèce de plante comestible choisie parmi des céréales, des pommes de terre, des haricots, des noix, des légumes, des fruits et des champignons spécifiques, et/ou

dans laquelle le produit transformé de plante comestible est un produit transformé d'au moins une espèce de plante comestible choisie parmi l'ail, l'oignon, la tomate, le sésame, le champignon commun et la patate douce.

3.  Composition alimentaire selon la revendication 1 ou 2, qui est sensiblement exempte de gomme xanthane.

4.  Composition alimentaire selon l'une quelconque des revendications 1 à 3, dans laquelle le rapport de la composition solide à la solution d'assaisonnement est de 10 % en masse ou plus en termes masse humide.

5.  Composition alimentaire selon l'une quelconque des revendications 1 à 4, contenant de l'amidon dérivé de légumineuses à grain matures, et/ou contenant de l'amidon dérivé d'une ou plusieurs espèces de légumineuses à grain choisies parmi les espèces Pisum, Phaseolus, Cajanus, Vigna, Vicia, Cicer et Lens.

6.  Composition alimentaire selon l'une quelconque des revendications 1 à 5, dans laquelle la teneur en 2-pentylfurane dans la composition solide est de 1 ppb en masse ou plus mais de 50 ppm en masse ou moins en termes de masse sèche.

7.  Composition alimentaire selon l'une quelconque des revendications 1 à 6, qui est destinée à être consommée après concentration ou évaporation de la solution d'assaisonnement par chauffage.

8.  Procédé de production d'une composition alimentaire selon la revendication 1, comprenant une composition solide contenant un amidon dérivé de légumineuses et/ou de céréales dans une solution d'assaisonnement, comprenant les étapes suivantes :

   (i) la préparation d'une solution d'assaisonnement précurseuse avec une teneur en chlorure de sodium de 0,1 % en masse ou plus mais de 2,5 % en masse ou moins en termes de masse humide ;
   (ii) la préparation d'une composition précurseure contenant un amidon dérivé de légumineuses et/ou de céréales et présentant une teneur en 2-pentylfurane de 1 ppb en masse ou plus mais de 50 ppm en masse ou moins en termes de masse sèche, la céréale étant sélectionnée parmi le awa (millet des oiseaux), le hie (millet du Japon), le kibi (millet commun), le sorgho, le seigle, l'avoine, le hatomugi (grain de Job), le maïs, l'amarante et le quinoa ;
   (iii) le chauffage de la composition précurseure issue de l'étape (ii) dans un milieu aqueux pour produire une composition solide ;
   (iv) l'ajout d'un extrait de la composition précurseure issue de l'étape (ii) à la solution d'assaisonnement précurseure issue de l'étape (i) pour produire une solution d'assaisonnement dont, lorsqu'elle est mesurée à l'aide d'un visco-analyseur rapide conformément à la [Procédure a], la viscosité finale au moment où la température est abaissée à 50 °C est de 5,0 cP ou plus mais de 550 cP ou moins ; et
   (v) le placement de la composition solide issue de l'étape (iii) dans la solution d'assaisonnement issue de l'étape (iv), dans lequel la teneur en chlorure de sodium dans la composition alimentaire comprenant la composition solide en termes de masse humide est de 1,2 % en masse ou moins.

9.  Procédé de production selon la revendication 8, dans lequel lorsque la solution d'assaisonnement précurseure de l'étape (i) est mesurée à l'aide d'un visco-analyseur rapide conformément à la [Procédure a], un paramètre calculé en multipliant (la viscosité finale au moment où la température est abaissée à 50 °C) par {(0,1 % en masse)/(la valeur en % en masse de la teneur en chlorure de sodium dans la solution d'assaisonnement précurseure en termes de masse humide)} est de plus de 0 cP mais de 450 cP ou moins.

10.  Procédé de production selon la revendication 8 ou 9, dans lequel lorsque la composition précurseure issue de l'étape (ii) est mise sous forme de suspension sèche broyée puis soumise à une mesure à l'aide d'un visco-analyseur rapide, un rapport de [valeur β] à [valeur α] tel que défini ci-dessous est de 0,95 ou moins

   [valeur α] Une viscosité maximale (cP) atteinte pendant le cours où la température est élevée de 50 °C à 95 °C
   [valeur β] Une viscosité de rupture (cP),
   dans lequel un degré de gélatinisation de l'amidon dans la composition précurseure issue de l'étape (ii) est de 35 % en masse ou plus, et/ou
   dans lequel une teneur en humidité de base masse sèche dans la composition précurseure de l'étape (ii) est de 25 % en masse ou moins.

**11.** Procédé de production selon l'une quelconque des revendications 8 à 10, dans lequel le chauffage aqueux de la composition précurseure à l'étape (iii) et l'ajout de l'extrait à la solution d'assaisonnement précurseure à l'étape (iv) sont effectués en même temps en utilisant la solution d'assaisonnement précurseure comme milieu aqueux à l'étape (iii),

dans lequel l'ajout de l'extrait à la solution d'assaisonnement précurseure à l'étape (iv) est effectué séparément du chauffage aqueux de la composition précurseure à l'étape (iii) en utilisant un milieu aqueux différent de la solution d'assaisonnement précurseure comme milieu aqueux à l'étape (iii),

dans lequel le chauffage aqueux de la composition précurseure à l'étape (iii) est effectué de sorte qu'une augmentation de la teneur en 2-pentylfurane dans le milieu aqueux avant et après le chauffage dans l'eau est de 1 ppb en masse ou plus en termes de masse humide, dans lequel la viscosité finale RVA de la solution d'assaisonnement après l'ajout de l'extrait (50 °C) augmente à partir de la viscosité finale RVA avant l'ajout de l'extrait (50 °C) de 10 % ou plus à l'étape (iv), et/ou

dans lequel la composition alimentaire produite est une composition alimentaire selon l'une quelconque des revendications 1 à 7.

**12.** Utilisation d'une solution d'assaisonnement précurseure dans un procédé de production selon l'une quelconque des revendications 8 à 11, satisfaisant aux exigences (a) et (b) ci-dessous

(a) Une teneur en chlorure de sodium dans la solution d'assaisonnement précurseure est de 0,1 % en masse ou plus en termes de masse humide

(b) Lorsque la solution d'assaisonnement précurseure est mesurée à l'aide d'un visco-analyseur rapide conformément à la [Procédure a], un paramètre calculé en multipliant (la viscosité finale au moment où la température est abaissée à 50 °C) par {(0,1 % en masse)/(la valeur en % en masse de la teneur en chlorure de sodium dans la solution d'assaisonnement précurseure en termes de masse humide)} est de plus de 0 cP mais de 450 cP ou moins.

**13.** Utilisation d'un assaisonnement précurseur selon la revendication 12, qui est choisi parmi (a) ou (b) ci-dessous

(a) Un assaisonnement précurseur liquide concentré, qui donne une solution d'assaisonnement précurseure selon la revendication 12 lorsqu'elle est diluée avec une quantité prédéterminée de milieu aqueux

(b) Un assaisonnement précurseur solide, qui donne une solution d'assaisonnement précurseure selon la revendication 12 lorsqu'elle est reconstituée avec une quantité prédéterminée de milieu aqueux.

**14.** Utilisation d'une composition précurseure dans le procédé de production selon l'une quelconque des revendications 8 à 11, comprenant de l'amidon dérivé de légumineuses et/ou de céréales et présentant une teneur en 2-pentylfurane de 1 ppb en masse ou plus mais de 50 ppm en masse ou moins en termes de masse sèche.

**15.** Utilisation d'un produit dans la préparation d'une composition alimentaire selon l'une quelconque des revendications 1 à 7 lors de la consommation, le produit comprenant : la solution d'assaisonnement précurseure telle que spécifiée dans la revendication 12 et/ou l'assaisonnement précurseur tel que spécifié dans la revendication 13 ; et la composition précurseure telle que spécifiée dans la revendication 14.

# Figure 1

### (A) Simultaneous heating/addition mode

### (B) Individual heating/addition mode

(A) Simultaneous heating/addition mode

Precursor composition → Precursor seasoning solution A

(iii) Aqueous heating of Precursor composition in Precursor seasoning solution

(iv) Addition of Extract from Precursor composition to Precursor seasoning solution

(v) Incorporation of Solid composition into Seasoning solution

Food composition: Solid composition | Seasoning solution

(B) Individual heating/addition mode

Precursor composition

Precursor seasoning solution B

(iii) Aqueous heating of Precursor composition in Aqueous medium

Extract of Precursor composition (Post-heated aqueous solution)

(iv) Addition of extract from Precursor composition to Precursor seasoning solution

(v) Incorporation of Solid composition into Seasoning solution

Solid composition | Seasoning solution

Food composition: Solid composition | Seasoning solution

EP 4 338 599 B1

# Figure 2

```
┌─────────────────────────────┐          ┌──────────────────────────────┐
│ (1) Liquid precursor        │          │ (2) Solid precursor          │
│     seasoning               │          │     seasoning                │
└─────────────────────────────┘          └──────────────────────────────┘
           │                                           │
     ┌─────┴─────┐                                     │
     ▼           ▼                                     ▼
┌──────────┐ ┌──────────────┐
│(1-1)     │ │(1-2)         │
│Straight- │ │Concentrated- │
│type      │ │type          │
│(Precursor│ └──────────────┘
│seasoning │        │
│solution )│        │
└──────────┘        │
     │              ▼
     ▼        Diluted with               Reconstituted with
Used as is    Dilution medium            Reconstitution medium
              to Predefined              with Predefined Volume
              Dilution ratio
     │              │                                  │
     └──────────────┴──────────────────────────────────┘
                             │
                             ▼
              ┌────────────────────────────────┐
              │ Precursor seasoning solution   │
              └────────────────────────────────┘
```

EP 4 338 599 B1

**EP 4 338 599 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020166713 A
- JP 2017093329 A
- US 20180125108 A1
- JP 2016026482 A
- JP 2005261216 A

**Non-patent literature cited in the description**

- Japanese Standard Tables of Food Composition. 2015
- *Japanese Standard Tables of Food Composition*, 2015
- Japan Standard Tables for Food Composition. 2015
- About Food Labeling Standards. *Consumer Food Indication*, 30 March 2015
- Pocket Book of Food Additives Labeling. 2011
- *CHEMICAL ABSTRACTS*, 3777-69-3